(19) Europäisches Patentamt
European Patent Office
Office européen des brevets

(11) **EP 3 812 181 B1**

(12) **EUROPEAN PATENT SPECIFICATION**

(45) Date of publication and mention
of the grant of the patent:
**05.11.2025 Bulletin 2025/45**

(21) Application number: **20191804.2**

(22) Date of filing: **19.08.2020**

(51) International Patent Classification (IPC):
**B60D 1/24** *(2006.01)*     **B60D 1/62** *(2006.01)*
**G01L 1/12** *(2006.01)*

(52) Cooperative Patent Classification (CPC):
**B60D 1/248; B60D 1/62; G01L 1/125; G01L 5/0004**

(54) **TOWING SYSTEMS AND METHODS USING MAGNETIC FIELD SENSING**

SCHLEPPSYSTEME UND -VERFAHREN MIT VERWENDUNG VON MAGNETFELDMESSUNG

SYSTÈMES ET PROCÉDÉS DE REMORQUAGE UTILISANT UNE DÉTECTION DE CHAMP MAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2019   US 201962888819 P**
**25.09.2019   US 201916582093**

(43) Date of publication of application:
**28.04.2021   Bulletin 2021/17**

(60) Divisional application:
**21155808.5 / 3 854 613**

(73) Proprietor: **Methode Electronics, Inc.**
**Chicago, IL 60706 (US)**

(72) Inventors:
• **Reed, Chad**
**Ypsilanti, MI Michigan 48197 (US)**
• **Beck, Julius**
**85540 Haar (DE)**
• **Burghardt, Florian**
**85540 Haar (DE)**
• **Gießibl, Johannes**
**85540 Haar (DE)**
• **Liston, Chris**
**Wheaton, IL Illinois 60187 (US)**

(74) Representative: **LS-MP von Puttkamer**
**Berngruber Loth Spuhler**
**Partnerschaft von Patent- und Rechtsanwälten mbB**
**ALPHA-Haus**
**Garmischer Strasse 35**
**81373 München (DE)**

(56) References cited:
**EP-A1- 3 379 222      US-A1- 2006 220 285**
**US-A1- 2010 114 437      US-A1- 2014 360 282**

# EP 3 812 181 B1

**Description**

CROSS-REFERENCE TO RELATED APPLICATIONS

This application is based on and claims the benefit of the filing date and disclosure of US Provisional Application No. 62/888,819, filed August 19, 2019, entitled "Weight Distribution Towing Systems and Methods Using Magnetic Field Sensing" and US Patent Application No. 16/582,093, filed on September 25, 2019, entitled "Towing Systems and Methods Using Magnetic Field Sensing".

BACKGROUND OF THE INVENTION

Field of Invention

The invention is related in general to systems and methods involving the use of magnetic field sensors and magneto-elastic devices for measuring a load and outputting a signal indicative of a load force dynamically applied to an object. The invention is also related to use of the force-sensing apparatus in connection with a vehicle-trailer hitch or tow coupling. The invention is also related to methods for determining a direction and magnitude of the force vector on the hitch or a particular hitch component.

Description of Related Art

Tow coupling devices are popular accessories for owners of passenger automobiles (cars and trucks) who tow trailers. These coupling devices may be purchased and installed in a new automobile, or purchased in the aftermarket and installed by owners after acquiring an automobile. The automotive and tow hitch industries classify trailer hitches according to various criteria. Hitches may be classified in one of Class 1-5. Each class of hitch includes associated real-world standards such as minimum force load requirements, including at least longitudinal tension, longitudinal compression, transverse thrust, vertical tension, and vertical compression.

In many trailer hitch use cases, strain gauges are used for sensing a force load on a hitch. Strain gauges, however, often require a structural weakening of the load-conducting elements. There is a need for load measurements without compromising the structural stability of the measuring device. This is especially true for tow couplings.

Furthermore, there is a strong demand for smart tow couplings, e.g., for systems providing at least the following: a load weight gauge (measuring the tongue load of a tow coupling), a tow load weight shift alert, an unsafe trailer load distribution alert, a vehicle limit notification, an automated trailer brake control (closed loop), a lowlflat trailer tire notification, a check trailer brake notification, a closed loop braking control, a vehicle shift control, an engine control, and a stability control. These and other functions require the measurement of tow loads and/or tongue loads at the tow coupling.

Prior art load measurement devices for tow couplings have significant shortcomings, e.g. the complexity of the measurement and control devices, and the costs of the sensor assembly. Thus, there is a need for a tow coupling apparatus that may be purchased and installed in an automobile that provides the above functions without weakening over time.

In certain towing situations, when towing a trailer with a standard, rear-mounted hitch, a trailer's tongue weight is transferred to the rear axle of the tow vehicle. This can weigh down the vehicle's back end and cause the front end to point upward, especially on vehicles that have a suspension designed for driving comfort. When this happens, the vehicle's rear axle will bear the weight of not only the trailer, but much of the tow vehicle's weight as well. What is more, the lessened weight on the vehicle's front axle can diminish the ability to steer, maintain traction, and use available power for stopping. Moreover, the vehicle may experience increased trailer sway, and the driver's view of the road ahead may be limited due to the upward angle of the vehicle.

One solution to these problems is the use of a weight distribution tow hitch system, which uses spring bars that apply leverage to both sides of the tow hitch system, thereby transferring the load at the rear of the vehicle to all axles of the tow vehicle and trailer. This even distribution of weight results in a smoother, more level ride, as well as the improved ability to tow at the maximum capacity of the tow hitch. Prior art systems make use of magneto-elastic sensors to gain information about tow hitch loads. The US 2014/0360282 A1 discloses a tow coupling incorporating a magneto-elastic sensor, wherein the sensor comprises at least one magneto-elastically active region and a magnetic field sensor means with at least one direction sensitive magnetic field sensor configured for determination of a shear stress and/or of a tensile or compressive stress.

The EP 3 379 222 A1 discloses a sensor assembly for measuring tow coupling loads, comprising a first portion, a second portion, a first pin and a second pin, coupling the first portion to the second portion, wherein at least one out of the first and the second pin comprises a magneto-elastic sensor.

The US 2006/0220285 A1 discloses a bushing assembly adapted for application in vehicle suspension systems, comprising an outer bushing member, an inner bushing member arranged concentrically within the outer member and a sensor operative to produce an output signal indicative of the relative angular position of the inner and the outer bushing members.

What is needed, however, is a way to better monitor the distributed forces acting on a towing vehicle, in particular on the towing vehicle suspension and on the tow hitch, the trailer, and the weight distribution tow hitch system and its components using load sensing pins as described below.

BRIEF SUMMARY OF THE INVENTION

In one aspect of the invention, an assembly as defined in claim 1 is provided.

An improved magneto-elastic based sensor assembly may be provided to effectively measure stress and strain in systems having a portion, which is subject to a mechanic load. The invention also provides a method of determining a direction of a load vector acting on a magneto-elastic based sensor assembly. A tow hitch assembly includes a hitch tube, a first part, a second part, a receiver tube, and first and second load sensor pins 8, 9 connecting the first and second parts. The hitch tube is typically a longitudinally extending, round, oval, square, or other shape member for attaching to a vehicle, typically near the rear bumper of a passenger vehicle. Bolts or other fastening means may be used to attach the hitch tube to the vehicle.

The first part of the tow hitch assembly may be a bracket with two side flange portions having through-holes: first and second through-holes on one flange, and third and fourth through-holes on the other, such that the first and third through- holes are axially aligned with each other and the second and fourth through-holes are also axially aligned with each other.

The second part may include a receiver tube connected to a longitudinally extending middle adapter member that fits between the two flanges of the bracket when the hitch components are in an assembled state. An adapter may be configured to include a front portion that would be positioned in front of the hitch tube, and a back portion that would be positioned in back of the hitch tube, the front and the back portions each having a through-hole axially aligned with the through-holes on the bracket when the first and second parts are in an assembled state. In another aspect, the entirety of the adapter could be in front of the hitch tube, or behind the hitch tube, or in some other configuration.

In another aspect, the first and second load sensor pins 8, 9 may be configured to sense forces applied to the receiver tube and other components of the hitch assembly. One of the two load sensor pins 8, 9 extends through the first and third through-holes of the bracket and one of the through-holes of the adapter, and the other pin extends through the second and fourth through-holes of the bracket and a different through-hole of the adapter to secure the first and second parts together. There is a gap of about 0.5 mm between the top of the middle adapter member and the base portion of the bracket, and the thickness of the base portion of the bracket in the configuration shown is 8 mm. Alternatively, the thickness of the base portion of the bracket is about 10 mm, and the gap is about 5 mm between the top of the middle adapter member and the base portion of the bracket. Press-fit bushings could be used, having a pre-determined radial thickness inserted into the axially-aligned through-holes of the bracket.

In another aspect, during use of the assembled tow hitch, a force is applied to the proximate end of a drawbar and transmitted to the front pin. The output signals from magnetic field sensors associated with the front pin may be received in a suitable software algorithm, for example one that is embedded on a circuit board having a suitable processor located inside the front pin. The receive output signals from the sensors, which may be indicative of the magnetic field/flux exhibited by the front pin magneto-elastic active regions, may be used to determine the forces.

In US9347845, owned by Methode Electronics, which is incorporated herein by reference in its entirety, a magneto-elastic sensor having a longitudinally extending shaft like member with at least one magneto-elastically active region and a magnetic field sensor device is described. The longitudinally extending shaft like member is subject to a load introducing mechanic stress in the member. The at least one magneto-elastically active region is directly or indirectly attached to the shaft like member. However, the at least one magneto-elastically active region may also form a part of the member. The magneto-elastically active region is arranged in such a manner that the mechanic stress is transmitted to the active region. The region includes at least one magnetically polarized region such that the magnetic polarization becomes increasingly helically shaped as the applied stress increases. The magnetic field sensor means or device is arranged proximate the at least one magneto-elastically active region. The magnetic field sensor means/device is further configured for outputting a signal corresponding to a stress-induced magnetic flux, which emanates from the magnetically polarized region. The sensor may be a magnetic sensor device with at least one direction sensitive magnetic field sensor. This direction sensitive magnetic field sensor is configured for determination of a shear stress and/or of a tensile or compressive stress. In particular, the direction sensitive magnetic field sensor is arranged to have a predetermined and fixed spatial coordination with the member.

Another object of the invention described herein, which is also described in EP17162429.9, owned by Methode Electronics, is a sensor assembly for force sensing, the force sensor being associated with a vehicle hitch assembly. The improved magneto-elastic based sensor assembly is useful for effectively measuring stress and strain in systems having a portion, which is subject to a mechanic load. In one aspect, the invention provides a method of determining a direction of a load vector acting on a magneto-elastic based sensor assembly.

A sensor assembly for force sensing can include a first portion having a first and a second through-hole. The sensor assembly can further include a second portion having a third and a fourth through- hole. The third and the fourth through-hole can be positioned in correspondence to the first and the second through-holes.

The sensor assembly can further include a first pin and a second pin. The first pin can be arranged such that it extends through the first and the third through-hole and the second pin can be arranged such that it extends through the second and the fourth through-hole, so as to couple the first portion to the second portion. At least one out of the first and the second pin can include at least one magneto- elastically active region that may directly or indirectly be attached to or form a part of the pin in such a manner that mechanic stress on the pin is transmitted to the magneto-elastically active region. The magneto-elastically active region can include at least one magnetically polarized region such that a polarization of the magnetically polarized region may become increasingly helically shaped as the applied stress increases.

The sensor assembly can further include a magnetic field sensor means or device which may be arranged proximate the at least one magneto-elastically active region. The magnetic field sensor means/device may be configured to output a signal corresponding to a stress-induced magnetic flux which may emanate from the magnetically polarized region. The magnetic field sensor means/device may comprise at least one direction sensitive magnetic field sensor which may be configured to determine a shear force in at least one direction. The at least one direction sensitive magnetic field sensor may in particular be arranged to have a predetermined and fixed spatial coordination with the pin, wherein this pin may at least be partially hollow. The at least one direction sensitive magnetic field sensor may be arranged inside an interior of this pin.

By means of the sensor assembly, stress which is applied to a pin caused by a mechanic load can effectively be measured. The sensor assembly overcomes the drawback of the prior art solutions. In particular, the sensor assembly does not tend to drift with respect to the measurement values and is less error-prone.

At least one out of the first and the second pin of the sensor assembly can comprise at least one X-direction sensitive magnetic field sensor, which can be configured to detect a force component $Fx1$ in a longitudinal direction X, and/or at least one Z-direction sensitive magnetic field sensor, which can be configured to detect a force component $Fz1$ in a vertical direction Z. The longitudinal direction X can be defined by a direction of longitudinal extension of the second portion. The vertical direction Z can be substantially perpendicular to the longitudinal direction X and substantially perpendicular to the transversal direction Y of longitudinal extension of the at least one pin.

The first through-hole and the third through-hole of the sensor assembly can be configured such that they encompass the first pin in a positive-fitting manner. A positive-fitting manner of the fitting allows the pin to be substantially rigidly fixed to the first portion and the second portion by the first and the third through-hole. This means that the pin has almost no play inside the first and third through-hole and that the accuracy of the force measurement is advantageously increased compared to a configuration in which the first pin has play inside the first and the third through-hole.

According to another aspect of the invention, the first pin may be cryogenically treated, such as by subjecting the entire first pin to liquefied nitrogen, thereby causing a reduction in the cross-section dimension of the pin. After super-cooling the first pin, it may be positioned in the first and third through-holes and allowed to return to ambient temperature. As the material in the pin warms up to ambient temperature, the cross-section dimension will increase until the first pin is substantially rigidly fixed in the first and third through-holes.

According to another aspect, the second pin of the sensor assembly may be encompassed by the second through-hole in a positive-fitting manner and the fourth through-hole may be configured such that the second pin may have one additional degree of freedom of movement within the fourth through-hole. The additional degree of freedom of movement allows the second pin to be insensitive with respect to shear forces acting in the direction of the additional degree of freedom of movement. This means that the determination of the shear force along this direction can advantageously be simplified since the shear effect occurs exclusively on the first pin.

The second pin, like the first pin, may be cryogenically treated, such as by subjecting the entire first pin to liquefied nitrogen, thereby causing a reduction in the cross-section dimension of the pin. After super-cooling the second pin, it may be positioned in the second and fourth through-holes and allowed to return to ambient temperature. As the material in the second pin warms up to ambient temperature, the cross-section dimension will increase until the second pin is substantially rigidly fixed in the second and fourth through-holes with the additional degree of freedom of movement noted above.

The additional degree of freedom of movement may extend in the longitudinal direction X. Since the additional degree of freedom of movement corresponds to the longitudinal direction X, the determination of the shear force along this direction can advantageously be simplified.

According to another aspect, the first and/or the second pin of the sensor assembly can include a first magneto-elastically active region and a second magneto- elastically active region. The first and the second magneto-elastically active regions may be directly or indirectly attached to or form parts of the pin in such a manner that mechanic stress may be transmitted to the magneto-elastically active regions. Each magneto-elastically active region can include a magnetically polarized region. Particularly, the magnetic polarization of the first magneto- elastically active region and the magnetic polarization of the second magneto- elastically active region may be substantially opposite to each other. The magnetic field sensor means/device can include at least one first direction sensitive magnetic field sensor which may be arranged approximate the first magneto-elastically active region. The magnetic field sensor means/device may be configured to output a first signal corresponding to a stress-induced magnetic flux which may emanate from the first magneto-elastically active region. The magnetic field sensor means/device may include at least one second direction sensitive magnetic field sensor which may be arranged approximate the second magneto-elastically active region. The magnetic field sensor means/device may be configured to output a second signal corresponding to a stress-induced magnetic flux which may emanate from the second magneto-elastically active region. This way, the shear force can advantageously be determined in two opposing directions thereby improving the quality of the determination of the shear force. This "vice versa" configuration of the magnetic field sensors enables the shear directions to be determined by the magneto-elastically active regions. For example, the directions may be distinguishable, if the measurement data, which is acquired from the first direction sensitive magnetic field sensor and the second direction sensitive magnetic field sensor, is differentially processed.

The differential evaluation of the signals advantageously doubles the signal, which is correlated with the applied stress. Because the polarization of the first and second magneto-elastically active region is opposite to each other, theoretically possible external fields may be compensated. The sensor assembly according to this embodiment may be more sensitive and less susceptible to errors.

According to another aspect of the invention, the first and/or the second pin of the sensor assembly can include at least one first X-direction sensitive magnetic field sensor and/or at least one second X-direction sensitive magnetic field sensor and/or at least one Z-direction sensitive magnetic field sensor and/or at least one second Z-direction sensitive magnetic field sensor. The at least one X-direction sensitive magnetic field sensor may be configured to detect a force component $Fx1$ in the first magneto-elastically active region in the longitudinal direction X of the second portion. The at least one second X-direction sensitive magnetic field sensor may be configured to detect a force component $Fx2$ in the second magneto- elastically active region in the longitudinal direction X of the second portion. The at least one Z-direction sensitive magnetic field sensor may be configured to detect a force component $Fz1$ in the first magneto-elastically active region in the vertical direction Z. The at least one second Z-direction sensitive magnetic field sensor may be configured to detect a force component $Fz2$ in the second magneto- elastically active region in the vertical direction Z. Advantageously, the shear force can be determined in different directions being perpendicularly aligned with respect to each other.

The first pin of the sensor assembly can include the at least one Z-direction sensitive magnetic field sensor and the at least one second Z-direction sensitive magnetic field sensor. Advantageously, the first pin can be configured to exclusively react on a shear force acting along the Z-direction.

The first pin of the sensor assembly can include the at least one first X-direction sensitive magnetic field sensor, the at least one second X-direction sensitive magnetic field sensor, the at least one first Z-direction sensitive magnetic field sensor and the at least one second Z-direction sensitive magnetic field sensor and the second pin of the sensor assembly can comprise the at least one Z-direction sensitive magnetic field sensor and the at least one second Z-direction magnetic field sensor. Advantageously, the first pin can be configured to exclusively react on the shear effect along the X- direction which simplifies the shear force evaluation, wherein the shear force along the vertical Z-direction is acting on both load sensor pins 8, 9.

The first pin of the sensor assembly can include the at least one first X-direction sensitive magnetic field sensor, the at least one second X-direction sensitive magnetic field sensor, the at least one first Z-direction sensitive magnetic field sensor and the at least one second Z-direction sensitive magnetic field sensor, and the second pin of the sensor assembly can include the at least one first X-direction sensitive magnetic field sensor, the at least one second X-direction sensitive magnetic field sensor, the at least one first Z-direction sensitive magnetic field sensor and the at least one second Z-direction sensitive magnetic field sensor. This way, both load sensor pins 8, 9 are sensitive to all shear forces along the vertical Z-direction as well as along the longitudinal X-direction. The first and the second pin advantageously can detect the different components of the shear force at different positions of the system.

The magnetic field sensor means/device may be configured for determination of a first component and a second component of the load, which is applied to the pin. In particular, the at least one first X-direction sensitive magnetic field sensor and the at least one second X-direction sensitive magnetic field sensor can form a first group of sensors and the at least one first Z-direction sensitive magnetic field sensor and the at least one second Z-direction sensitive magnetic field sensor can form a second group of sensors. The first group of sensors is suitable for determination of a load component, which is directed along the X-axis. The second group of sensors senses a component of the load, which is substantially perpendicular to the first component along the Z-direction. Consequently, the direction and the value of the stress or force, which is applied to the load sensor pins 8, 9, may be determined from said components in this coordinate system.

The second portion of the sensor assembly can comprise a center wall which may extend in the longitudinal direction X and the vertical direction Z. The third and the fourth through-hole may also extend through the center wall.

Advantageously, the center wall allows the first portion to be effectively affected by the shear force at an additional point of action.

The first and/or the second pin of the sensor assembly may be fixedly attached in a predetermined manner to the first portion. The first and/or the second pin can advantageously be fixedly attached in all six degrees of freedom. This way, the determination of the shear forces is effectively possible since the load sensor pins 8, 9 do not have play inside the through-holes of the first portion.

The first portion of the sensor assembly can have a yoke-like shape. The yoke legs of the first portion can comprise the first and the second through-holes. The second portion of the sensor assembly can have a tubular shape. The side walls of the second portion can comprise the third and fourth through-holes. The direction sensitive magnetic field sensor(s) may be configured to detect force components of shear forces introduced into the load sensor pins 8, 9 by the first portion and the second portion. Advantageously, a yoke-like shape of the first portion and a tubular shape of the second portion allow the sensor assembly to be implemented in an elongated joint connection of two objects, whereas the load sensor pins 8, 9 are arranged in the through-holes and connect both objects.

The first portion of the sensor assembly can have a yoke-like shape. The yoke legs of the first portion can comprise the first and the second through-holes. The center wall can comprise the third and fourth through-holes. The direction sensitive magnetic field sensor(s) may be configured to detect force components of shear forces introduced into the load sensor pins 8, 9 by the first portion and the second portion. In particular, the side walls of the second portion can comprise through-holes which may be larger than the third and the fourth through-holes such that the shear forces may be introduced into the load sensor load sensor pins 8, 9 by abutment surfaces of the first and the second through-holes in the yoke legs and abutment surfaces of the third and the fourth through-holes in the center wall. The abutment surfaces allow the transmission of power between the first portion and the second portion to be configured in an advantageous manner.

A tow coupling can comprise a sensor assembly wherein the first portion is a hitch assembly that may be configured to be attached to a car chassis and wherein the second portion may be a receiving tube which may be configured to receive a drawbar, alternatively a hitch bar or a ball mount of the tow coupling. Advantageously, the sensor assembly is configured to detect the forces of a tow coupling of an automobile, which may be part of a land based on-road or off-road vehicle.

The first portion of the sensor assembly may be a supporting yoke having two yoke legs. The yoke legs may comprise recesses which are aligned in correspondence to each other and which represent the first and the second through-holes of the first portion.

The first portion of the sensor assembly may be a supporting yoke having four yoke legs. The yoke legs may comprise recesses which are aligned in correspondence to each other and which represent the first and the second through-holes of the first portion.

The sensor assembly dispenses with a mechanical linkage or connection between the magnetic field sensor means and the second portion. This eliminates sources of error, which result from mechanic failure of this connection. The sensor assembly reliably operates even under extreme operating conditions. The drift of the measurement values during long term measurement is reduced. The sensor assembly is versatile in that it may be applied to or integrated in nearly every tubular shaped portion, which may be for example a part of a hydraulic unit of a land-, marine-, rail- or air transport vehicle.

According to another aspect, the forces which are detectable by the sensor assembly are not exclusively restricted to shear forces which originate from shear stress but may also originate due to tensile or compressive stress acting on the magneto-elastically active region(s) of the first pin and/or the second pin of the sensor assembly. In other words, shear stress and normal stress may both induce a variation of the polarization of the magnetically polarized region emanating from the magneto-elastically active region(s). This polarization may be detectable by the magnetic field sensor means which may output a signal corresponding to a stress- induced magnetic flux towards the polarization direction sensitive magnetic field sensor that may be configured to determine the acting force. Consequently, the magneto-elastically active region may be sensitive to all stress types. The embodiment may particularly be suitable, if the pin is exposed to only one single type of stress.

According to another aspect, the direction sensitive magnetic field sensors L may be one of a Hall-effect, magneto-resistance, magneto-transistor, magneto-diode, MAGFET field sensors or fluxgate magnetometer. These aspects advantageously apply to all embodiments of the invention.

Any hydraulic piston, crane application, car and other various applications incorporating bolts and load sensor pins 8, 9, where shear forces may be applied, may be equipped with the sensor assembly. Traditionally, shear force sensors using strain-gauges are designed in that they get intentionally weaken to provide enough deformation so as to allow a measurement of the applied loads. The magneto-elastically active region of the sensor assembly, however, provides the possibility to design the bolt without weaken locations and significantly higher overload capability. The load pin having the integrated magneto-elastically active region provides the possibility to detect shear forces in load sensor pins 8, 9, screws, bolts etc.

A method of determining a direction of a load vector is provided. Within said method, a sensor assembly according to aspects of the invention is provided. In other words, a sensor assembly is provided which can comprise a first portion having a first and a second through-hole. The sensor assembly can further comprise a second portion having a third and a fourth through-hole. The third and the fourth through-hole can be positioned in correspondence to the first and the second through-hole. The sensor assembly can further comprise a first pin and a second pin. The first pin can be arranged such that it extends through the first and the third through-hole and the second pin can be arranged such that it extends through the second and the fourth through-hole, so as to couple the first portion to the second portion. At least one out of the first and the second pin can comprise at least one magneto-elastically active region that may directly or indirectly be attached to or form a part of the pin in such a manner that mechanic stress on the pin is transmitted to the magneto-elastically active region. The magneto-elastically active region can comprise at least one magnetically polarized region such that a polarization of the magnetically polarized region may become increasingly helically shaped as the applied stress increases. The sensor assembly can further comprise a magnetic field sensor means which may be arranged approximate the at least one magneto-elastically active region. The magnetic field sensor means may be configured to output a signal corresponding to a stress-induced magnetic flux which may emanate from the magnetically polarized region. The magnetic field sensor means may comprise at least one direction sensitive magnetic field sensor which may be configured to determine a shear force in at least one direction. The at least one direction sensitive magnetic field sensor may in particular be arranged to have a predetermined and fixed spatial coordination with the pin, wherein this pin may at least be partially hollow. The at least one direction sensitive magnetic field sensor may be arranged inside an interior of this pin.

Furthermore, within the method according to another aspect, the first pin and the second pin may be exposed to a load. Measurement data of the at least one direction sensitive magnetic field sensor may be processed so as to determine a shear stress and/or a tensile or compressive stress that is applied by the second portion and the first portion to the first and/or second load sensor pins 8, 9.

In particular, a direction of a force F may be determined from the measurement data on the one hand and the predetermined and known spatial coordination between the direction sensitive magnetic field sensor(s), the first pin, the second pin and the point of load. The force F is applied to the sensor assembly via the second portion.

Same or similar advantages which have been already mentioned with respect to the sensor assembly having a magneto-elastically active region according to aspects of the invention apply in a same or similar way to the method of determining a direction of the load vector and will be not repeated.

Devices and methods related to magnetizing a cylindrical shaft, pin, or similar shaped object, and using magnetic field sensors positioned proximate to the same for detecting a magnetic flux emanating from the object and other magnetic fields, are disclosed in one or more of the following patents owned by Methode Electronics:

US6490934 ("Circularly magnetized non-contact torque sensor and method for measuring torque sing the same");
US6553847 ("Collarless circularly magnetized torque transducer and method for measuring torque using the same");
US6904814 ("Magnetic torque sensor system"); US7140258 ("Magnetic-based force/torque sensor"); US8087304 ("Magneto-elastic torque sensor with ambient field rejection");
US8578794; ("Magneto-elastic torque sensor with ambient field rejection"); and US8893562 ("System and method for detecting magnetic noise by applying a switching function").

In many of the above references, a magneto-elastic torque sensor is described, in which an output signal indicative of a force applied to a member is provided. The sensor includes a first magneto-elastically active region in the member, the region being ferromagnetic, magnetostrictive magnetically polarized in a single circumferential direction and possessing sufficient magnetic anisotropy to return the magnetization in the region to the single circumferential direction when the applied torque is reduced to zero, whereby the ferromagnetic, magnetostrictive region produces a magnetic field varying with the torque. Magnetic field sensors are mounted proximate to the ferromagnetic, magnetostrictive region to sense the magnetic field at the sensors and provide the output signal in response thereto.

Apparatus and methods related to strain-induced magnetic anisotropy to measure the tension or compression present in a plate-like object are described in LIS20150204737 ("Magneto-elastic sensor"), owned by Methode Electronics.

The device includes an annular region of a plate is magnetized with a circumferential magnetization. Magnetic field sensors are then placed near this magnetized band at locations where the magnetization direction is non-parallel and non-perpendicular to the axis of tension. The strain-induced magnetic anisotropy caused by tension or compression then produces a shift in the magnetization direction in the plate regions near the field sensors, thereby causing magnetic field changes which are detected by the magnetic field sensors. The magnetic field sensors are connected to an electronic circuit which outputs a voltage signal which indicates the tension or compression in the plate.

An embedded software program is used to receive signals from various sensors and output a signal containing information useful in determining or assessing a load weight gauge (measuring the tongue load of a tow coupling), a tow load weight shift alert, an unsafe trailer load distribution alert, a vehicle limit notification, an automated trailer brake control (closed loop), a lowlflat trailer tire notification, a check trailer brake notification, a closed loop braking control, a vehicle shift control, an engine control, and a stability control.

The shielding material or a shielding device or multiple shielding devices may be used to shield the load sensor pins 8, 9 from the effects of external magnetic sources, such as nearby permanent magnets. In one embodiment, a flux directly may be used to direct external magnetic fields to minimize or reduce their effect on the load sensor pins 8, 9 and the output signal from the load sensor pins 8, 9.

The load sensor pins 8, 9 output one or more signals to one or more microcontroller units. The microcontrollers are adapted to processing the signals and providing processed signals to a vehicle onboard control system via the vehicle's bus network. The processed signal may include information related to a comparison of the load pin forces to one or more threshold forces and instructional data for corrective actions to be taken by one or more vehicle control systems in response thereto.

The load sensor pins 8, 9 and other components of the tow coupling apparatus may be used to measure a sprung weight of a towing or towed vehicle by measuring the sheer forces on the load sensor pins 8, 9 caused by the weight on the vehicle producing a force on the load sensor pins 8, 9.

The load sensor pins 8, 9 and other components of the tow coupling apparatus may be used in connection with a weight distribution-type tow hitch and algorithms utilizing individual load sensor pin output signals may be employed to assess a tongue load and other sheer forces on a hitch caused by a trailer attached to a tow vehicle.

The present invention provides additional advantageous features related to magneto-elastic sensors for measuring forces, especially loads applied to one or more components of a vehicle hitch assembly.

BRIEF DESCRIPTION OF THE DRAWINGS

FIG. 1 FIG 1 is a simplified, schematic diagram of the outside of a load sensor pin for use with a tow coupling apparatus;

FIG. 2 FIG 2 is a simplified, schematic diagram of the outside of another load sensor pin for use with a vehicle tow coupling apparatus;

FIG. 3 FIG 3 is a simplified, perspective, exploded view diagram of some of the components of a "front" load sensor pin;

FIG. 4 FIG 4 is a simplified perspective view schematic diagram of a multi-pin electrical connector for use with the load sensor pin of FIG. 3;

FIG 5 is a simplified, cross-sectional, plan view diagram of the load sensor of FIG. 3;

FIG 6 is a simplified, perspective exploded view diagram of some of the components of a "back" load sensor pin;

FIG 7 is a simplified, cross-sectional, plan view diagram of the load sensor of FIG. 6;

FIG 8 is a simplified, partial, cross-sectional, plan view diagram of the load sensor of FIG. 6;

FIG 9 is a simplified, partial, cross-sectional, plan view diagram of the "front" and "back" load sensor pins of FIGS. 3 and 6 and some of the components of a tow coupling apparatus;

FIG. 10A is a simplified, cross-sectional view drawing of another aspect of a load sensor pin;

FIG 10B is a simplified, partial, cross-sectional, perspective view diagram of the load sensor pin of FIG. 10A;

FIG. 10C is a simplified, partial, perspective view diagram of another aspect of a load sensor pin of FIG. 10A;

FIG. 10D is a simplified, end view diagram of yet another aspect of the load sensor pin of FIG. 10A;

FIG. 11A is a simplified, schematic diagram of the load sensor pin of FIG. 2 with a shielding device;

FIG 11B is a simplified, exploded, perspective view diagram of the components of a load sensor pin showing a printed circuit board between two elongated magnetic field shielding members;

FIG. 12A is a simplified, partial, perspective view diagram of some of the components of a load sensor pin having a secondary magnetic field sensor;

FIG 12B is another simplified, partial, perspective view diagram of some of the components of the load sensor pin of FIG. 12A;

FIG 13 is a simplified, partial, perspective view diagram of some of the components of a tow coupling apparatus showing front load sensor pin 8 and back load sensor pin 9;

FIG 14 is another simplified, partial, perspective view diagram of the components of the tow coupling apparatus showing front load sensor pin 8 and back load sensor pin 9;

FIG 15 is a simplified, partial, cross-sectional, end view diagram of the components of the tow coupling apparatus of FIG. 13;

FIG 16 is another simplified, partial, cross-sectional, end view diagram of the components of the tow coupling apparatus of FIG. 13;

FIG. 17A is a simplified, partial, perspective view diagram of the tow coupling apparatus of FIG. 14;

FIG 17B is a close-up simplified, partial, perspective view diagram of the apparatus of FIG. 14;

FIG. 18A is a simplified, partial, perspective view diagram of some of the components of the tow coupling apparatus of FIG. 14 showing a first load case;

FIG 18B is another simplified, partial, perspective view diagram of some of the components of the tow coupling apparatus of FIG. 14 showing a different load case;

FIG. 19A is a simplified, partial, perspective view diagram of the vehicle tow coupling apparatus of FIG. 14 with a shielding device;

FIG 19B is a semi-transparent diagram of FIG. 19A;

FIG. 19C is another view of the shielding device of FIG. 19A;

FIG 20 is a simplified, side view diagram of the tow coupling apparatus of FIG. 14 showing another load case;

FIG 21 is a simplified, side view diagram of a tow coupling apparatus and vehicle components;

FIG 22 is a simplified, perspective view diagram of one component of a tow coupling apparatus showing upper and lower load sensor pins 8, 9;

FIG 23 is a simplified, perspective view diagram of the coupling components of a vehicle tow coupling apparatus;

FIG 24 is a simplified, perspective, exploded view diagram of some of the components of another tow coupling apparatus;

FIG 25 is another simplified, perspective, exploded view diagram of the modified components of the tow coupling apparatus of FIG. 24;

FIG 26 is a simplified, perspective view diagram of the components of the tow coupling apparatus of FIG. 24;

FIG 27 is a simplified, process flow diagram of a method of cryogenically treating a load sensor pin;

FIG. 28A is a simplified, partial, exploded, perspective view diagram of a tow coupling apparatus including load sensor pins 8, 9;

FIG 28B is another simplified, partial, exploded, perspective view diagram of the tow coupling apparatus of FIG. 28A;

FIG 29 is a simplified, exploded, perspective view diagram of some of the components of the vehicle tow coupling apparatus of FIG. 28A;

FIG 30 is a simplified, partial, cross-sectional view diagram of the tow coupling apparatus of FIG. 28A;

FIG. 31A is another simplified, plan view diagram of a load sensor pin;

FIG. 31B is an end view diagram of the load sensor pin of FIG. 31 A;

FIG. 32A is a simplified, partial, axial, cross-sectional view diagram of a load sensor pin for use in the tow coupling apparatus of FIG. 31A;

FIG 32B is a simplified, partial, cross-section, end view diagram of the load sensor pin of FIG. 32A;

FIG 33 is simplified, partial, cross-sectional view diagram of a load sensor pin for use in a tow coupling apparatus;

FIG 34 through FIG. 41 are simplified, schematic, top view diagrams of a portion of a tow coupling apparatus showing various simplified load cases;

FIGS. 42A through 42U are perspective view diagrams of tow hitch assemblies, towed or towing vehicles, and weight sensing assemblies using one or more load sensor pins at various force transmitting components;

FIG 43 is a simplified, exploded, schematic view diagram of a weight sensor assembly using load sensor pins for sensing a weight of a towed or a towing vehicle;

FIG 44 is a simplified, schematic, cross-sectional view diagram of the weight sensor assembly of FIG. 43 showing the load sensor pins;

FIGS 45, 46A, and 46B are simplified, schematic, perspective views of a vehicle in which force vectors $F_{FL}$, $F_{FR}$, $F_{RR}$, $F_{RL}$, and Fvehicie representing the weight of a vehicle body are shown;

FIGS. 47-51 are schematic diagrams of the weight sensor assembly and load sensor pins of FIGS. 43 and 44 as applied to various types of vehicle suspension assemblies;

FIGS 52 through 54 are schematic diagrams of the weight sensor assembly and load sensor pins of FIGS. 43 and 44 as applied to various types of towed vehicle suspension assemblies;

FIGS. 55A-55E are simplified, partial, cross-sectional, and perspective view diagrams of a tow coupling apparatus including load sensor pins 8, 9;

FIGS. 56A-56C are simplified, partial, cross-sectional, and perspective view diagrams of a tow coupling apparatus including load sensor pins 8, 9;

FIG 57 is a simplified, schematic, perspective view diagram of a tow coupling apparatus including a single load sensor pin 8 or 9;

FIG 58 is another simplified, schematic, perspective view diagram of a tow coupling apparatus including a single load sensor pin 8 or 9;

FIG 59 is a simplified, process flow diagram of a computational method involving a load sensor pin;

FIGS. 60A and 60B are schematic drawings of some of the operational components of a load sensor pin 8 or 9;

FIGS. 61 and 62 are simplified, partial, perspective, and schematic drawings of a front and rear vehicle suspension including various load sensor pins 8, 9;

FIG 63 is schematic diagram of a vehicle suspension apparatus including load sensor pins;

FIGS. 64 and 65 are simplified, partial, perspective, and schematic drawings of a front and rear vehicle suspension including various load sensor pins 8, 9;

FIG 66 is a simplified, side, plan view diagram of a portion of a vehicle weight distribution tow coupling apparatus showing a simplified load case;

FIGS. 67A and 67B are simplified side and perspective views of the load sensor pins of FIG. 1 for use with a vehicle tow coupling apparatus;

FIGS. 68A and 68B are simplified side and perspective views of the load sensor pin of FIG. 2 for use with a vehicle tow coupling apparatus;

FIG 69 is simplified side view of the load sensor pins of FIG. 67A with press-fitted bushing; and

FIG 70 is a perspective view of bushings used in connection with the load sensor pins.

DETAILED DESCRIPTION OF THE INVENTION

Several preferred embodiments of the invention are described for illustrative purposes, it being understood that the invention may be embodied in other forms not specifically described below and/or shown in the drawings.

For reference purposes, a Cartesian coordinate system is used to describe certain features, components, and directions, and unless otherwise stated or shown in the figures otherwise, the x-axis generally refers to a longitudinal direction, the y-axis generally refers to a transverse direction that is perpendicular to the x-axis, and the z-axis generally refers to a vertical direction that is perpendicular to a plane formed by the x- and y-axes.

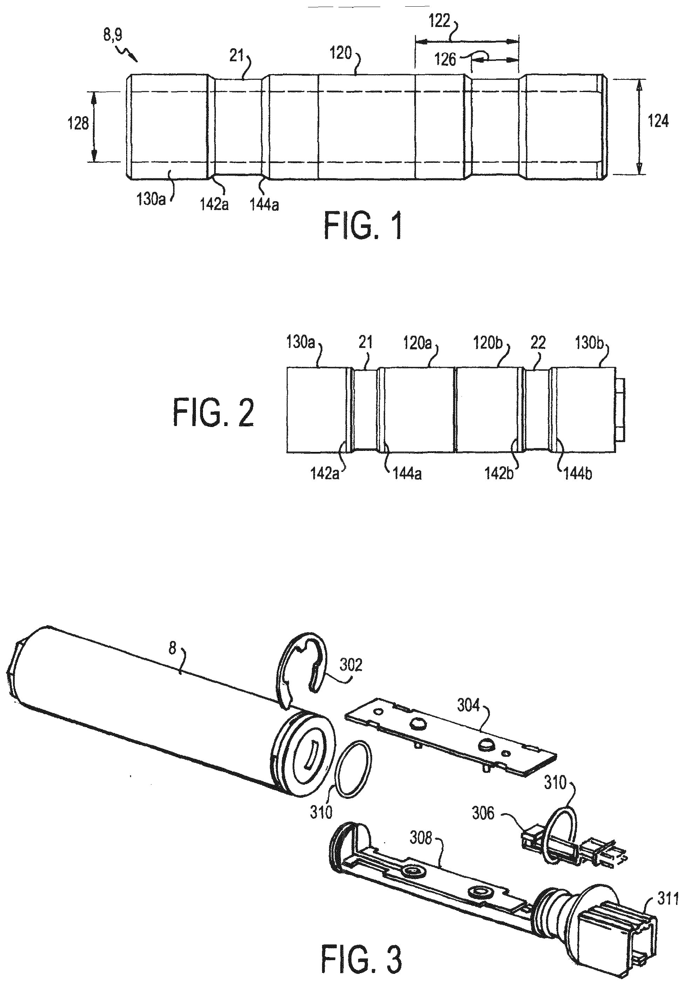

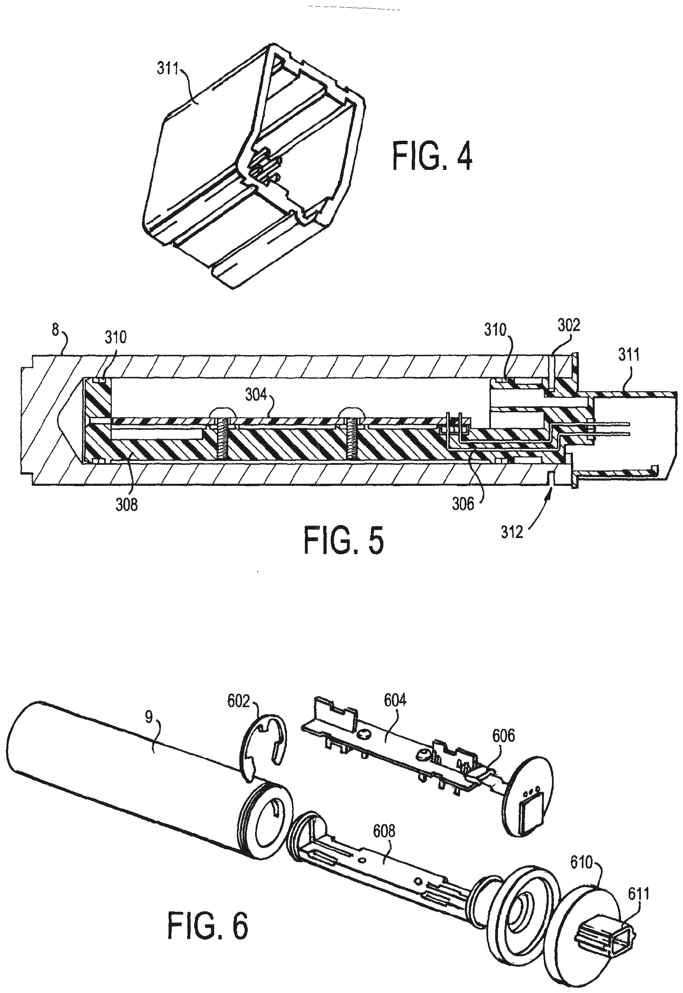

Turning first to FIG. 1, shown therein is a simplified, schematic diagram of a load sensor pin 8 (and similar load sensor pin 9; as best seen in FIG. 5) for use with a tow coupling apparatus, one that is adapted to being attached to a towing vehicle (e.g., passenger automobile car or truck; not shown) at/near the back/rear bumper of the towing vehicle. The load sensor pin 8 referred to here is a "front" load sensor pin given its relative position with respect the load sensor pin 9; that is the load sensor pin 8 is installed in the tow coupling apparatus such that it would be closer to the front of a towing vehicle when the tow coupling apparatus is mounted to the towing vehicle, whereas the load sensor pin 9 is behind the load sensor pin 8 and thus would be closer to the back of the towing vehicle. The relative positions of the load sensor pins 8, 9 may be different than the arrangement shown in the drawings, depending on the particular type of tow coupling application.

The load sensor pins 8, 9 may include a center portion 120 and longitudinally spaced apart end portions 130a, 130b on either side of the center portion 120. Between the center portion 120 and the end portion 130a is a magneto-elastically active portion 21 bordered by joints 142a and 144a (the same features are shown on the other side of the center portion 120). The magneto-elastically active portion 21 is treated in such a way that a longitudinally-extending portion of the surface of the load sensor pins possess a magneto-elastic active region for producing an external magnetic field/flux, as further described below.

Each of the load sensor pins 8, 9 are preferably hollow shafts having a wall thickness ranging from about 0.2 mm at its thinnest to about 3 mm at its thickest along its longitudinal dimension, but the actual wall thickness may be determined based on a particular needs of the application in which the load sensor pins 8, 9 are used. The outer surface of the load sensor pins 8, 9 may have portions that are round or flat.

The dimension 122, which spans a portion of the center portion 120 and the magneto-elastically active portion 21 (as well as a portion of the center portion 120 and the magneto-elastically active portion 22), may vary by application. The dimension 124, which is a diameter of the end face of the end portion 130b of the load sensor pin 8, 9 (as well as a diameter of the end face of the end portion 130a of the load sensor pin 8, 9) may also vary as necessary. The dimension 126, which is the width of the magneto-elastically active portions 22 (as well as the width of the magneto-elastically active portions 21) may be about 8 mm to about 24 mm. The dimension 128, which is a diameter of the inner wall surface of the load sensor pin 8, 9 at the ends of the end portion 130a of the load sensor pin 8, 9 (as well as the a diameter of the inner wall surface of the load sensor pin 8, 9 at the ends of the end portion 130b of the load sensor pin 8, 9) may also vary by application.

All or some of the center portion 120 and the end portions 130a, 130b may be made from non-magnetic materials to keep near field magnetic field generating sources, such as a permanent magnet, magnetized wrench, motor, or solenoid, at a minimum distance from the load sensor pins 8, 9 to reduce or eliminate (below detection) the path of magnetic fields from those types of sources. This would limit or eliminate the effect these near field sources have on the force dependent field measurements produced by the magneto-elastically active portions 21, 22 of the load sensor pins 8, 9.

Another way to reduce the influence of external magnetic fields in/on the load sensor pins 8, 9 is to have only the shear areas of the load sensor pins 8, 9 made of ferromagnetic material. That is, it is not necessary for the rest of the load sensor pins 8, 9 to be made from a ferromagnetic material, and in some instances it is rather undesirable as such materials only act as a flux director for channeling external magnetic fields towards the magnetic field measurement coils (not shown).

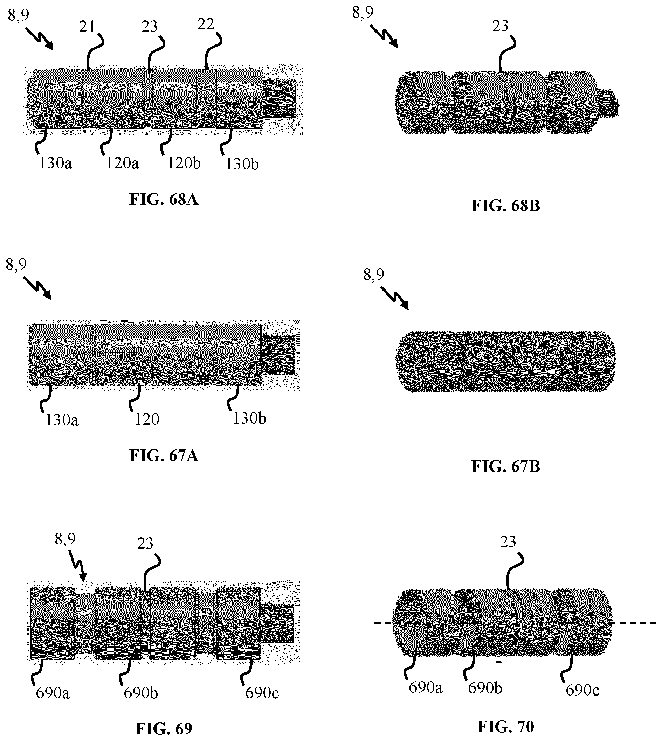

The load sensor pins 8, 9 are further described in Applicant's European patent application EP17162429.9, which is incorporated herein by reference. FIGS. 67A and 67B are additional simplified side and perspective views of the load sensor pins 8, 9 of FIG. 1.

Turning now to FIG. 2, shown therein is a simplified, schematic diagram of another aspect of the load sensor pin 8, 9 of FIG. 1 in which the center portion 120 is divided into two separate center portions 120a, 120b, separated by a joint. In this embodiment, all or some of the center portions 120a, 120b, along with their adjacent magneto-elastic active portions 21, 22, are made from a material and/or treated as described above in such a way that they produce an external magnetic field/flux. FIGS. 68A and 68B are additional simplified side and perspective views of the load sensor pin 8, 9 of FIG. 2, showing the two portions 120a, 120b, separated by an alignment groove 23.

To construct the load sensor pins 8, 9 as shown in FIG. 1 and FIG. 2, the different materials of the various portions could be welded together (e.g. using friction welding). Another possibility would be to take a load sensor pin 8,9 constructed of austenitic stainless steel (non-magnetic) and transform the shear areas to a martensitic material through the process of cold working thus forming the magneto-elastic active portions 21,22.

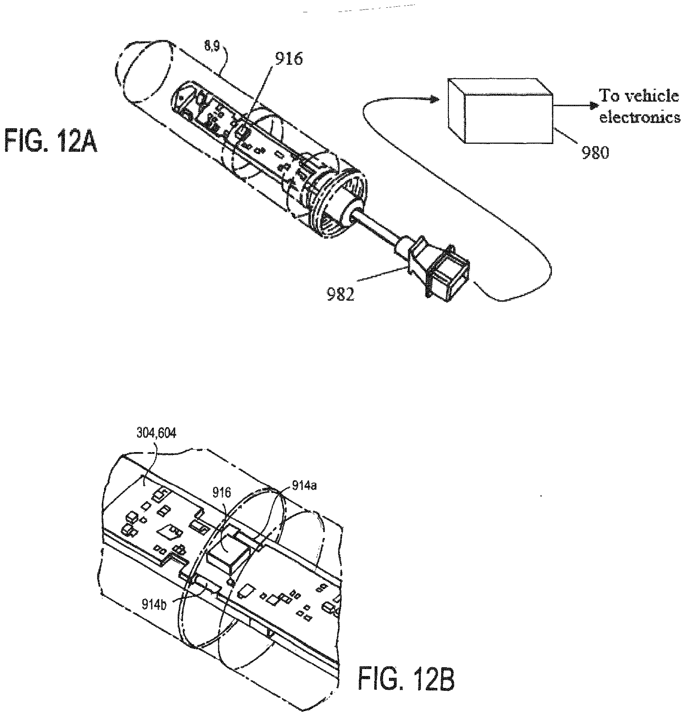

Turning now to FIG. 3 and FIG. 5, shown therein are a simplified, perspective and cross-sectional, and exploded view diagrams of some of the components of the first load sensor pin 8. As shown, the load sensor pin 8 includes a retaining clip 302, a printed circuit board 304, a set of connector pins 306, a support member 308 having a pin connector housing 311 (as also shown in FIG. 4) on a terminating end, and a pair of sealing rings 310. The retaining clip 302 is used to fix the support member 308 in a way that minimizes movement after it is fixed in its final assembled state. The printed circuit board 304 may have one or more (such as four) magnetic field sensors (described below) mounted thereon each with leads for connecting to the set of connector pins 306. The printed circuit board 304 includes a suitable processor, memory, and embedded software (not shown). The set of connector pins 306 include insert molded pins on one end for extending up and through pre-drilled through-holes on the printed circuit board 304 for connecting to the one or more magnetic field sensors and other circuit components on the printed circuit board 304. The other end of the set of connector pins 306 terminate with suitable latch-type or friction fit-type pins that connect with a suitable connector of an electrical harness (as best seen in FIG. 12A). The sealing rings 310 are used to prevent anything from entering the interior of the load sensor pin 8.

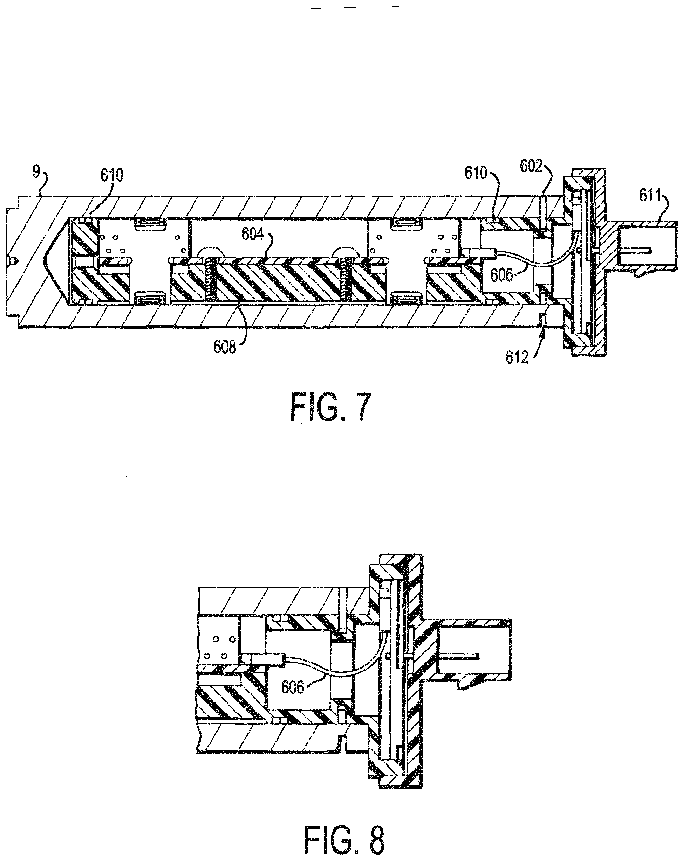

Turning now to FIG. 6 and FIG. 7, shown therein are simplified, perspective and cross-sectional, exploded view diagrams of some of the components of the second load sensor pin 9. As shown, the load sensor pin 9 includes a retaining clip 602, a printed circuit board 604, a set of connector pins 606, a support member 608, a pair of sealing rings 610, and a connector housing 611. The retaining clip 602 is used to fix the support member 608 after it is fixed in its final assembled state to prevent movement. The printed circuit board 604 may have one or more (such as eight) magnetic field sensors (not shown) mounted thereon each with leads for connecting to the connector pins 606, which in turn lead to a flat, circular-shaped printed circuit board. The printed circuit board 604 includes a suitable processor, memory, and embedded software (not shown). A micro ribbon or cable (as shown in FIG. 8) connects the printed circuit board 604 and a circular printed circuit board. The flat, circular-shaped printed circuit board connects to a four-pin connector inside the connector housing 611. The sealing rings 610 are used to prevent anything from entering the interior of the load sensor pin 9.

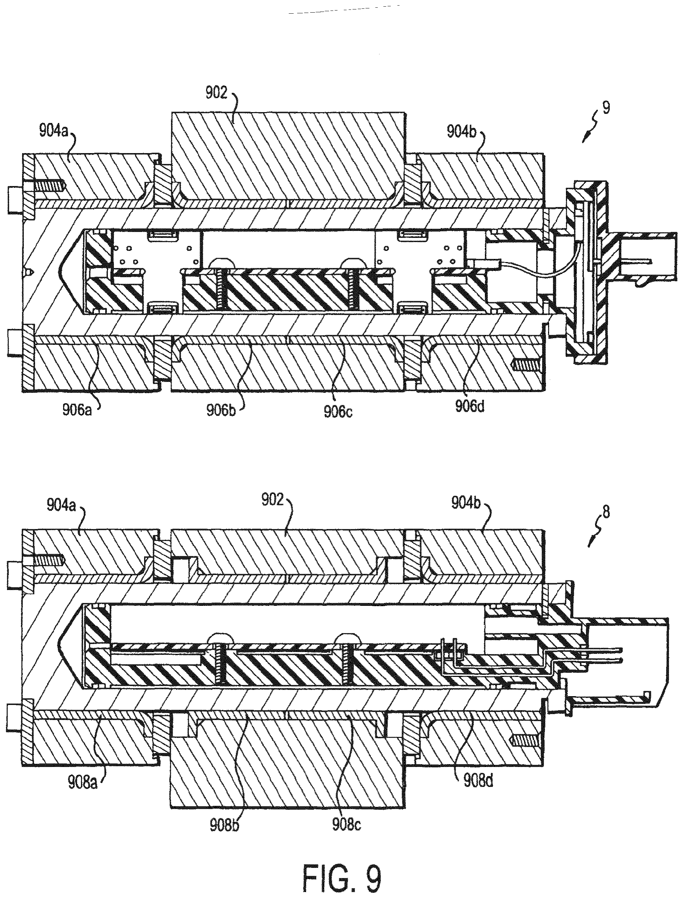

Turning now to FIG. 9, shown therein is a simplified, partial, cross-sectional, plan view diagram of the "front" and "back" load sensor pins of FIGS. 3 and 6 and some of the components of a tow coupling apparatus as they could be employed in connection with a tow coupling apparatus (for ease of reference, the two load sensor pins are shown with load sensor pin 9 on top of load sensor pin 8). As shown, the center portions 120 of the load sensor pins 8, 9 are rigidly fixed inside the through-holes of a bracket 902 that generally surrounds the load pins 8, 9. The end portions 130a, 130b of the load sensor pins 8, 9 are further rigidly fixed inside corresponding through-holes of the yoke-like projections 904a, 904b of a generally U-shaped adapter 904 (supporting yoke) that surrounds the bracket 902. Bushings 906a, 906b, 906c, 906d surround respective portions of the load sensor pin 9, and bushings 908a, 908b, 908c, 908d surround respective portions of the load sensor pin 8. The bushings may be brass or some other material. In some embodiments, no bushings are used between the end portions 130a, 130b of the load sensor pins 8, 9 and the respective through-holes of the side yoke-like projections 904a, 904b of the adapter 904. In that embodiment, the load sensor pins 8, 9 are in direct contact with the walls of the through-holes.

The load sensor pins 8, 9 are made from one or more materials, in addition to ferromagnetic materials, and are constructed in such a way that they are suitable for forming the magneto-elastic active regions 21, 22. The chosen materials and construction of the various portions of the load sensor pins 8, 9 should be such that the nature of the shaft of the load sensor pins 8, 9 is one that is elastically deformable. This provides for the relative movement between the center portions 120 (caused by a force imparted by the bracket 902 on the center portions 120) and the rigidly fixed end portions 130a, 130b (maintained in a stationary position by the adapters 904). The eccentric deformation caused by forces imparted on the load sensor pins 8, 9 causes the magneto-elastic active regions 21, 22 to produce the external magnetic field/flux as previously described.

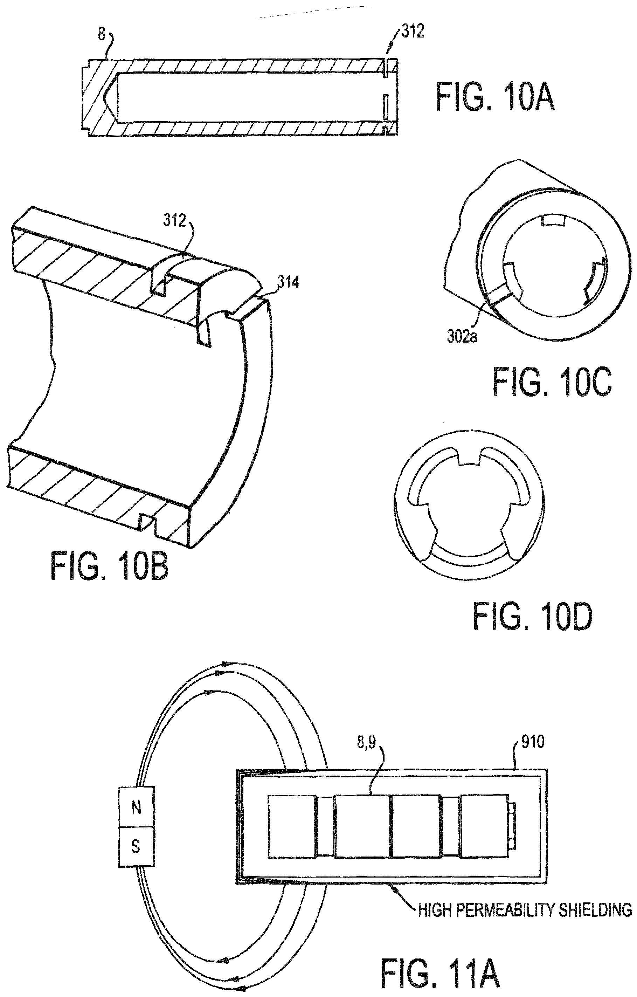

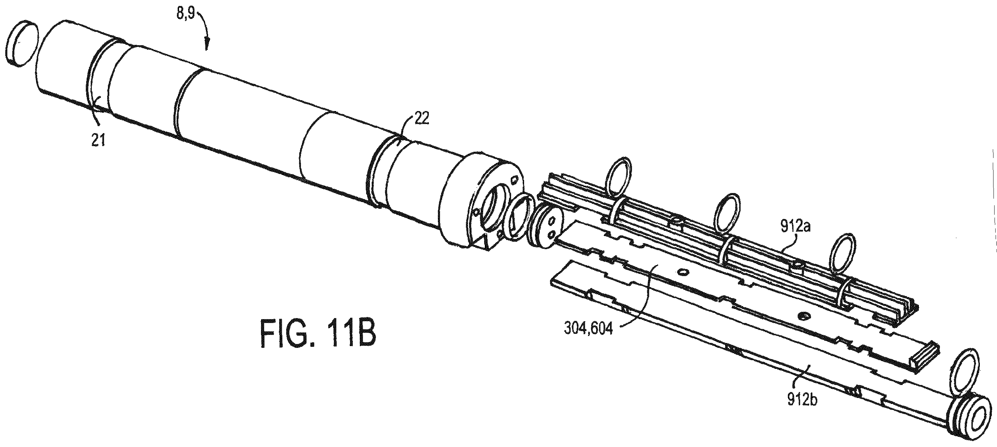

Turning now to FIGS. 10A through 10D, shown therein are a simplified cross-sectional, perspective view drawings of others aspects of a load sensor pin 8, 9. In FIG. 10A, a load sensor pin 8 has a length along its longitudinal direction such that the slot 312 (and slot 612) for receiving the retaining clip 302 is outside the bushing 908d (906d in the case of the load sensor pin 9). In one embodiment, the slots 312, 316 may be about 1.5 mm wide and have an inner diameter of about 24 mm, and they may be about 4 mm from the end of the load sensor pin 8. In FIG. 10C, the retaining clip 302 includes a raised flange or post 302a that fits inside a pole yoke opening 314 as best seen in FIG. 10B to prevent the retaining clip 302 from slipping out of its slot 312 (similarly, the retaining clip 602 includes a raised flange or post to prevent the retaining clip 602 from slipping out of its slot 612). The pole yoke opening 314 may extend through the wall of the load sensor pin 8, for example to accept a raised flange or post 302a having about a 2 mm length. In FIG. 10D, one possible configuration for the retaining clips 302, 602 is shown. Turning now to FIG. 11A and FIG. 11B, shown therein is a simplified, schematic diagram of one of the load sensor pins 8, 9 of FIG. 2 inside a shielding device 910, and a simplified, exploded, perspective view diagram of the components of a load sensor pin 8, 9 showing a printed circuit board 304, 604 between two elongated magnetic field shielding members 912a, 912b, respectively. In FIG. 11A, the shielding device 910 may be a box or other shape and is made using materials with high magnetic permeability, which shunts an external magnetic field by offering a path of low resistance to the field and thereby minimizing or eliminating the influence of the field on the force dependent field measurements produced by the load sensor pins 8, 9. In FIG. 11B, the shielding members 912, 912b also help to minimize or eliminate the influence of the field on the force dependent field measurements produced by the load sensor pins 8, 9. Shielding effects are further described in Applicant's US 8578794 (Magneto-elastic Torque Sensor with Ambient Field Rejection), which is incorporated herein by reference in its entirety. Turning now to FIG. 12A, shown therein is a simplified, partial, perspective view diagram of some of the components of a load sensor pin having a secondary magnetic field sensor 916. FIG. 12B. shows another simplified, partial, perspective view diagram of some of the components of the load sensor pin of FIG. 12A. The components of one of the load sensor pins 8, 9, is shown in which its respective printed circuit board 304, 604 includes primary magnetic field sensors 914a, 914b and a secondary magnetic field sensor 916. The secondary magnetic field sensor 916 may be a 3-axis compass sensor (either standalone or as part of a 9-axis sensor), which is used to detect the presence of external magnetic fields in the case that the shielding elements described above are not effective in eliminating all external fields. Information outputted by the secondary magnetic field sensor 916 could be used to perform compensation calculations on the force measurements. In addition, each of the load sensor pins 8, 9 could include extra sensing coils arranged in a way to minimize the influence of external magnetic fields on the measurement of the forces by the primary magnetic field sensors 914a, 914b.

The effects of external magnetic fields may also be taken into account by computational means using a suitable algorithm, which may be processed by embedded software on the printed circuit board 304, 604, or in a separate electronics module 980 connected to the printed circuit board 304, 604 via cable connector 982. Due to the mechanical configuration of a sensor system assembly (especially ones with two or more load sensor pins 8, 9 or two sensing planes), there can be certain relationships between the forces detected by the load sensor pins 8, 9 that have to be fulfilled. An external field is likely to cause an implausible relationships/combination of individual forces measured, which an algorithm could detect and compensate for.

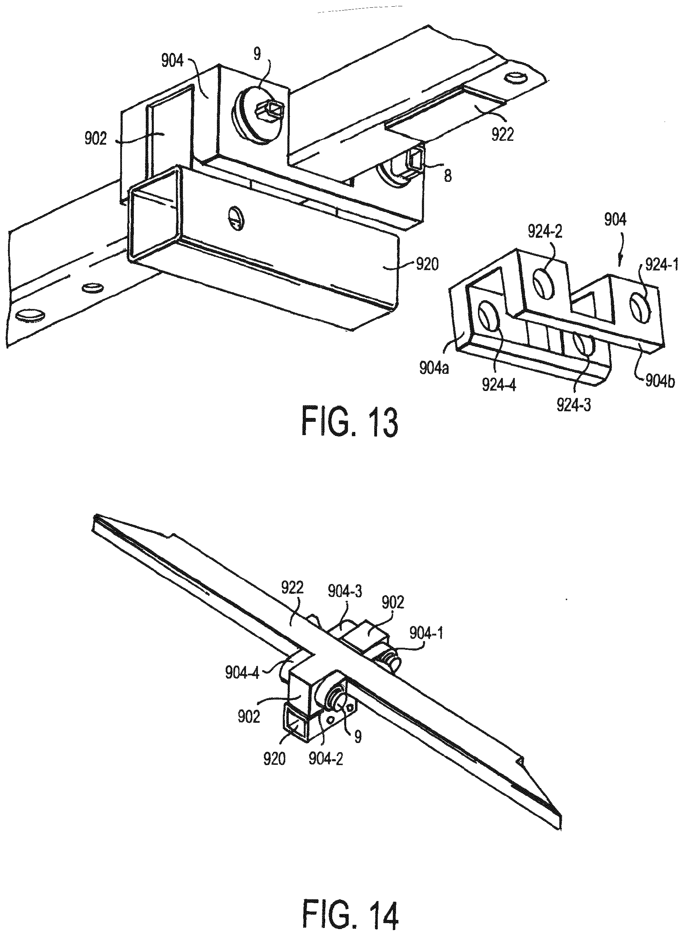

Turning now to FIG. 13, shown therein is a simplified, partial, perspective view diagram of some of the components of a tow coupling apparatus showing front load sensor pin 8 and back load sensor pin 9 for coupling a towing vehicle to a towed vehicle. As shown, the tow coupling apparatus includes a bracket 902 attached to a receiver tube 920, and a generally U-shaped adapter 904 attached to a hitch tube 922.

The hitch tube 922 is a longitudinally extending, round, oval, square, or other shape member of the type typically used to attach to a towing vehicle (not shown) near the rear bumper of the towing vehicle. The hitch tube 922 is the component that couples the tow coupling apparatus to the towing vehicle to transmit force (generated by the towing vehicle's engine) to a towed vehicle (not shown), such as a trailer. Bolts or other fastening means may be used to securely attach the hitch tube 912 to the towing vehicle.

The adapter 904 has two side yoke-like projections 904a, 904b extending approximately 90-degrees from a base portion such that they are parallel to each other. Each side wall includes through-holes: first and second through-holes 924-1, 924-2 on the side wall 904b, and third and fourth through-holes 924-3, 924-4 on the side wall 904a, such that the first and third through-holes 924-1, 924-3 are axially aligned with each other, and the second and fourth through-holes 924-2, 024-4 are also axially aligned with each other. The end portions 130a, 130b of the load sensor pins 8, 9 are rigidly fixed inside the through-holes of the side yoke-like projections 904a, 904b of the adapter 904, in some cases using collars or bushings, that surrounds the bracket 902 as shown.

The bracket 902, which may be a single member or two separate members arranged on front and back sides of the hitch tube 922, fits between the two side yoke-like projections 904a, 904b of the adapter 904 when the tow coupling apparatus components are in an assembled state. The bracket 902 includes a front portion and a back portion. The front portion and the back portion each includes a through-hole (not shown) axially aligned with the through-holes on the adapter 904 when the components are in the assembled state. Through-holes on the front and back portions of the adapter 904 may be slightly larger than the through-holes 924-1, 924-2, 924-3, 924-4 such that shear forces transmitted from the receiver tube 920 are introduced into the load sensor pins 8, 9 by abutment surfaces of the through-holes 924-1, 924-2, 924-3, 924-4 in the adapter 904 and abutment surfaces of the through-holes in the bracket 902.

The bracket 902 and the adapter 904 are each made of a material selected from suitable materials that resist deforming over time under a range of expected applied forces.

There may a gap of about 0.5 mm between the top of the bracket 902 and the connecting base portion of the adapter 904 (the portion that connects to the hitch tube 922). The thickness of the base portion of the adapter 904 in the configuration shown may be 8 mm. Alternatively, the thickness of the base portion of the adapter 904 may be 10 mm, which may be achieved, for example, by modifying the placement of the various through-holes and changing other dimensions of the adapter 904.

Turning now to FIG. 14, shown therein is another simplified, partial, perspective view diagram of the components of the tow coupling apparatus showing front load sensor pin 8 and back load sensor pin 9.

In this embodiment, an alternative approach to using the adapter 904 is shown. Instead of a one-piece adapter 904 with a base portion, two spaced apart side yoke-like projections 904a, 904b, and through-holes 924-1, 924-2, 924-3, 924-4, the alternative adapter includes four separate adapters 904-1, 904-2, 904-3, 904-4 each separately connected directly to a hitch tube 922 as shown.

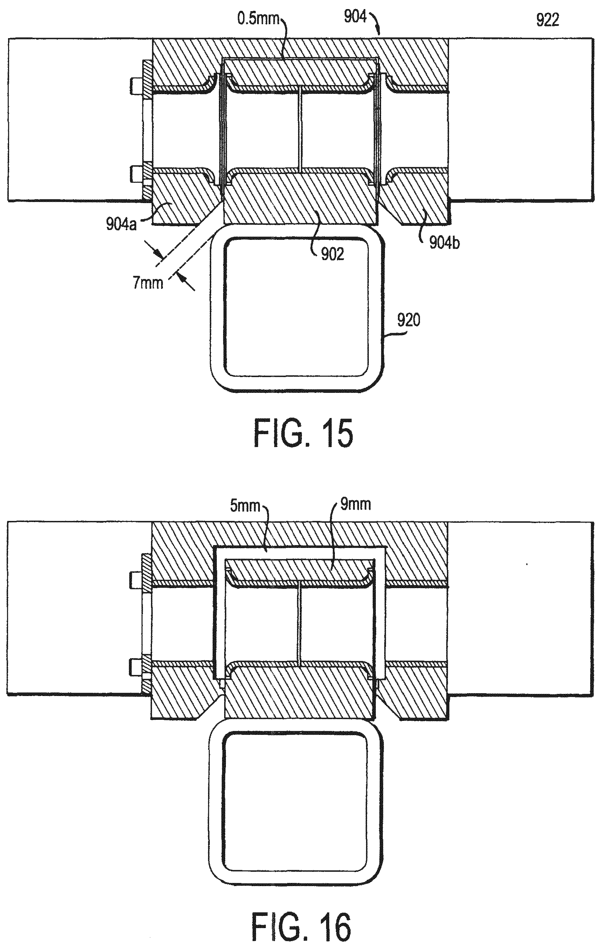

Turning now to FIG. 15 and FIG. 16, shown therein are simplified, partial, cross- sectional, end view diagrams of the components of the tow coupling apparatus of FIG. 13. As shown in FIG. 15, the lower edge of the side yoke-like projections 904a, 904b of the adapter 904 include a beveled edge such that there is a gap of about 7 mm between the bevel edge and the closest edge of the receiver tube 920. There is also a gap of about 0.5 mm between the upper edge of the bracket 902 and the base portion of the adapter 904 (the thickness of the base portion here could be about 8 mm or as needed to provide rigidity for the side yoke-like projections 904a, 904b). As shown in FIG. 16, the gap between the upper edge of the bracket 902 and the base portion of the adapter 904 is increased from 0.5 mm to 5 mm (the thickness of the base portion here could be about 10 mm to provide additional rigidity for the side yoke-like projections 904a, 904b). Various other dimensions (thickness) of the base portion of the adapter 904 are also contemplated and may be suitable for different expected forces or loads on the tow coupling apparatus components. Also shown are press-fit bushings having a pre-determined radial thickness inserted into the axially-aligned through-holes of the bracket.

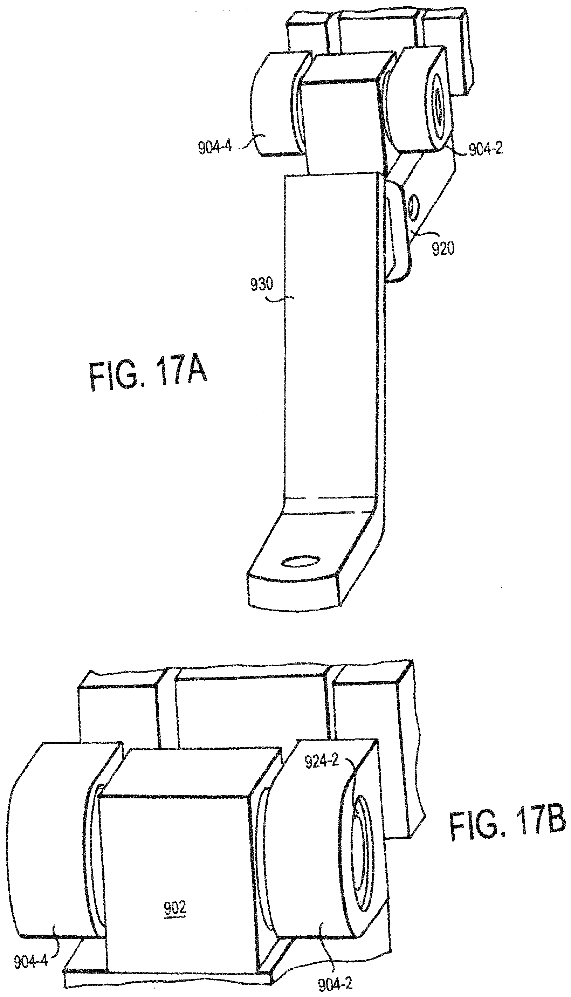

Turning now to FIG. 17A and FIG. 17B, shown therein are simplified, partial, perspective view diagrams of the tow coupling apparatus of FIG. 14. Specifically, a drawbar 930 is shown inserted into the receiver tube 920 and may be fastened in the receiver tube 920 with a connecting pin (not shown). As described below, the drawbar 930 is the connection member between the tow coupling apparatus and the towed vehicle (e.g., trailer), and thus is a force-transmitting member that can be monitored by use of the load sensor pins 8, 9 as previously described.

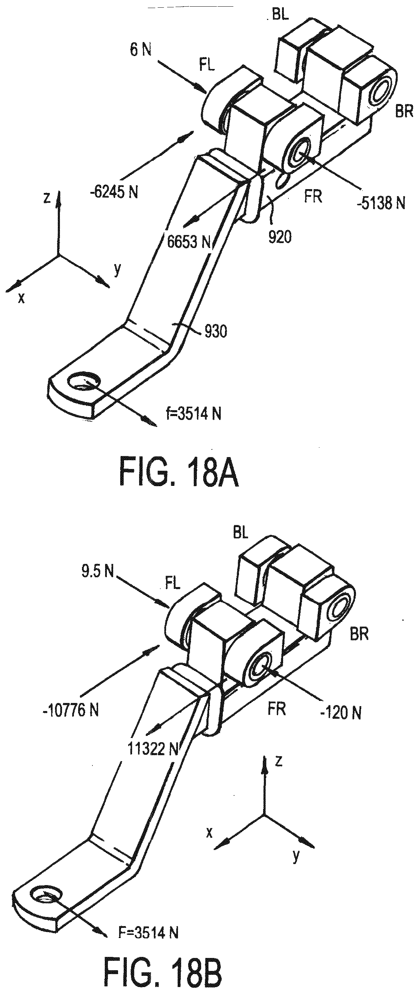

In particular, FIG. 18A is a simplified, partial, perspective view diagram of some of the components of the tow coupling apparatus of FIG. 14 showing a first load case in which a force is applied to the proximate or free end of the drawbar 930 (i.e., the end closest to the viewer). This applied force will be transmitted to the distal or pinned end of the drawbar 930 inside the receiver tube 920. That is, the force corresponding to the transmitted force at the distal end of the drawbar 930 by the towed vehicle may be transmitted to the receiver tube 920. That force then acts on the bracket 902 attached to the receiver tube 920. As the bracket 902 displaces the load sensor pins 8, 9 (the ends of which are rigidly attached to the adapter 904), the sheer force causes the magneto-elastically active portions 140a, 140b to output a magnetic field that is detectable by magnetic field sensors 914a, 914b.

For example, assume a force is applied to the proximate end of the drawbar 930 in the direction shown. In this embodiment, the force transmitted to the back load sensor pin 9 may be determined with respect to the adapters 904-2, 904-4. The output signals from the magnetic field sensors associated with the load sensor pin 9 may be received in a suitable algorithm, for example one that is embedded on a circuit board having a suitable processor located inside the load sensor pin 9, or in a separate module 980 (FIG. 12A) that could be integrated into the towing vehicle electronics. The received output signals from the load sensor pin 9 (and from the load sensor pin 8) may be indicative of the magnetic field/flux exhibited by the load sensor pins, and thus may be used to determine that a force has vector components of 6653 N in the x-direction and -5138 N in the y-direction (associated with the x-y-z Cartesian coordinate system shown). Moreover, the received output signals may be further used to determine that the other force vector components are -6245 N in the x-direction and 6 N in the y-direction as shown. The algorithm/processor may compute that the force applied to the proximate end of the drawbar 930 has a magnitude of 3514 N and is applied in the direction shown (i.e., toward the right or in the y-direction). The table below indicates the forces that may be determined as a result of forces transmitted to the load sensor pins 8, 9.

TABLE 1

| Force Vectors on Adapters | | Front Reaction (N) | Joint Probe (N) | Total (N) |
|---|---|---|---|---|
| 904-1 | x | 5387.6 | 0 | 5387.6 |
| | y | 6.3344 | 0 | 6.3344 |
| | z | -2082.9 | -1012.4 | -3095.3 |
| 904-3 | x | -5513.2 | 0 | -5513.2 |
| | y | 1641.7 | -29.643 | 1612.057 |
| | z | 4731.4 | -1772.6 | 2958.8 |
| 904-2 | x | 6652.6 | 0 | 6652.6 |
| | y | -5018.3 | -119.39 | -5137.69 |
| | z | 399.02 | -5634.6 | -5235.58 |
| 904-4 | x | -6245.6 | 0 | -6245.6 |
| | y | 5.6106 | 0 | 5.6106 |
| | z | 2745.4 | 2626.7 | 5372.1 |

The information about the applied force at the proximate end of the drawbar 930, and related information (such as a result of a comparison of the force computation to a pre-determined force threshold or limit value), may be provided to the towing vehicle for any number of useful purposes, such as displaying the information and/or related information to the vehicle operator or as input to a vehicle system such as a braking system, a stability system, a transmission system, a trailer backing system, or an engine controller system.

Turning now to FIG. 18B, shown therein is another simplified, partial, perspective view diagram of some of the components of the tow coupling apparatus of FIG. 14 showing a different load case as summarized in the following table.

TABLE 2

| Force Vectors on Adapters | | Front Reaction (N) | Joint Probe (N) | Total (N) |
|---|---|---|---|---|
| 904-1 | X | 9285.7 | 0 | 9285.7 |
| | y | -3343 | 0 | -3343 |
| | z | -2947.5 | -1493.6 | -4441.1 |
| 904-3 | X | -9282.6 | 0 | -9282.6 |
| | y | 5.0979 | -65.01 | -59.9121 |
| | Z | 5260.1 | -1087.9 | 4172.2 |
| 904-2 | X | 11322 | 0 | 11322 |
| | y | 8.541 | -128.91 | -120.369 |
| | z | 893.49 | -5098.8 | -4205.31 |
| 904-4 | X | -10776 | 0 | -10776 |
| | y | 9.5836 | 0 | 9.5836 |
| | z | 2265.8 | 2208.5 | 4474.3 |

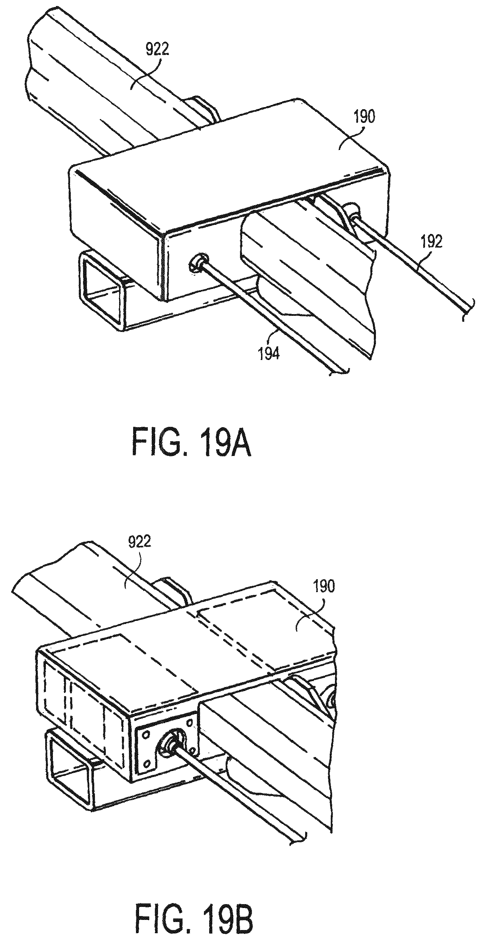

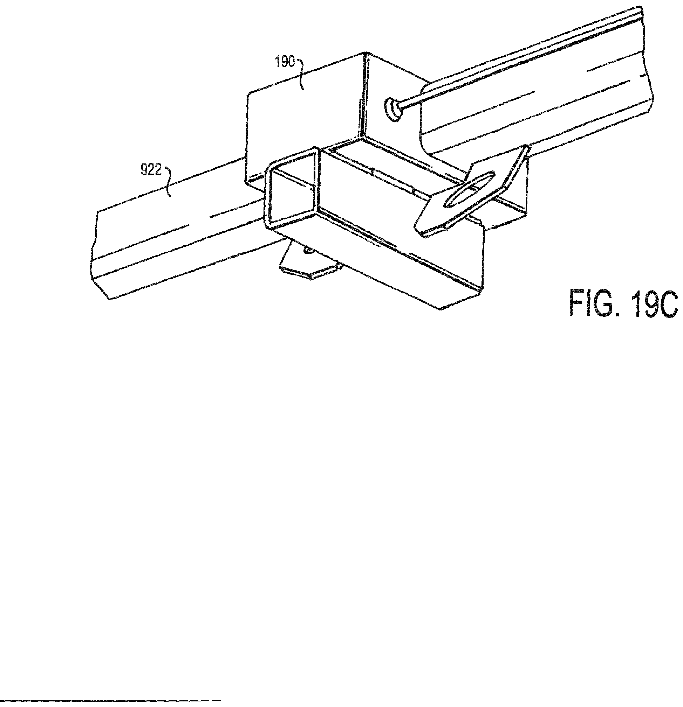

Turning now to FIG. 19A, FIG. 19B, and FIG. 19C, shown therein are simplified, partial, perspective view diagrams of the vehicle tow coupling apparatus of FIG. 14 in which a shielding device 190 is used to surround the load sensor pins 8, 9 for shielding the magneto-elastically active portions 140a, 140b and the magnetic field sensors 914a, 914b from external magnetic fields. The shielding device 190 is preferably made from or utilizes highly magnetically permeable materials to conduct external magnetic fields away from the load sensor pins 8, 9. The shielding device 190 provides openings for sheathed cables 192, 194, which connect the electronics of the load sensor pins 8, 9 to external circuits, to pass through the shielding device 190. In case of an AC near field source, even a thin metal shielding device 190 is able to provide good shielding. An external AC magnetic field will create eddy currents inside of the shield material, which in turn will create a magnetic field that opposes the incident field, thereby cancelling the incident field. The shielding material may be magnetic or non-magnetic but should have a high electric conductivity.

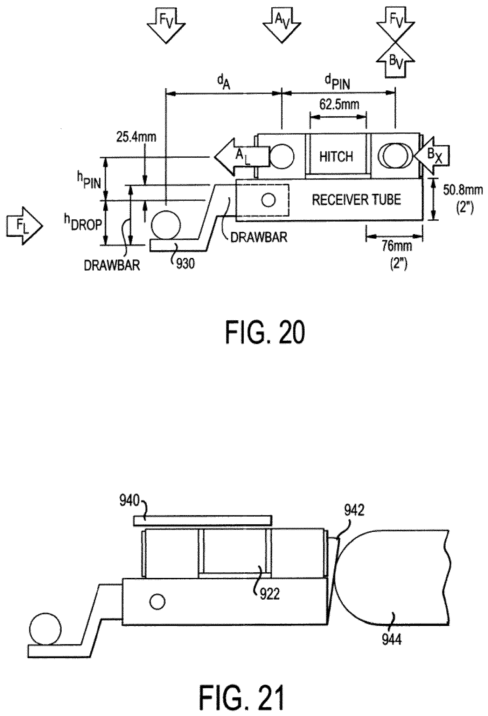

Turning now to FIG. 20, shown therein is a simplified, side view diagram of the tow coupling apparatus of FIG. 14 showing another load case. In particular, a drawbar 930 with a ball-style hitch (typically welded or bolted to the proximate or free end of the drawbar 930) is shown inserted in the receiver tube 920 and held in place with a fastening pin (other devices for connecting the drawbar and receiver are also contemplated). The large arrows indicate the forces that might act on the assembled tow coupling apparatus in the plane of the diagram (x-z plane, assuming the y-direction is out of the page).

An algorithm (such as in the form of embedded software in/on the load sensor pins 8,9 or in the separate module 980 (FIG. 12A)) may utilize values for the following variables (all linear dimensions are measured along the x- or z-direction as shown):

TABLE 3

| Variable/Parameter | Type/Description |
|---|---|
| Load sensor pin, outer diameter | Length (mm) |
| Load sensor pin, inner diameter | Length (mm) |
| Load sensor pin, width overall | Length (L) (mm) |
| Load sensor pin, height | Length ($h_{pin}$s) (mm) |
| Drawbar drop | Length (mm) |
| Drawbar drop height | Length (h drop (mm)) |
| Distance to back load sensor pin 9 | Length (dA) (mm) |
| Distance between load sensor pins | Length ($d_{pin}$s) (mm) |
| Drawbar fastening pin hole size, diameter | Length (mm) |
| Distance between the end of the drawbar and the drawbar fastening pin hole | Length (mm) |
| Distance between the coupling point (ball) and the drawbar fastening pin hole | Length (mm) |
| Distance of the material between the two load sensor pins | Length (mm) |
| Distance from the back load sensor pin to the back end of the tow coupling apparatus | Length (mm) |
| Distance between the drawbar fastening pin hole and the front load sensor pin | Length (mm) |

Inputs associated with each of the above variables will be processed by the aforementioned processor which executes software algorithms that are embedded in/on the memory or storage device on the printed circuit boards 304, 604 of the 5 load sensor pins 8, 9, or that are embedded in/on a printed circuit board of the separate module 980 outside the load sensor pins 8, 9. The inputs are used in at least the following equations:

$$(1) \quad \sum F_L = 0 :$$

$$(2) \quad F_L - A_L = 0$$

$$(3) \quad \sum F_V = 0 :$$

$$(4) \quad F_V + A_V - B_V = 0$$

$$(5) \quad \sum M_A = 0$$

$$(6) \quad B_V \cdot d_{Pins} + F_V \cdot d_A + F_L \cdot (h_{Pins} + h_{Drop}) = 0$$

$$(7) \quad A_L = F_L$$

$$(8) \quad A_V = -F_V + B_V$$

$$(9) \quad B_V = \frac{-F_V \cdot d_A - F_L \cdot (h_{Pins} + h_{Drop})}{d_{Pins}}$$

In one embodiment, the software computes a tongue force (F-tongue), tow force (F-tow), and a sway force (F-sway) according to industry-specific and federal specifications, such as those of Ultimate Load (per SAE J684 for Hitch Test Loads), and Ultimate Loads (per SAE J684 Strength Test Loads for Balls and Trailer couplings). Other methods and standards may also be used, including those for other countries/regions (e.g., European Union).

In another embodiment, the embedded software may be used to receive signals from various other sensors (not shown) and output a signal containing information useful in determining or assessing a load weight gauge (measuring the tongue load of a coupling between the tow and towing vehicles), a tow load weight shift alert, an unsafe towed vehicle load distribution alert, a towing vehicle limit notification, an automated towed vehicle brake control (closed loop) signal, a low/flat towed vehicle tire notification, a check towed vehicle brake notification, a closed loop braking control, a towing vehicle shift control, a towing vehicle engine control, and a towing vehicle stability control.

In still another embodiment, the software may provide a signal corresponding to a value in a pre-determined output range (provided in, e.g., N and lb), an ultimate or maximum load weight carrying output (provided in, e.g., N and lb), and an ultimate or maximum ball load and trailer hitch output (also in, e.g., N and lb).

Additional software inputs may include load sensor pin outer diameter, inner diameter, wall thickness, free length L, and sheer points (all in millimeters). Calculated stress values may include maximum sheer stress and bending stress, among others (all in N/mm2). A static safety factor may also be computed. Turning now to FIG. 21, shown therein is a simplified, side view diagram of a tow coupling apparatus and vehicle components. In particular, the tow coupling apparatus is mounted such that it does not interfere with a bumper step 940 (which is above the hitch tube 922) and spare tire 944 (which is behind the hitch tube 922, in some cases by only a few inches, such as 3 inches). Spare tires stored below a towing vehicle's body frame or other components are typically lowered to the ground by a cable and winch mechanisms (not shown), and can swing on the cable and potentially strike the tow coupling apparatus. To ensure that the spare tire 944 avoids striking the tow coupling apparatus upon being raised or lowered, an angled guide member 942 is positioned forward of the tow coupling apparatus and between the tow coupling apparatus and the spare tire 944 as shown.

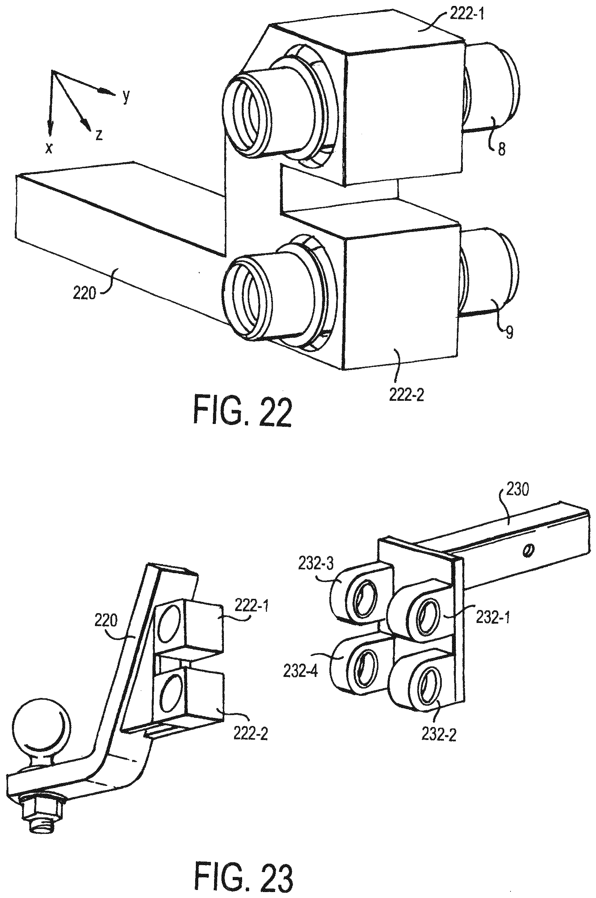

Turning now to FIG. 22 through FIG. 27, shown therein are simplified, schematic, exploded, perspective and plan view diagrams of another tow coupling apparatus for coupling a towing vehicle to a towed vehicle. FIG. 22 is a simplified, perspective view diagram of one component of a tow coupling apparatus showing upper and lower load sensor pins 8, 9 for use with a towed vehicle coupler 220, which mates with a towing vehicle coupler 230. In the embodiments shown, the load sensor pins 8, 9 are arranged generally vertically (along z-axis) with respect to each other (as compared to, for example, the embodiments of FIG. 13 and FIG. 14, in which the load sensor pins 8, 9 are arranged horizontally (along x-axis)). The two load sensor pins 8, 9 are positioned in the towed vehicle coupler 220 in respective upper and lower brackets 222-1, 222-2, with or without bushings. The towing vehicle coupler 230 includes four adapters 232-1, 232-2, 232-3, 232-4 such that the through-holes on the upper bracket 222-1 are axially aligned with the through-holes of the adapters 232-1, 232-2, and the through-holes on the lower bracket 222-2 are axially aligned with the through-holes of the adapters 232-3, 232-4.

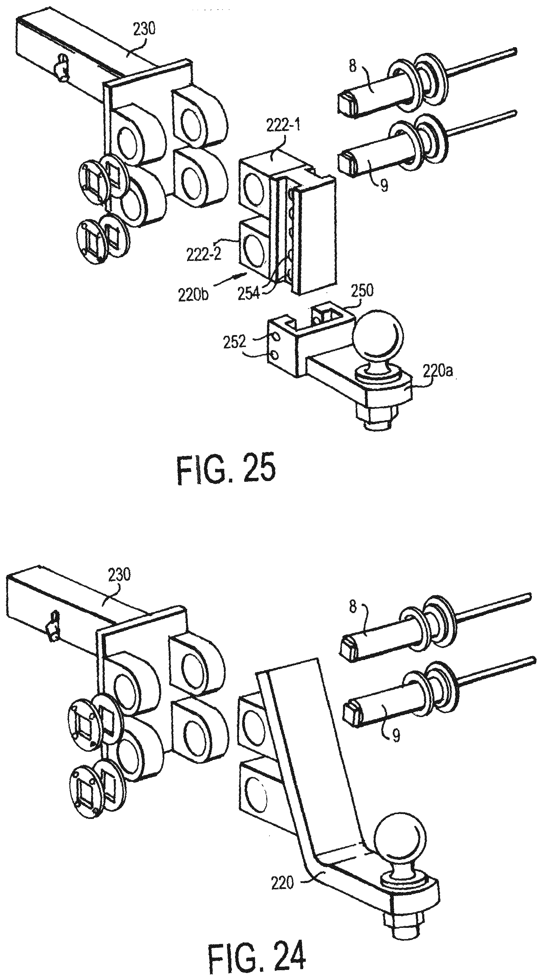

When aligned, the load sensor pins 8, 9 may be rigidly fixed in the through-holes, such that the couplers 220 and 230 may be coupled together as illustrated in FIG. 24.

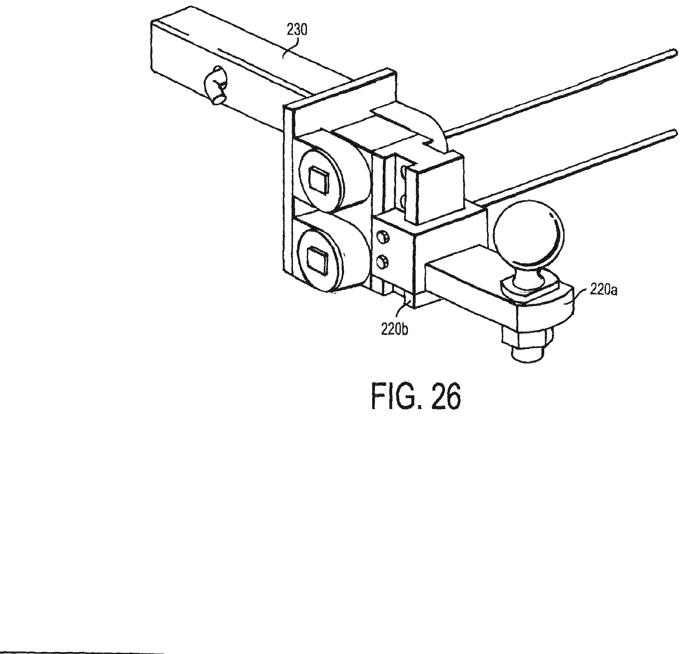

In FIG. 25, the towed vehicle coupler 220 is modified such that it includes a hitch part 220a having a bracket 250 and through-holes 252, and a coupler part 220b having through-holes 254. The through-holes 252, 254 permit a user to vertically adjust (z-axis) the relative position of the hitch part 220a and the coupler part 220b with respect to each other (a fastening pin, not shown, is inserted into the through-holes 252, 254, once they are axially aligned). When the hitch part 220a, couplers part 220b, and towing vehicle coupler 230 aligned, the load sensor pins 8, 9 may be rigidly fixed in the through-holes, such that the tow coupling apparatus may be coupled together as illustrated in FIG. 26.

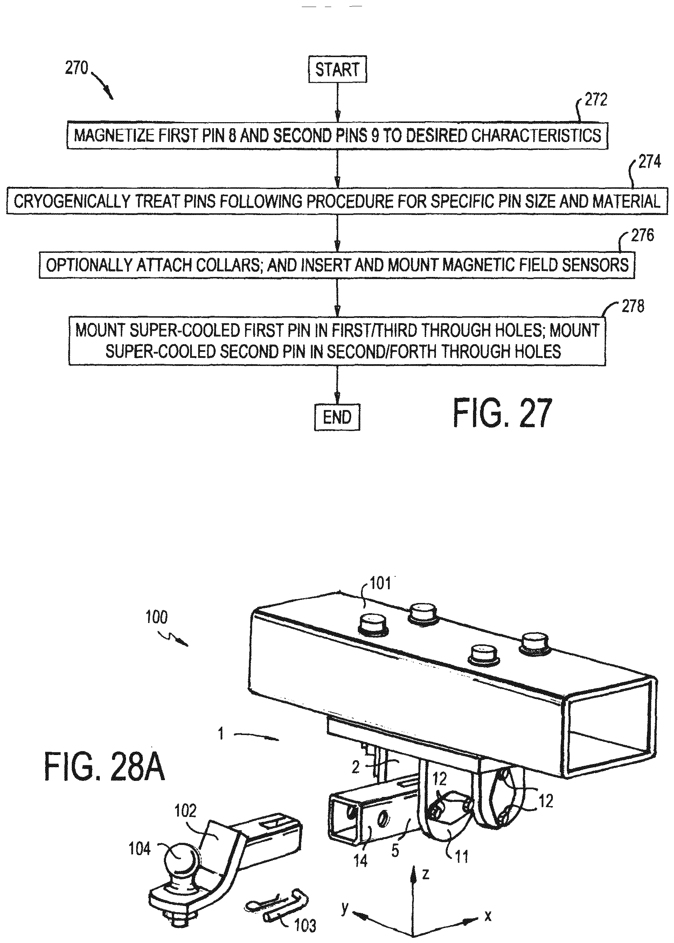

Turning now to FIG. 27, shown therein is a simplified, process flow diagram 270 describing a method for rigidly fixing the load sensor pins 8, 9 inside the brackets and adapters as shown and described above. As an initial step, the load sensor pins 8, 9 are first received along with the various tow coupling apparatus components. With reference to FIG. 13, for example, these would include providing a bracket 902 attached to a receiver tube 920, and a generally U-shaped adapter 904 attached to a hitch tube 922.

In a first treatment step 272, the first magneto-elastically active region 21 and the second magneto-elastically active region 22 of the load sensor pins 8, 9 are each directly or indirectly attached to or form respective parts of the load sensor pins 8, 9, such that the load sensor pins 8, 9 will have the characteristics previously described (the magneto-elastic properties are described in more detail in the aforementioned Applicant's patents incorporated by reference).

In a second treatment step 274, when it is desired for the load sensor pins 8, 9 to have one or more collars (not shown) around all or a portion of the end portions 130a, 130b of the load sensor pins 8, 9, the collars are arranged such that the positions of the one or more collars substantially correspond to one or more of the positions of the through-holes 924-1, 924-2 on the side wall 904b of the bracket 904, and through-holes 924-3, 924-4 on the side wall 904a of the bracket 904. Also, when it is desired for the bracket 902 and adapter 904 to be configured in such a way as to provide a gap therebetween, a gap material may be inserted.

In the next step 276, the load sensor pins 8, 9, and when necessary the collars/bushing 906a, 906b, 906c, 906d, 908a, 908b, 908c, 908d (as best seen in FIG. 9), may be cryogenically treated to reduce their cross-section dimension to permit inserting in the respective through-holes.

In the next step 278, respective printed circuit board 304, 604 with magnetic field sensors are mounted or arranged proximate to the magneto-elastically active portion 140a, 140b either before or after the load sensor pins 8, 9 are treated and positioned in the respective through-holes after being treated.

In a next step, the cryogenically treated load sensor pins 8, 9, and the various tow coupling apparatus components described above are all aligned. The load sensor pins 8, 9 are then inserted and the load sensor pins 8, 9 and other components are allowed to return to ambient temperature. The cryogenic treatment process may be conducted in conjunction with (such as following) a heat treatment process performed on the load sensor pins 8, 9. Both treatment processes are performed in a manner such that crystalline changes following magnetization of the load sensor pins 8, 9 is avoided.

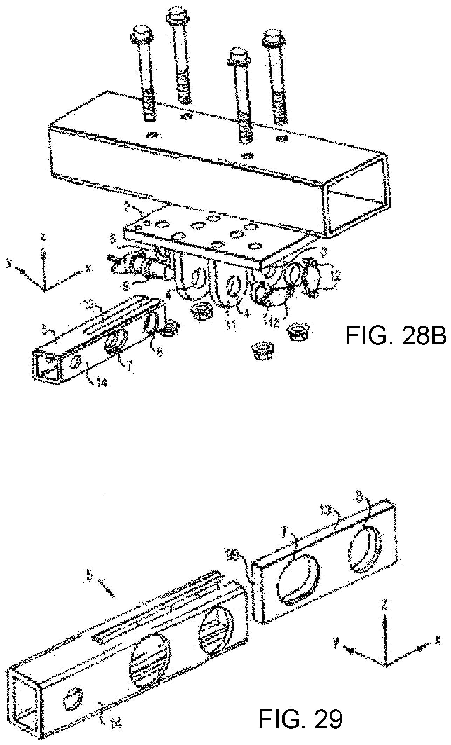

Turning now to FIG. 28A and FIG. 28B, shown therein are simplified, partial, exploded, perspective view diagrams of another type of vehicle tow coupling apparatus 100 incorporating the load sensor pins 8, 9. The tow coupling apparatus 100 includes a sensor assembly 1 for force sensing. The sensor assembly includes a first portion 2 (supporting yoke) having a first through-hole 3 and a second through-hole 4, a second portion 5 (receiving tube) having a third through-hole 6 and fourth through-hole 7. The third and fourth through-holes 6, 7 are positioned in correspondence to the first and second through-holes 3, 4.

The second portion defines a Cartesian coordinate system having a longitudinal x- axis direction, a transversal y-axis direction, and a vertical z-axis direction. The longitudinal direction extends in the direction of longitudinal extension of the second portion. The transversal direction extends in a direction perpendicular to the longitudinal direction and in a horizontal plane. The vertical direction extends in a direction that perpendicular to the longitudinal direction and the transversal direction.

The sensor assembly 1 further includes a first load sensor pin 8 and a second load sensor pin 9. The load sensor pin 8 is arranged such that it extends through the first and third through-holes 3, 6. The load sensor pin 9 is arranged such that it extends through the second and fourth through-holes 4, 7. The first portion 2 is coupled to the second portion 5 via the first and second load sensor pins 8, 9.

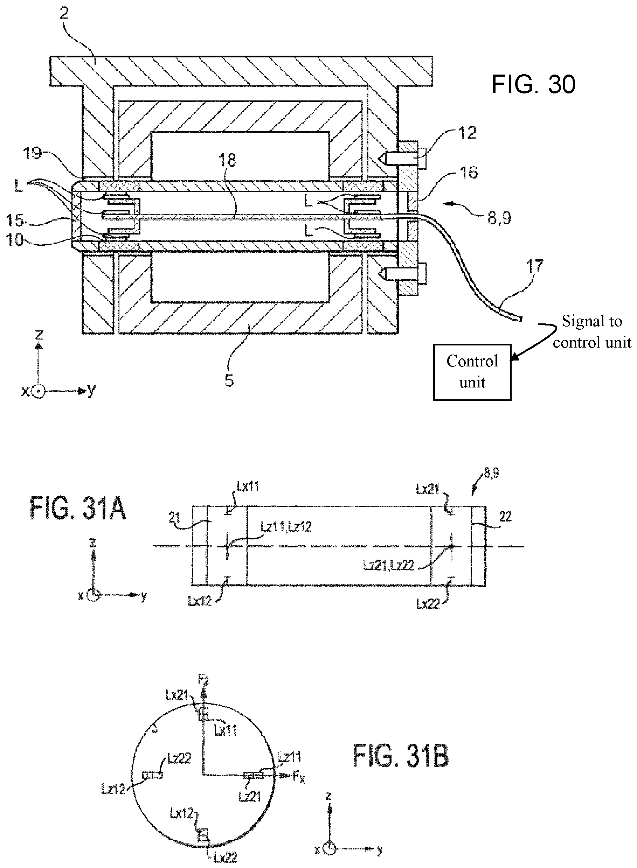

At least one out of the first and the second load sensor pin 8, 9 includes at least one magneto-elastically active region 10 (as shown in FIG. 30) that is directly or indirectly attached to or forms a part of the load sensor pin 8, 9 in such a manner that mechanic stress of the load sensor pin 8, 9 is transmitted to the magneto- elastically active region 10. The magneto-elastically active region 10 includes at least one magnetically polarized region such that a polarization of the polarized region becomes increasingly helically shaped as the applied stress increases.

The at least one load sensor pin 8, 9 further includes a magnetic field sensor means arranged approximate the at least one magneto-elastically active region 10 for outputting a signal corresponding to a stress-induced magnetic flux emanating from the magnetically polarized region.

The magnetic field sensor means includes at least one direction sensitive magnetic field sensor L. The at least one direction sensitive magnetic field sensor is configured for determination of a shear force in at least one direction. The at least one direction sensitive magnetic field sensor L is in particular arranged to have a predetermined and fixed spatial coordination with the respective load sensor pin 8, 9.

The load sensor pin 8, 9 includes the at least one direction sensitive magnetic field sensor L is at least partially hollow. The at least one direction sensitive magnetic field sensor L is arranged inside the interior of the pin 8, 9.

The first through-hole 3 and the third through-hole 6 are configured such that they encompass the first load sensor pin 8 in a positive-fitting manner. In other words, the first load sensor pin 8 extends through the first and third through-holes 3, 6, and the first load sensor pin 8 is supported in at least two rotational degrees of freedom and at least two translational degrees of freedom by abutting surfaces of the through-holes.

The second load sensor pin 9 is encompassed by the second through-hole 4 in a positive-fitted manner. In other words, the second load sensor pin 9 extends through the second through-hole 4, and the second load sensor pin 9 is supported in at least two rotational degrees of freedom and at least two translational degrees of freedom by abutting surfaces of the second through-hole 4.

The fourth through-hole 7 is configured such that the second load sensor pin 9 has one additional degree of freedom of movement (compared to the first load sensor pin 8 in the third through-hole 6) within the fourth through-hole 7. Differently stated, the second load sensor pin 9 extends through fourth through-hole 7, and the second load sensor pin 9 is supported in at least two rotational degrees of freedom and at least one translational degree of freedom by abutting surfaces of the through-holes. The number of translational degrees of freedom of the second load sensor pin 9 in the fourth through-hole 7 is one more than the number of translational degrees of freedom of the first load sensor pin 8 the third through-hole 6.

The additional degree of freedom is a translational degree of freedom that extends in the longitudinal x-axis direction.

The first portion 2 has a yoke-like shape, wherein yoke legs 11 of the first portion comprise the first through-hole 3 and second through-hole 4. The second portion 5 has a tubular shape, wherein side walls and/or a center wall of the second portion 5 comprise the third through-hole 6 and the fourth through-hole 7.

The direction sensitive magnetic field sensor is (or the direction sensitive magnetic field sensors are) configured to detect force components of shear forces introduced into the load sensor pins 8, 9 by the first portion 2 and the second portion 5.

The first and/or second load sensor pin 8, 9 is fixedly attached (in all six degrees of freedom in a predetermined manner to the first portion 2. Bolts 12 screw the load sensor pins 8, 9 (via attachment flanges of the pins) to yoke legs 11 of the first portion 2.

The second portion 5 includes a center wall 13 extending in the longitudinal x-axis direction and the vertical z-axis direction, the third through-hole 6 and fourth through-hole 7 extend through the center wall 13 (as best seen in FIG. 29).

The first portion 2 has a yoke-like shape, wherein the yoke legs 11 of the first portion 2 comprise the first and second through-holes 3, 4, and wherein the center wall includes the third and fourth through-holes 6, 7.

Direction sensitive magnetic field sensor(s) L is/are configured to detect force components of shear forces introduced into the load sensor pins 8, 9 by the first portion 2 and the second portion 5.

Side walls 14 of the second portion 5 comprise through-holes in side walls that are larger than the third and fourth through-holes 6, 7, such that the shear forces are introduced into the load sensor pins 8, 9 by abutment surfaces of the first and second through-holes 3, 4 in the yoke legs 11 and abutment surfaces of the third and fourth through-holes 6, 7 in the center wall 13.

The tow coupling apparatus 100 includes the sensor assembly 1. The first portion 2 is a tow coupling apparatus that is attached to a hitch tube 101 of a towing vehicle.

The second portion 5 is a receiving tube that is configured to receive a drawbar 102 (hitch bar, ball mount) of the tow coupling apparatus 100. The drawbar 102 can be partially inserted into the second portion 5. A pin 103 secures the drawbar 102 to the second portion 5.

Turning now to FIG. 30, shown therein is a simplified, cross-sectional view diagram of another tow hitch sensor assembly including first and second load sensor pins 8, 9 extend through the first through-hole 3 and the second through-hole 4 in the first portion 2 and through the third through-hole 6 and the fourth through-hole 7 in the second portion 5. The first and/or second load sensor pins 8, 9 is an at least partially hollow pin that may be sealed by a front cover 15 and a rear cover 16. The rear cover 16 may provide a cable bushing to provide access for supply and/or signal lines 17. The load sensor pins 8, 9 include a plurality of direction sensitive field sensors L. A printed circuit board 18 supports the direction sensitive field sensors L. The load sensor pins 8, 9 can include one or more collars 19 of comparatively low magnetic permeability (compared to the hollow shaft of the load sensor pins 8, 9) arranged such that the positions of the one or more collars 19 substantially correspond to one or more of the positions of the through-holes 3, 4, 6, 7 in the first and/or second portion. Alternatively, one or more of the through-holes 3, 4, 6, 7 can comprise a collar/bushing 19 of comparatively low magnetic permeability (compared to the hollow shaft of the load sensor pins 8, 9). The first portion 2 and the second portion 5 may be configured to provide a gap between the first portion 2 and the second portion 5. The gap may comprise a material of low magnetic permeability (compared to the hollow shaft of the load sensor pins 8, 9).

Turning now to FIG. 31A and FIG. 31B, shown therein are a simplified, partial, cross-sectional plan and end view diagrams of another configuration of the load sensor pins 8, 9 as used in, for example, the tow coupling apparatus of FIG. 30. The first and/or the second load sensor pin 8, 9 includes at least one respective first x-axis direction sensitive magnetic field sensor $Lx_{11}$, $Lx_{12}$ configured to detect a force component $Fx_1$ in the first magneto-elastically active region 21 in the longitudinal x-axis direction. The first and/or the second load sensor pins 8, 9 includes at least one respective second x-axis direction sensitive magnetic field sensor $Lx_{21}$, $Lx_{22}$ configured to detect a force component $Fx_2$ in the second magneto-elastically active region 22 in the longitudinal x-axis direction. The first and/or the second load sensor pins 8, 9 includes at least one respective first z-axis direction sensitive magnetic field sensor $Lz_{11}$, $Lz_{12}$ configured to detect a force component $Fz_1$ in the first magneto-elastically active region 21 in the vertical x- axis direction. The first and/or the second load sensor pins 8, 9 includes at least one second z-axis direction sensitive magnetic field sensor $Lz_{21}$, $Lz_{22}$ configured to detect a force component $Fz_2$ in the second magneto-elastically active region in the vertical z-axis direction.

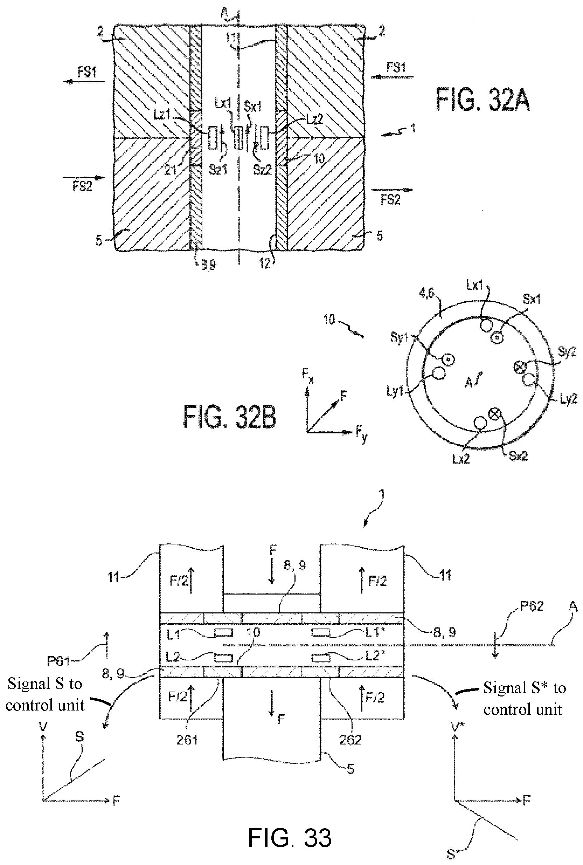

The sensor means includes at least four magnetic field sensors L having a first to fourth sensing direction, wherein the sensing directions and a shaft axis A (FIGS. 32A and 32B) are at least substantially parallel to each other. The first to fourth magnetic field sensors are arranged along the circumference of the load sensor pin 8, 9 having substantially equal distances in circumferential direction between each other.

The at least one magneto-elastically active regions 21, 22 project along a circumference of the respective load sensing pin 8, 9, wherein the regions are magnetized in such a way that the domain magnetizations in the magnetically polarized regions 21, 22 are in a circumferential direction of the member.

Turning now to FIG. 32A and FIG. 32B, shown therein are simplified, partial, axial, cross-sectional view diagrams of a load sensor pin 8, 9 for use in a tow coupling apparatus, in which a sensor assembly 1 has a first portion 2 coupled to a second portion 5 via the load sensor pins 8, 9. The first portion 2, which may correspond to the adapter 904, is subject to a first shear force FS1 pointing to the left. The second portion 5, which may correspond to the bracket 902, is exposed to a second and opposite shear force FS2, pointing to the right. The load sensor pin 8, 9 includes a magneto-elastically active region 21, which is arranged at the transition between the first and the second portion 2, 5. Consequently, the active region 21 is subject to shear forces causing the magnetic flux emanating from the magnetically polarized region of said active region 21 to become increasingly helically shaped, when the shear forces FS1, FS2 increase. The sensor means of the load sensor pins 8, 9 includes four direction sensitive magnetic field sensors Lx1, Lx2, Lz1, Lz2 being arranged along the inner circumference of the load sensor pin 8, 9.

The first direction sensitive sensor Lx1 and the third direction sensitive sensor Lx2 form a first group of magnetic field sensors.

The second group of sensors consists of the second direction sensitive sensor Lz1 and the fourth direction sensitive sensor Lz2.

The sensing direction Sx1 of the first sensor Lx1 is 180 degrees opposite to the third sensing direction Sx2 of the third sensor Lx2.

The first sensing direction Sx1 points out of the paper plane, the third sensing direction Sx2 points into the paper plane.

Similar to the first group of sensors Lx1, Lx2, the second sensing direction Sz1 and the fourth sensing direction Sz2 are 180 degrees opposite to each other.

The second and fourth sensor Lz1, Lz2 are arranged accordingly.

As it is indicated using the commonly known direction signs, the second sensing direction Sz1 points out of the paper plane while the fourth sensing direction Sz2 is directed into the paper plane.

The second sensor Lz1 (having the second sensing direction Sz1) and the fourth sensor Lz2 (having the fourth sensing direction Sz2) are shown.

The first sensor Lx1 and the first sensing direction Sx1 are shown solely for clarification of the configuration of the sensors. Naturally, the first sensor Lx1 is not arranged in a common plane with the second and fourth sensor Sz1, Sz2.

FIG. 32B shows a simplified cross section of a load sensor pin 10 according to another embodiment, which includes a first or upper member 11, which is coupled to a second or lower member 12 via the shaft like member 4. The upper member 11 is subject to a first shear force FS1 pointing to the left. The lower member 12 is exposed to a second and opposite shear force FS2, pointing to the right. The shaft like member 4 includes an active region 6, which is arranged at the transition between the upper and lower member 11, 12. Consequently, the active region 6 is subject to shear forces causing the magnetic flux emanating from the magnetically polarized region of said active region 6 to become increasingly helically shaped, when the shear forces FS1, FS2 increase. The sensor means of the load sensor pin 10 includes four direction sensitive magnetic field sensors LX1, LX2, LY1, LY2 being arranged along the inner circumference of the shaft like member 4.

Turning now to FIG. 33, shown therein is a simplified, cross-sectional view diagram of some of the components of a tow coupling apparatus in which the first portion 2 surrounds the second portion 5, which is exposed to a force F. The load sensor pin 8, 9 intersects the first and the second portions 2, 5 along the shaft axis A. The load sensor pin 8, 9 includes a first magneto-elastically active region 261 and a second magneto-elastically active region 262. Similar to the other embodiments of the invention, these regions are directly or indirectly attached to or form a part of the load sensor pin 8, 9 in such a manner that the mechanic stress is transmitted to the active regions 261, 262. The active regions 261, 262 are magnetically polarized in opposite circumferential directions, P61, P62, which are substantially 180 degrees opposite to each other. Furthermore, the directions of polarizations are substantially perpendicular to the shaft axis A.

A first pair of magnetic field sensors comprising a first sensor L1 and a second sensor L2 arranged inside the load sensor pin 8, 9 in that this pair of sensors cooperates with the first active region 261. Similar, a second pair of magnetic field sensors comprising a first and a second sensor L1* and L2* arranged inside the load sensor pin 8, 9 so as to interact with the second active region 262. The sensors L1, L2 of the first pair and the sensors L1*, L2* of the second pair are arranged approximate the first and the second magneto-elastically active region 261, 262, respectively. The first sensor pair L1, L2 outputs a first signal S, which is illustrated as a voltage V varying with the applied force F in the lower left of FIG. 33. The signal S corresponds to a stress-induced magnetic flux emanating from the first magnetically polarized region 261.

Similarly, the second pair of magnetic sensors L1*, L2* outputs a second signal S* corresponding to a stress-

induced magnetic flux emanating from the second magnetically polarized region 262. This signal S* is also a voltage V* varying with the applied F (see lower right of FIG. 33). However, the slope of the second signal S* is opposite to that of the first signal S. A control unit (not shown) of the magnetoelastic sensor assembly is configured for determination of the force F inducing a stress in the load sensor pin 8, 9. The control unit performs a differential evaluation of the signals S and S* of the first pair of sensors L1, L2 and the second pair of sensors L1*, L2*. This differential evaluation advantageously doubles the sensitivity of the signal, which is correlated with the applied stress. Because the polarization P61 and P62 of the first and second magnetically active region 261, 262 is opposite to each other, theoretically possible external fields are compensated. The magneto-elastic sensor assembly according to this embodiment is more sensitive and less susceptible to errors.

Advantageously, all embodiments of the invention may be equipped with the sensor configuration of FIG. 33 having separate, oppositely polarized active regions 261, 262 and two corresponding sets i.e. pairs of sensors L1, L2 and L1*, L2*.

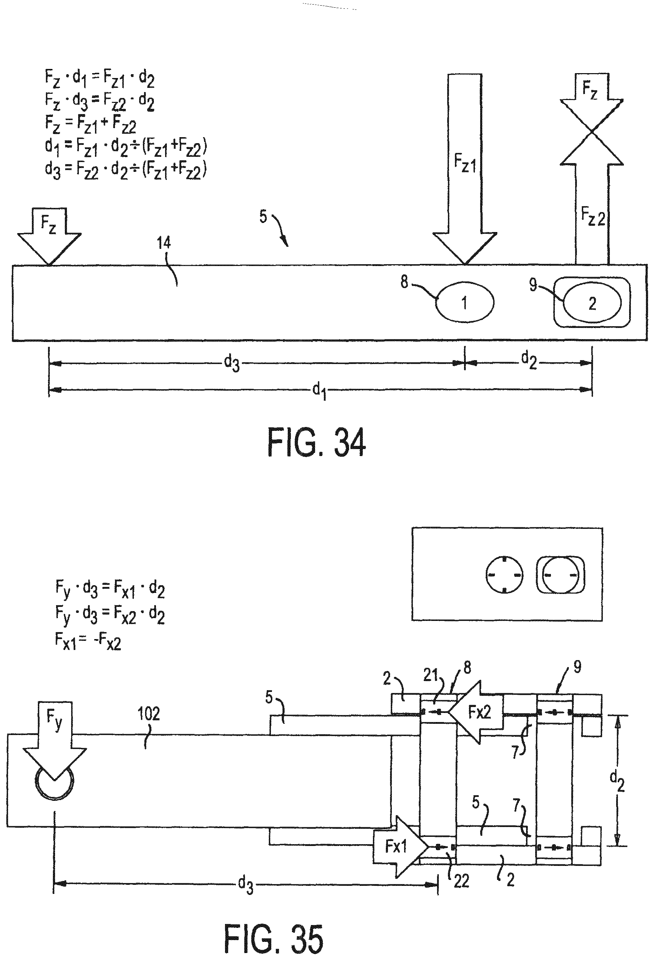

Furthermore, the embodiment of FIG. 8 may be equipped with the sensor configuration, which is known from the load pin in FIG. 31B. In other words, the sensor pairs L1, L2 and L1*, L2* may be replaced by a sensor configuration having four sensor pairs Lx11/Lx12, Lx21/Lx22, Lz11/Lz12, Lz21/Lz22. According to this particular embodiment of the invention, additional force vectors may be determined. Turning now to FIG. 34, shown therein is a simplified, side, plan view diagram of a portion of the vehicle tow coupling apparatus of FIGS. 28A and 28B showing a first simplified load case. In particular, shown therein are the forces associated with the simplified load case. A force F has a vertical force component Fz in the vertical z-axis direction. The force F is applied to the sensor assembly via the second portion 5, and more precisely via the ball coupling 104 of the drawbar 102. For determining the force component Fz the following set of equations are solved:

$$(10) \quad Fz^*d1 = Fz1^*d2$$

$$(11) \quad Fz^*d3 = Fz2^*d2$$

$$(12) \quad Fz = Fz1 + Fz2$$

$$(13) \quad d1 = Fz1^*d2/(Fz1 + Fz2)$$

$$(14) \quad d3 = Fz2^*d2/(Fz1 + Fz2)$$

Fz1 is a reaction force on the first load sensor pin 8, Fz2 is a reaction force on the second load sensor pin 9. Distance d2 is the distance between (the axes of) the first and the second load sensor pins 8, 9. Distance d 1 is the distance between the point of load (the ball coupling 104) and (the axis of) the second load sensor pin 9. Distance d3 is the distance between the point of load and (the axis of) the first load sensor pin 8. An algorithm for solving the above equations may be embedded in/on the memory of one of the aforementioned printed circuit board 304, 604.

Turning now to FIG. 35, shown therein is a simplified, top view diagram of a portion of a vehicle tow coupling apparatus showing another simplified load case. The force has a transversal force component Fy in the transversal y-axis direction applied to the sensor assembly 1 via the second portion 5, and more precisely via the ball coupling 104 of the drawbar 102. The fourth through-hole 7 provides a degree of freedom in the longitudinal x-axis direction. The transversal force component Fy creates a first reactive force Fx2 acting in the longitudinal x-axis direction on the first magneto-elastically active region 21 of the first load sensor pin 8, and a second reactive force Fx1 acting in the longitudinal x-axis direction on the second magneto-elastically active region 22 of the first load sensor pin 8. For determining the force component Fy, the following set of equations are solved:

$$(15) \quad Fy^*d3 = Fx1^*d2$$

$$(16) \quad Fy^*d3 = Fx2^*d2$$

$$(17) \quad Fx1 = -Fx2$$

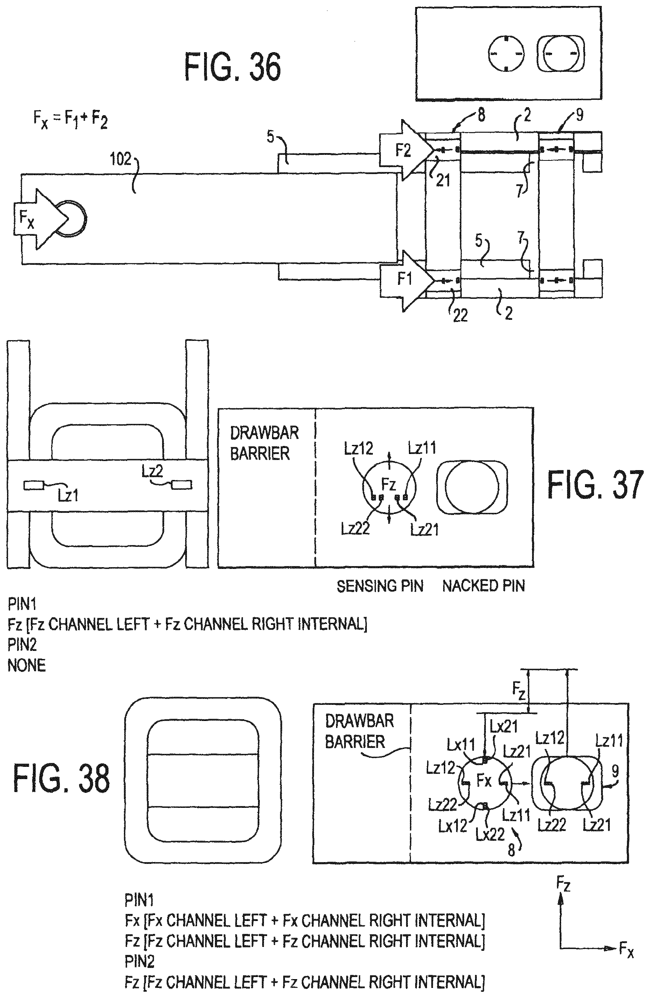

Turning now to FIG. 36, shown therein is a simplified, top view diagram of a portion of a vehicle tow coupling apparatus showing another simplified load case. In this case, the force has a longitudinal force component Fx in the longitudinal x-axis direction applied to the to the sensor assembly 1 via the second portion 5, and more precisely via the ball coupling 104 of the drawbar 102. The fourth through-hole 7 provides a degree of freedom in the longitudinal x-axis direction. The longitudinal force component Fx creates a first reactive force F2 acting in the longitudinal x-axis direction on the first magneto-elastically active region 21 of the first load sensor pin 8, and a second reactive force F1 acting in the longitudinal x- axis direction on the second magneto-elastically active region 22 of the first load sensor pin 8. For determining the force component Fx, the following equation is solved:

$$(18) \quad Fx = Fx1 + Fx2$$

Turning now to FIG. 37, shown therein is a simplified, cross-sectional end view and plan side view diagram of a vehicle tow coupling apparatus subject to a vertical load component, Fz of a load F. The first load sensor pin 8 includes a first magneto- elastically active region 21 and a second magneto-elastically active region 22 (as shown in FIG. 36) that are directly or indirectly attached to or form parts of the first load sensor pin 8 in such a manner that mechanic stress that is applied to the first load sensor pin 8 is transmitted to the magneto-elastically active regions 21, 22. Each magneto-elastically active region 21, 22 includes a magnetically polarized region. The magnetic polarization of the first magneto-elastically active region 21 and the magnetic polarization of the second magneto-elastically active region 22 can be substantially opposite to each other.

A magnetic field sensor means includes at least one first direction sensitive magnetic field sensor Lz11 being arranged approximate the first magneto- elastically active region for outputting a first signal corresponding to a stress-induced magnetic flux emanating from the first magnetically polarized region 21, and at least one second direction sensitive magnetic field sensor Lz21 being arranged approximate the second magneto-elastically active region 22 for outputting a second signal corresponding to a stress-induced magnetic flux emanating from the second magnetically polarized region 22.

The first load sensor pin 8 includes:

a) a first and a third z-axis direction sensitive magnetic field sensor Lz11, Lz12 configured to detect a force component Fz1 in the first magneto- elastically active region 21 in the vertical z-axis direction; and
b) a second and a fourth z-axis direction sensitive magnetic field sensor Lz21, Lz22 configured to detect a force component Fz2 in the second magneto-elastically active region in the vertical z-axis direction.

The second load sensor pin 9 is a naked pin, i.e. the pin has no magneto- elastically active region and no direction sensitive magnetic field sensors. Differently stated, the first load sensor pin 8 includes at least one first z-axis direction sensitive magnetic field sensor Lz11 and at least one second z-axis direction sensitive magnetic field sensor Lz21.

The first and second load sensor pins 8, 9 are rigidly fixed within the first and second through-holes 3, 4 of the first portion 2 (as shown in FIG. 36). The third and the fourth through-holes 6, 7 can provide a minimal gap between the abutment surfaces of the second portion 5 and the first and second load sensor pins 8, 9.

Turning now to FIG. 38, shown therein is a simplified, cross-sectional end view and plan side view diagram of a vehicle tow coupling apparatus subject to a vertical, transversal, and longitudinal load components of a load F. In this view, a first load sensor pin 8 includes a first magneto-elastically active region 21 and a second magneto-elastically active region 22, which are directly or indirectly attached to or form parts of the first load sensor pin 8 in such a manner that mechanic stress that is applied to the first load sensor pin 8 is transmitted to the magneto-elastically active regions 21, 22. Each magneto-elastically active region 21, 22 includes a magnetically polarized region. The magnetic polarization of the first magneto- elastically active region 21 and the magnetic polarization of the second magneto-elastically active region 22 can be substantially opposite to each other.

A magnetic field sensor means includes at least one first and third direction sensitive magnetic field sensor Lx11, Lz11 being arranged approximate the first magneto-elastically active region for outputting a first signal and a third signal corresponding to a stress-induced magnetic flux emanating from the first magnetically polarized region 21. The magnetic sensor means further includes at least one second and fourth direction sensitive magnetic field sensor Lx21, Lz21 being arranged approximate the second magneto-elastically active region 22 for outputting a second signal and a fourth signal corresponding to a stress-induced magnetic flux emanating from the second magnetically polarized region 22.

The first load sensor pin 8 may include:

a) a first and a third z-axis direction sensitive magnetic field sensor Lz11, Lz12 configured to detect a vertical force component Fz11 in the first magneto-elastically active region 21 in the z-axis vertical direction;
b) a second and a fourth z-axis direction sensitive magnetic field sensor Lz21, Lz22 configured to detect a vertical force component Fz12 in the second magneto-elastically active region in the z-axis vertical direction;
c) a first and a third x-axis direction sensitive magnetic field sensor Lx11, Lx12 configured to detect a longitudinal force component Fx2 in the first magneto-elastically active region 21 in the longitudinal x-axis direction; and
d) a second and a fourth x-axis direction sensitive magnetic field sensor Lx21, Lx22 configured to detect a longitudinal force component Fx1 in the second magneto-elastically active region in the longitudinal x-axis direction.

The second load sensor pin 9 may include:

a) a first and a third z-axis direction sensitive magnetic field sensor Lz11, Lz12 configured to detect a vertical force component Fz21 in the first magneto-elastically active region 21 in the vertical z-axis direction; and
b) a second and a fourth z-axis direction sensitive magnetic field sensor Lz21, Lz22 configured to detect a vertical force component Fz22 in the second magneto-elastically active region in the vertical z-axis direction;

Differently stated, the first load sensor pin 8 includes at least one first x-axis direction sensitive magnetic field sensor Lx11, at least one second x-axis direction sensitive magnetic field sensor Lx21, at least one first z-axis direction sensitive magnetic field sensor Lz11, and the at least one second z-axis direction sensitive magnetic field sensor Lz21. The second load sensor pin 9 includes at least one first z-axis direction sensitive magnetic field sensor Lz11 and at least one second z-axis direction sensitive magnetic field sensor Lz21.

As previously described, the first and second load sensor pins 8, 9 are rigidly fixed within the first and second through-holes 3, 4 of the first portion 2. The third and the fourth through-holes 6, 7 can provide a minimal gap between the abutment surfaces of the second portion 5 and the first and second load sensor pins 8, 9.

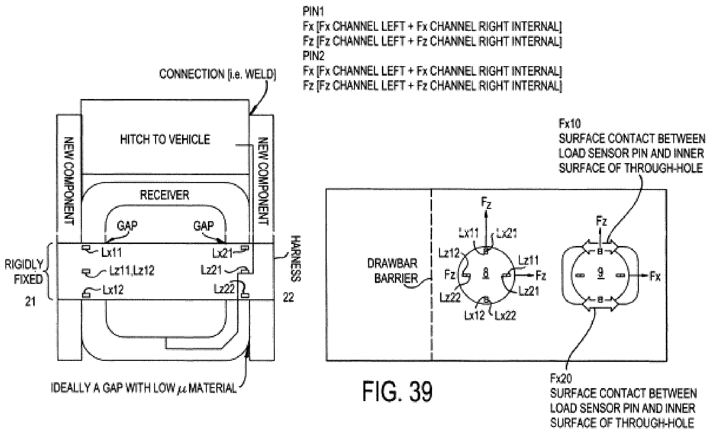

Turning now to FIG. 39, shown therein is another simplified, cross-sectional end view and plan side view diagram of a vehicle tow coupling apparatus subject to a vertical, transversal, and longitudinal load components of a load F. In this view, a first load sensor pin 8 includes a first magneto-elastically active region 21 and a second magneto-elastically active region 22, which are directly or indirectly attached to or form parts of the first load sensor pin 8 in such a manner that mechanic stress that is applied to the first load sensor pin 8 is transmitted to the magneto-elastically active regions 21, 22. Each magneto-elastically active region 21, 22 includes a magnetically polarized region. The magnetic polarization of the first magneto-elastically active region 21 and the magnetic polarization of the second magneto-elastically active region 22 can be substantially opposite to each other.

The magnetic field sensor means of this embodiment includes at least one first and third direction sensitive magnetic field sensor Lx11, Lz11 being arranged approximate the first magneto-elastically active region for outputting a first signal and a third signal corresponding to a stress-induced magnetic flux emanating from the first magnetically polarized region 21. The magnetic sensor means further includes at least one second and fourth direction sensitive magnetic field sensor Lx21, Lz21 being arranged approximate the second magneto-elastically active region 22 for outputting a second signal and a fourth signal corresponding to a stress-induced magnetic flux emanating from the second magnetically polarized region 22.

The first load sensor pin 8 includes:

a) a first and a third z-axis direction sensitive magnetic field sensor Lz11, Lz12 configured to detect a vertical force component Fz11 in the first magneto-elastically active region 21 in the vertical z-axis direction;
b) a second and a fourth z-axis direction sensitive magnetic field sensor Lz21, Lz22 configured to detect a vertical force component Fz12 in the second magneto-elastically active region in the vertical z-axis direction;
c) a first and a third x-axis direction sensitive magnetic field sensor Lx11, L12 configured to detect a longitudinal force component Fx2 in the first magneto-elastically active region 21 in the longitudinal x-axis direction; and
d) a second and a fourth x-axis direction sensitive magnetic field sensor Lx21, Lx22 configured to detect a longitudinal force component Fx1 in the second magneto-elastically active region in the longitudinal x-axis direction.

The second load sensor pin 9 includes:

a) a first and a third z-axis direction sensitive magnetic field sensor Lz11, Lz12 configured to detect a vertical force component Fz21 in the first magneto-elastically active region 21 in the vertical z-axis direction;
b) a second and a fourth z-axis direction sensitive magnetic field sensor Lz21, Lz22 configured to detect a vertical force component Fz22 in the second magneto-elastically active region 22 in the vertical z-axis direction;
c) a first and a third x-axis direction sensitive magnetic field sensor Lx11, L12 configured to detect a longitudinal force component Fx10 (force exerted by the load sensor pin 9 in contact with a top surface of the through-hole) in the first magneto-elastically active region 21 in the longitudinal x-axis direction; and
d) a second and a fourth x-axis direction sensitive magnetic field sensor Lx21, Lx22 configured to detect a longitudinal force component Fx20 (force exerted by the load sensor pin 9 in contact with a top surface of the through-hole) in the second magneto-elastically active region 22 in the longitudinal x-axis direction.

Therefore, the configuration of the second load sensor pin 9 is substantially similar to the configuration of the first load sensor pin 8. Differently stated, the first load sensor pin 8 includes at least one first x-axis direction sensitive magnetic field sensor Lx11, at least one the second x-axis direction sensitive magnetic field sensor Lx21, at least one first z-axis direction magnetic field sensor Lz11, and at least one second z-axis direction magnetic field sensor Lz21. The second load sensor pin includes at least one first x-axis direction sensitive magnetic field sensor Lx11, at least one second x-axis direction sensitive magnetic field sensor Lx21, at least one first z-axis direction magnetic field sensor Lz11, and at least one second z-axis direction magnetic field sensor Lz21.

The first and the second longitudinal force components Fx10, Fx20 are comparatively small (for example, resulting from friction between the abutment surface of the fourth through-hole 7 and the second load sensor pin 9) or substantially zero. This is a direct result of the additional translational degree of freedom in the longitudinal x-axis direction, which degree of freedom is provided by the fourth through-hole 7 in the second portion 5.

The first and second load sensor pins 8, 9 are rigidly fixed within the first and second through-holes 3, 4 of the first portion 2. The third and the fourth through- holes 6, 7 can provide a minimal gap between the abutment surfaces of the second portion 5 and the first and second load sensor pins 8, 9.

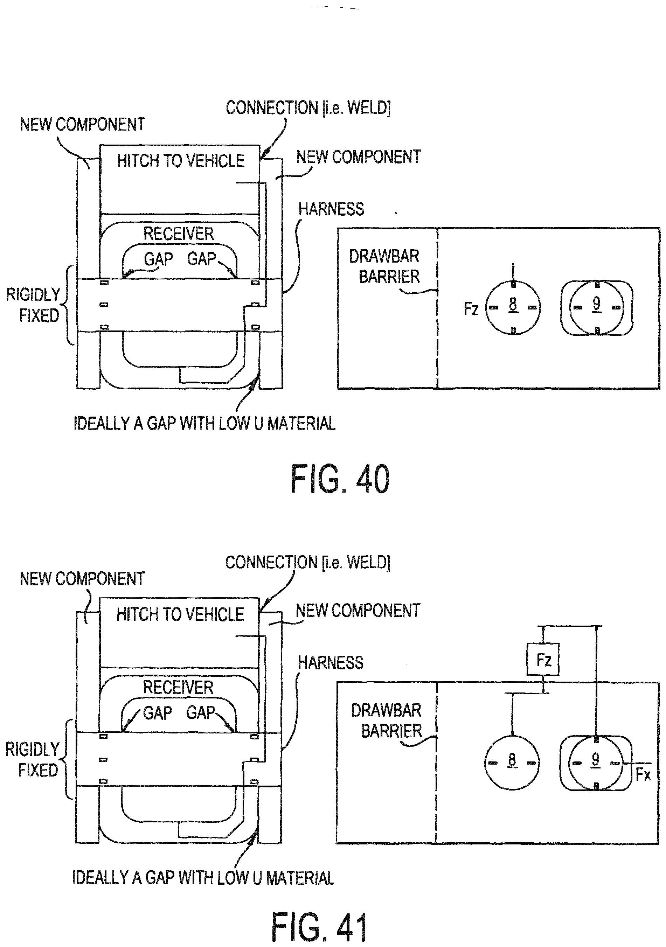

Turning now to FIG. 40, shown therein is a simplified, cross-sectional end view and plan side view diagram of a vehicle tow coupling apparatus subject to a vertical, transversal, and longitudinal load components of a load F. In this view, the first load sensor pin 8 includes a first magneto-elastically active region 21 and a second magneto-elastically active region 22, which are directly or indirectly attached to or form parts of the first load sensor pin 8 in such a manner that mechanic stress that is applied to the first load sensor pin 8 is transmitted to the magneto-elastically active regions 21, 22. Each magneto-elastically active region 21, 22 includes a magnetically polarized region. The magnetic polarization of the first magneto- elastically active region 21 and the magnetic polarization of the second magneto-elastically active region 22 can be substantially opposite to each other.

A magnetic field sensor means includes at least one first- and third-direction sensitive magnetic field sensor Lx11, Lz11 being arranged approximate the first magneto-elastically active region 21 for outputting a first signal and a third signal corresponding to a stress-induced magnetic flux emanating from the first magnetically polarized region 21. The magnetic sensor means further includes at least one second- and fourth-direction sensitive magnetic field sensor Lx21, Lz21 being arranged approximate the second magneto-elastically active region 22 for outputting a second signal and a fourth signal corresponding to a stress-induced magnetic flux emanating from the second magnetically polarized region 22.

The first load sensor pin 8 includes:

a) a first and a third z-axis direction sensitive magnetic field sensor Lz11, Lz12 configured to detect a vertical force component Fz11 in the first magneto-elastically active region 21 in the vertical z-axis direction;
b) a second and a fourth z-axis direction sensitive magnetic field sensor Lz21, Lz22 configured to detect a vertical force component Fz12 in the second magneto-elastically active region in the vertical z-axis direction;
c) a first and a third x-axis direction sensitive magnetic field sensor Lx11, L12 configured to detect a longitudinal force component Fx2 in the first magneto-elastically active region 21 in the longitudinal x-axis direction; and
d) a second and a fourth x-axis direction sensitive magnetic field sensor Lx21, Lx22 configured to detect a longitudinal force component Fx1 in the second magneto-elastically active region in the longitudinal x-axis direction.

The second load sensor pin 9 includes:

a) a first and a third z-axis direction sensitive magnetic field sensor Lz11, Lz12 configured to detect a vertical force component Fz21 in the first magneto-elastically active region 21 in the vertical z-axis direction;
b) a second and a fourth z-axis direction sensitive magnetic field sensor Lz21, Lz22 configured to detect a vertical force component Fz22 in the second magneto-elastically active region 22 in the vertical z-axis direction;
c) a first and a third x-axis direction sensitive magnetic field sensor Lx11, L12 configured to detect a longitudinal force component Fx22 in the first magneto-elastically active region 21 in the longitudinal x-axis direction; and
d) a second and a fourth x-axis direction sensitive magnetic field sensor Lx21, Lx22 configured to detect a longitudinal force component Fx21 in the second magneto-elastically active region 22 in the longitudinal x-axis direction. The general configuration of the second load sensor pin 9 is substantially similar to the configuration of the first load sensor pin 8. The first and second load sensor pins 8, 9 are rigidly fixed within the first and second through-holes 3, 4 of the first portion 2. The third and the fourth through-holes 6, 7 can provide a minimal gap between the abutment surfaces of the second portion 5 and the first and second load sensor pins 8, 9. Optionally, the fourth through-hole 7 can provide no minimal gap, such that the second load sensor pin 9 is rigidly fixed within the third and the fourth through-hole 7.

Turning now to FIG. 41, shown therein is another a simplified, cross-sectional end view and plan side view diagram of a vehicle tow coupling apparatus subject to a vertical, transversal, and longitudinal load components of a load F. In this view, the first load sensor pin 8 comprises a first magneto-elastically active region 21 and a second magneto-elastically active region 22, which are directly or indirectly attached to or form parts of the first load sensor pin 8 in such a manner that mechanic stress that is applied to the first load sensor pin 8 is transmitted to the magneto-elastically active regions 21, 22. Each magneto-elastically active region 21,22 comprises a magnetically polarized region. The magnetic polarization of the first magneto-elastically active region 21 and the magnetic polarization of the second magneto-elastically active region 22 can be substantially opposite to each other.

A magnetic field sensor means includes at least one first direction sensitive magnetic field sensor Lz11 being arranged approximate the first magneto-elastically active region for outputting a first signal corresponding to a stress-induced magnetic flux emanating from the first magnetically polarized region 21. The magnetic sensor means further includes at least one second direction sensitive magnetic field sensor Lz21 being arranged approximate the second magneto-elastically active region 22 for outputting a second signal and a fourth signal corresponding to a stress-induced magnetic flux emanating from the second magnetically polarized region 22.

The first load sensor pin 8 includes:

a) a first and a third z-axis direction sensitive magnetic field sensor Lz11, Lz12 configured to detect a vertical force component Fz11 in the first magneto-elastically active region 21 of the first load sensor pin 8 in the vertical z- axis direction; and

b) a second and a fourth z-axis direction sensitive magnetic field sensor Lz21, Lz22 configured to detect a vertical force component Fz12 in the second magneto-elastically active region of the first load sensor pin 8 in the vertical z-axis direction.

The first load sensor pin 8 comprises no x-axis direction sensitive magnetic field sensors.

The second load sensor pin 9 includes:

a) a first and a third z-axis direction sensitive magnetic field sensor Lz11, Lz12 configured to detect a vertical force component Fz21 in the first magneto-elastically active region 21 in the vertical z-axis direction;

b) a second and a fourth z-axis direction sensitive magnetic field sensor Lz21, Lz22 configured to detect a vertical force component Fz22 in the second magneto-elastically active region 22 in the vertical z-axis direction;

c) a first and a third x-axis direction sensitive magnetic field sensor Lx11, Lx12 configured to detect a longitudinal force component Fx22 in the first magneto-elastically active region 21 in the longitudinal x-axis direction; and

d) a second and a fourth x-axis direction sensitive magnetic field sensor Lx21, Lx22 configured to detect a longitudinal force component Fx21 in the second magneto-elastically active region 22 in the longitudinal x-axis direction.

The first and second load sensor pins 8, 9 are rigidly fixed within the first and second through-holes 3, 4 of the first portion 2. The third and the fourth through- hole 6, 7 can provide a minimal gap between the abutment surfaces of the second portion 5 and the first and second load sensor pins 8, 9. Optionally, the fourth through-hole 7 can provide no minimal gap, such that the second load sensor pin 9 is rigidly fixed within the third and the fourth through-hole 7.

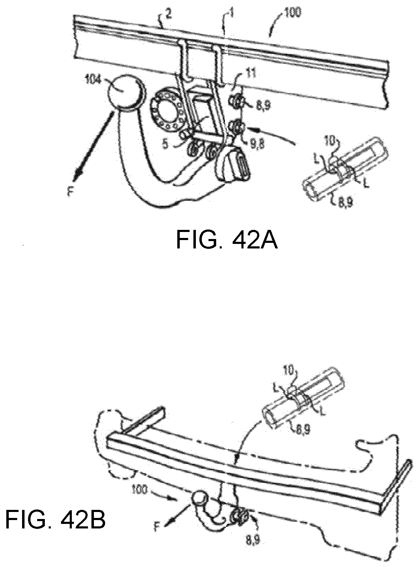

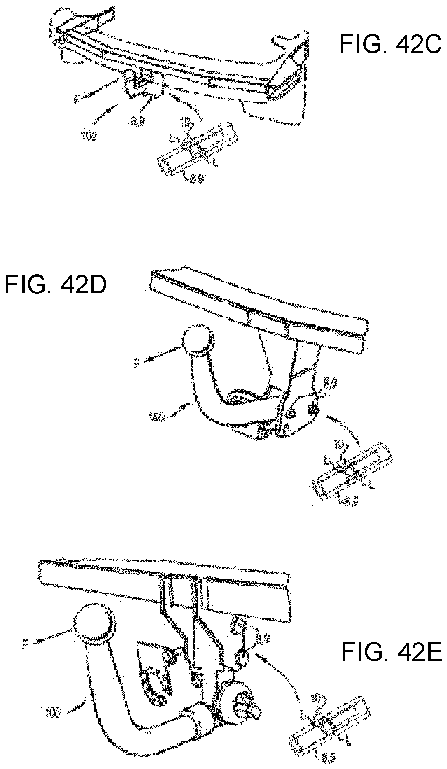

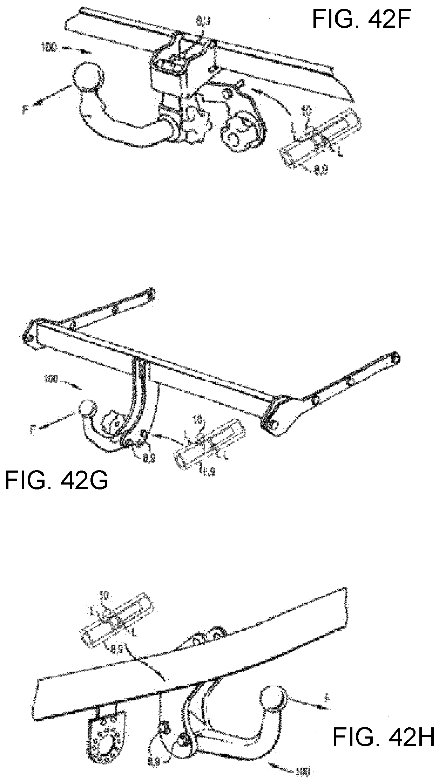

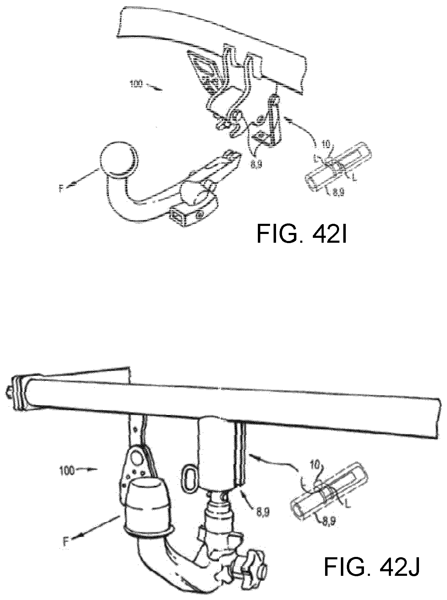

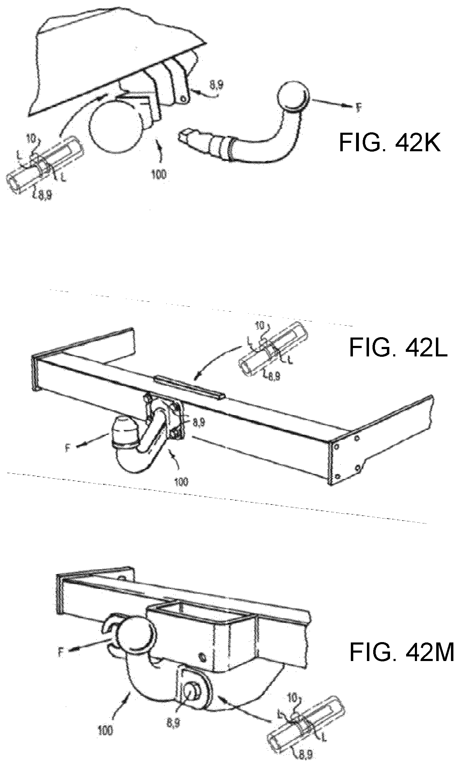

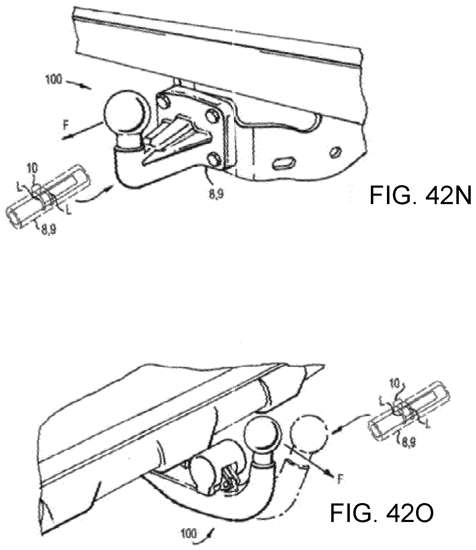

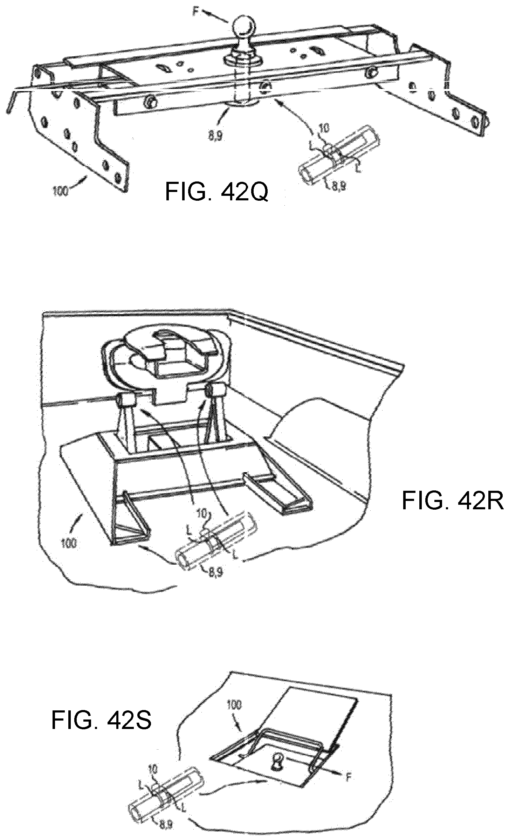

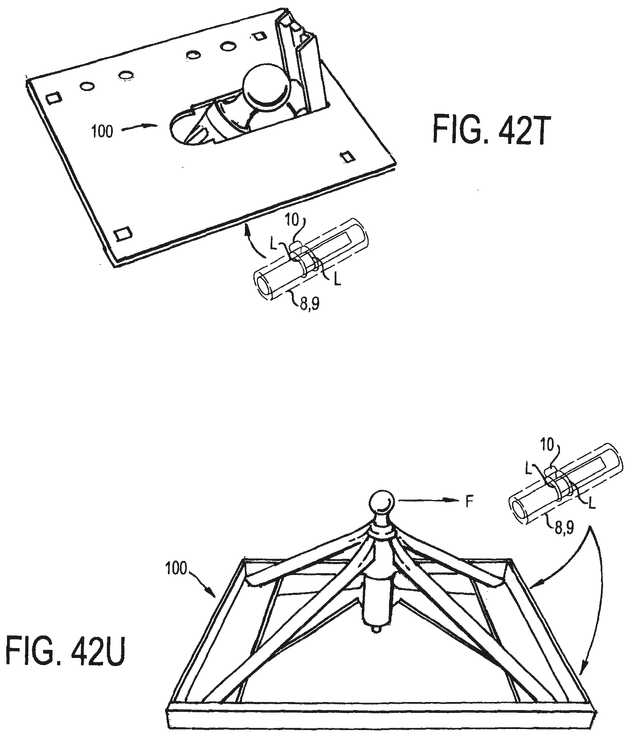

Turning now to FIG. 42A, shown therein is a simplified, perspective, schematic view diagram of tow coupling apparatus 100 using load sensor pins 8, 9 for sensing (components) of a force F. In the configuration shown, the sensor assembly 1 for sensing a force F includes a first portion 2 (attachment assembly, supporting yoke) having a first and a second through-hole 3, 4, and a second portion 5 (trailer hitch, towing hook) having a third and fourth through-hole 6, 7. The third and fourth through-holes 6, 7 are positioned in correspondence to the first and second through-holes 3, 4.

The sensor assembly 1 further includes a first load sensor pin 8 and a second load sensor pin 9. The first load sensor pin 8 is arranged such that it extends through the first and third through-holes 3, 6. The second load sensor pin 9 is arranged such that it extends through the second and fourth through-holes 4, 7.

The first portion 2 is coupled to the second portion 5 via the first and second load sensor pins 8, 9. At least one out of the first and the second load sensor pin 8, 9 includes at least one magneto-elastically active region 10 that is directly or indirectly attached to or forms a part of the load sensor pin 8, 9 in such a manner that mechanic stress on the load sensor pin is transmitted to the magneto- elastically active region. The magneto-elastically active region 10 comprises at least one magnetically polarized region such that a polarization of the polarized region becomes increasingly helically shaped as the applied stress increases.

The at least one load sensor pin 8, 9 further includes a magnetic field sensor means arranged approximate the at least one magneto-elastically active region 10 for outputting a signal corresponding to a stress-induced magnetic flux emanating from the magnetically polarized region. The magnetic field sensor means includes at least one direction sensitive magnetic field sensor L, which is configured for determination of a shear force in at least one direction. The at least one direction sensitive magnetic field sensor L is arranged to have a predetermined and fixed spatial coordination with the load sensor pin 8, 9.

The load sensor pin 8, 9 comprising the at least one direction sensitive magnetic field sensor L is at least partially hollow. The at least one direction sensitive magnetic field sensor L is arranged inside the interior of the load sensor pin 8, 9.

**EP 3 812 181 B1**

The first and second load sensor pins 8, 9 are substantially arranged along the vertical z-axis direction. The load sensor pins 8, 9 extend in the transversal y-axis direction. The longitudinal direction is perpendicular to the vertical z-axis direction and the transversal y-axis direction to define the Cartesian coordinate system. The system of equations that has to be solved in order to determine the respective load components of F, has to be altered accordingly.

Further features and aspects of the invention (which have been described with respect to the preceding embodiments) may also apply to this embodiment.

The sensor assembly 1 is part of a tow coupling apparatus 100. The first part 2 is configured to be attached to the chassis of a towing vehicle. The second part 5 provides a ball coupling 104 that is configured to couple to a towed vehicle.

Turning now to FIG. 42B and FIG. 42C, shown therein are simplified, perspective, schematic view diagrams of tow coupling apparatus 100 using load sensor pins 8, 9 for sensing (components) of a force F. The load sensor pins 8, 9, along with the first part 2 and second part 5 (not shown), are integrated into the existing hitch mechanism with the load sensor pins 8, 9 arrange in the transverse y-axis direction (perpendicular to the force F acting in the x-axis direction).

Turning now to FIG. 42D through FIG. 42K, shown therein are simplified, perspective, schematic view diagrams of tow coupling apparatus 100 using load sensor pins 8, 9 for sensing (components) of a force F. The load sensor pins 8, 9, along with the first part 2 and second part 5 (not shown), are integrated into the existing hitch mechanism with the load sensor pins 8, 9 arrange in the transverse y-axis direction as shown (perpendicular to the force F acting in the x-axis direction). In some cases, an exterior housing further protects the components of the tow coupling apparatus 100 from rain, snow, ice, and other environment conditions.

Turning now to FIG. 42L and FIG. 42O, shown therein is a simplified, perspective, schematic view diagram of tow coupling apparatus 100 using load sensor pins 8, 9 for sensing (components) of a force F. In these embodiments, the load sensor pins 8, 9, along with the first part 2 and second part 5 (not shown), are integrated into the existing hitch mechanism with the load sensor pins 8, 9 arrange in the longitudinal x-axis direction as shown (parallel to the force F acting in the x-axis direction). Other load sensing pins 8, 9 could be positioned in the transverse direction to better measure the Fx force in the x-axis direction.

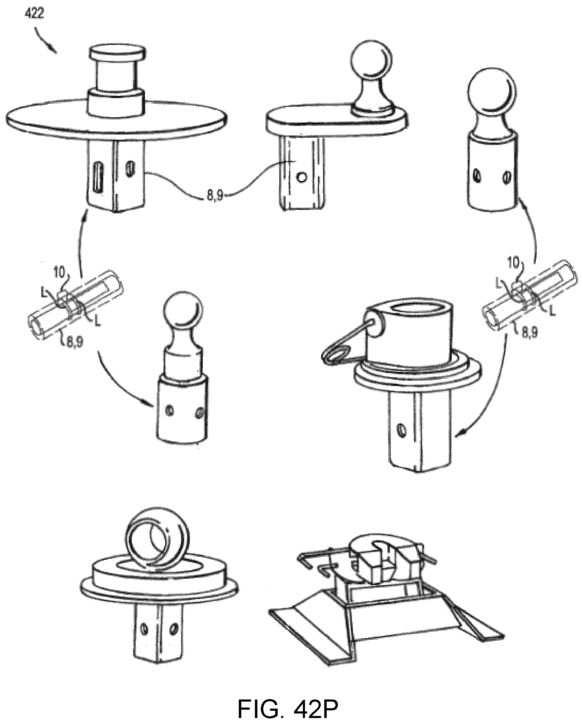

Turning now to FIG. 42P, shown therein is a simplified, perspective, schematic view diagram of coupling devices ("kingpin," extender, 3-inch ball, high-rise ball, inverted ball, and eyelet for use with a gooseneck-style trailer hitch (not shown), and fifth wheel-style hitch) adapted to using one or more load sensor pins 8, 9 for sensing (components) of a force F acting on the coupling devices. FIG. 42Q through FIG. 42U show one of the coupling devices of FIG. 42P and the locations for positioning the load sensor pins 8, 9 (usually in the transverse direction) for sensing (components) of a force F acting on the coupling devices. As shown, the coupling devices may include a hitch tube (which may be a solid bar) attached to a towing vehicle, a receiver tube attached to the hitch tube/bar, a drawbar (which may be straight, curved) inserted in the receiver tube or attached directly to the hitch tube/bar, and a ball hitch.

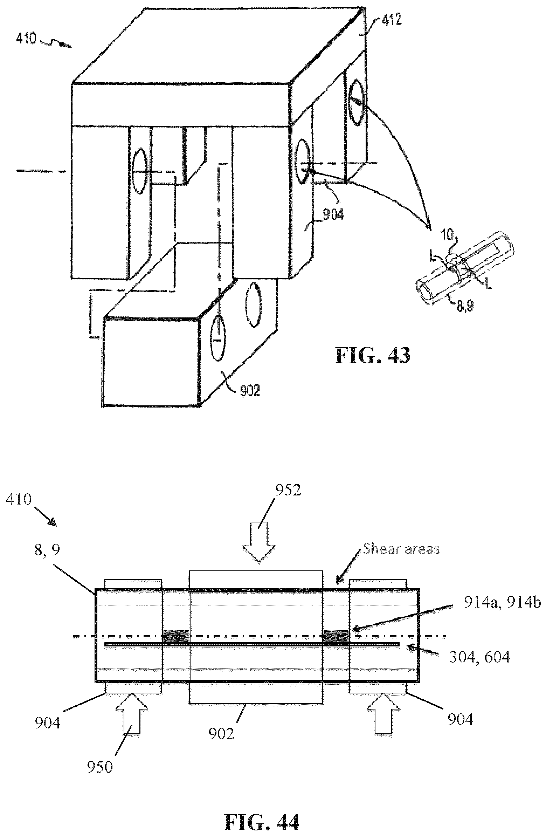

Turning now to FIG. 43, shown therein is a simplified, exploded, schematic view diagram of a weight sensor assembly 410 using load sensor pins 8, 9 for sensing a weight of a towed or a towing vehicle for comparison to a predetermined value, such as a manufacturer's maximum weight limit or a US governmental gross vehicle weight rating (GVWR). A "sprung weight" is the weight of a mass resting on the suspension of a vehicle or a trailer, not the total weight (the total weight would include the wheels, tires, brakes, and certain suspension components). As shown in the figure, tow load sensor pins 8, 9 are positioned such that the sheer force exerted downward by the connection device 412 (which could be a chassis or vehicle body part) and transferred to the vehicle wheels causes a force to be applied to the load pins 8, 9. A weight sensor assembly 410 that uses a single load sensor pin 8, 9 could also be used for the same purpose. The bracket 902, which may be connected to the spring or other suspension component on the one end, and adapters 904, which may be attached to the connection device 412 and the towing or the towed vehicle chassis, may be used to output a signal (as described above) that approximates the sprung weight by measuring the force of the mass of the vehicle as its weight force is transferred to the (one or both) load sensor pins 8, 9. For example, the sensor assembly 410 could be positioned between the top of each of four suspension springs and dampers associated with a vehicle's wheels where the springs/dampers attach to the vehicle chassis.

Turning to FIG. 44, shown therein is a simplified, schematic, cross-sectional view diagram of the weight sensor assembly 410 of FIG. 43 and load sensor pins 8, 9, showing forces acting on the bracket 902 and adapters 904, which are transferred to the load sensor pins 8, 9 as sheer forces as indicated. The force vector 952 represents the force exerted downward by the connection device 412 (which could be a chassis or vehicle body part or a separate member attached to the chassis or vehicle body part). The force vectors 950 represents the force exerted by, for example, suspension components of a vehicle (or a member attached to the suspension components of the vehicle). The sheer forces transferred to the load sensor pin 8, 9 are measurable using the magnetic field sensors 914a, 914b (sensor 914b is positioned behind 914a on an opposite edge of the printed circuit board 304, 604, and thus is not visible in the figure). The "shear areas" generally represent the axial regions of the load sensor pins 8, 9 where the load sensor pins 8, 9 undergo deformation due to the forces acting on the ends and middle portions of the load sensor pins 8, 9. In the configuration shown, two "sheer areas" are indicated, but a single sheer area is also contemplated.

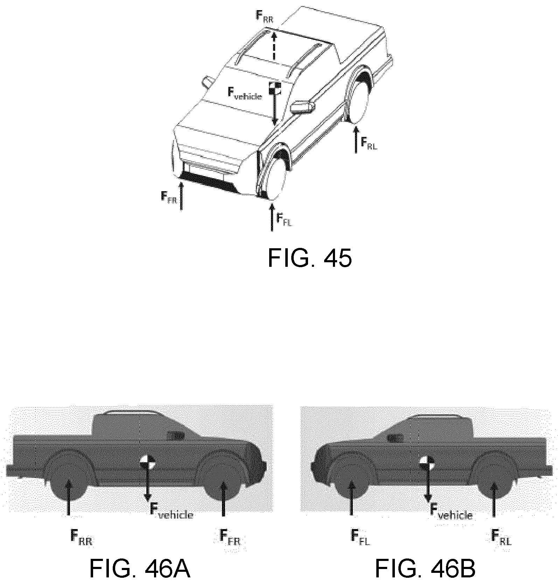

Turning to FIG. 45 and FIGS. 46A and 46B, shown therein is a simplified, schematic, perspective view of a vehicle, where force vectors $F_{FL}$, $F_{FR}$ representing the forces exerted by the vehicle's suspension components on the vehicle body at the front left and front right wheels, respectively, and force vectors $F_{RR}$, $F_{RL}$ representing the forces exerted by the vehicle's suspension components on the vehicle body at the rear left and rear right wheels, respectively. The force vector Fvehicle represents the weight of the vehicle body at the center of mass of the vehicle body. Mathematical expressions of these forces are shown below, which may be embodied in one or more algorithms that receive input signals from the load sensor pins 8, 9 and other sensor devices and output useful information to the vehicle electronics and to devices such as displays for informing or alerting a vehicle operator of vehicle conditions.

$$(19) \quad F_{vehicle} = F_{FL} + F_{RL} + F_{RR} + F_{FR}$$

$$(20) \quad F_{front\ axle} = F_{FL} + F_{FR}$$

$$(21) \quad F_{rear\ axle} = F_{RR} + F_{RL}$$

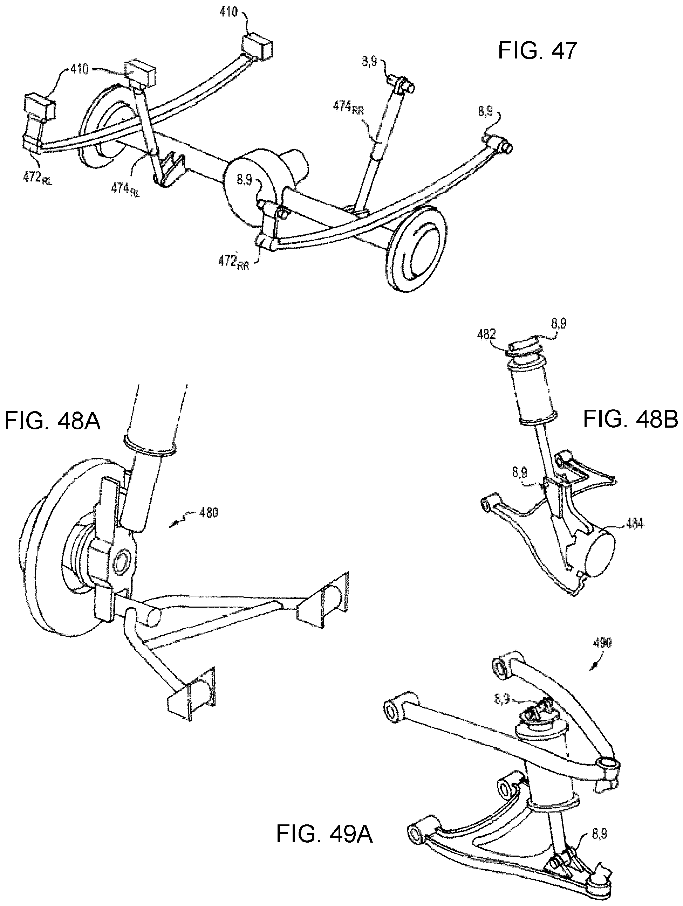

In FIG. 47, an application of the use of the weight sensor assembly 410, positioned at the six attachment points of a left and right leaf spring suspension of a vehicle, is shown. A weight sensor assembly 410 is shown schematically where it would be positioned between each of the ends of the leaf spring assembly 472RL and the vehicle body (not shown). For clarity, a single load sensor pin 8, 9 of the weight sensor assembly 410 is shown schematically where it would be positioned between each of the ends of the leaf spring assembly $472_{RR}$ and the vehicle body. One weight sensor assembly 410 is also shown schematically between each of the ends of the shock absorbers $474_{RR}$, $474_{RL}$ and the vehicle body (with each weight sensor assembly including one or multiple load sensor pins 8, 9). In the configuration shown, the total weight of the vehicle body may be measured from respective forces arising from the weight of the body being transferred to each the load sensor pins 8, 9 associated with each of the weight sensor assemblies 410. Turning to FIGS. 48A and 48B, shown therein is a perspective view of a MacPherson strut-type suspension assembly 480 for a vehicle. A load sensor pin 8, 9 is shown schematically at the upper strut mount 482, approximately where the strut would be connected to a vehicle body, and a connecting spindle 484 between lower strut mount and a wheel hub. In the configuration shown, a portion of the total weight of the vehicle body may be measured from respective forces arising from the weight of the body being transferred to the two load sensor pins 8, 9 associated with the suspension assembly 480.

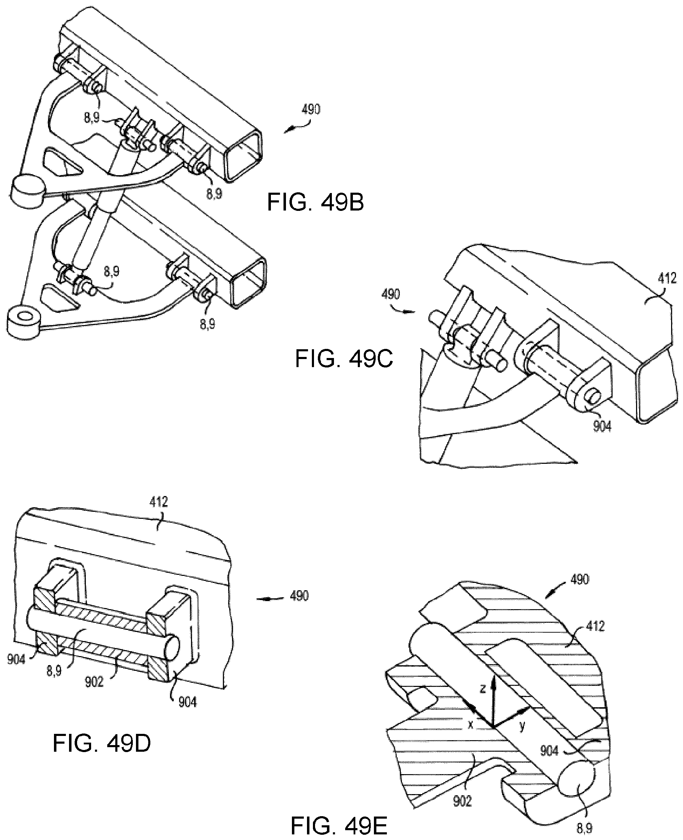

Turning to FIGS. 49A through 49E, shown therein are various perspective views of a double wishbone-type suspension assembly 490 for a vehicle. In FIG. 49B, the locations of upper and lower weight sensor assemblies 410 are shown, each with a single load sensor pin 8, 9 positioned therein (as seen in FIG. 43). A closer view of the portion indicated in FIG. 49B is shown schematically in FIG. 49C, illustrating the bracket 902, the adapters 904, and the connection device 412 (which in the embodiment shown is a member attached to the chassis or vehicle body part). A closer view of the portion indicated in FIG. 49C is shown schematically in FIG. 49D, illustrating the bracket 902, the adapters 904, the load sensor pin 8, 9 (in cross section), and the connection device 412. FIG. 49E shows another cross-sectional schematic view similar to that in FIG. 49D.

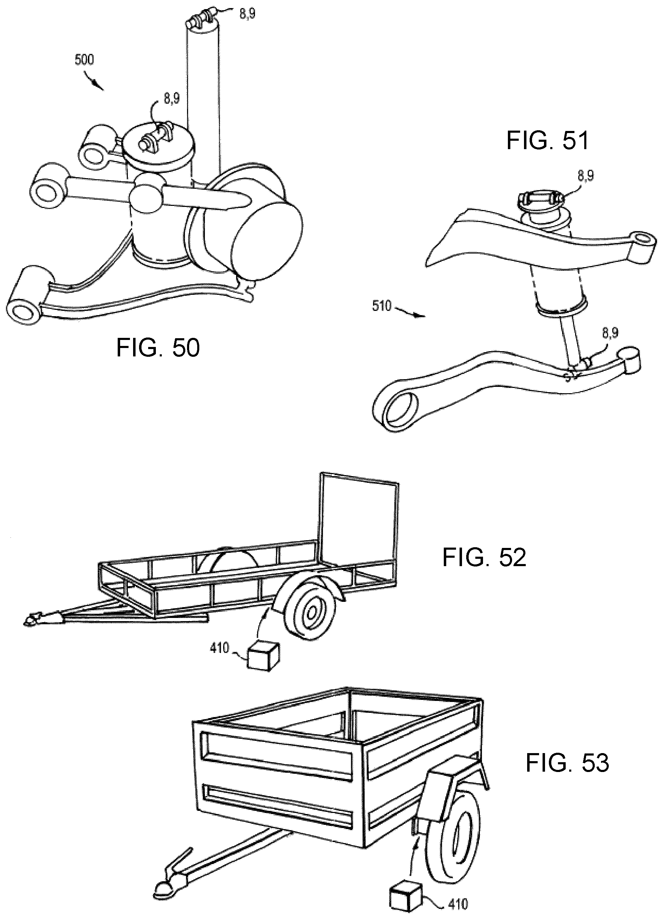

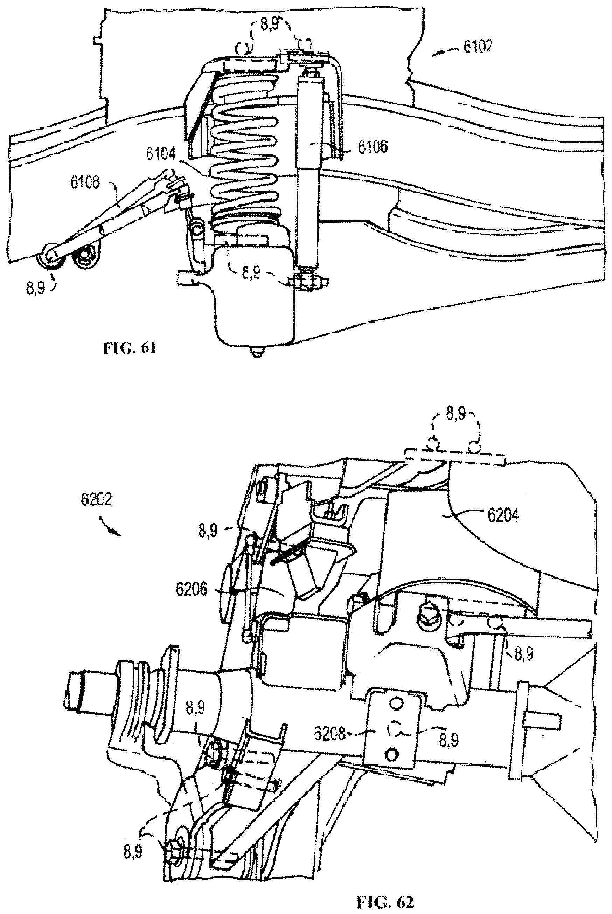

Turning now to FIGS. 50 and 51, shown therein are schematic perspective view drawings of a multi-link-type suspension assembly 500 and a trailing-arm-type suspension assembly 510 for a vehicle in which the approximate location of the load sensor pins 8, 9 would be positioned as part of a weight sensor assembly 410. FIGS. 61 and 62 are simplified, partial, perspective, and schematic drawings of a front and rear wheel vehicle suspension including various load sensor pins 8, 9. In particular, FIG. 61 shows a heavy-duty front wheel suspension 6102 for a towing vehicle, indicating where one or more load sensor pins 8, 9 could be used to interconnect the vehicle body, suspension components, and front axle assembly to determine a static and/or dynamic load at the front wheels in the manner previously described. A spring 6104 and a strut 6106 are shown with load sensor pins at the top and bottom ends (possibly two each), thereby providing a measure of the static and dynamic forces applied to the left- and right-side springs and struts, respectively, caused by the vehicle body above and the wheel axle assembly below. A separate load sensor pin or torque sensor may be used in connection with a stability arm 6108 to provide a dynamic measure of torque or rotation of the stability arm 6108.

FIG. 62 shows a heavy-duty rear wheel suspension 6202 for a towing vehicle, indicating where one or more load sensor pins 8, 9 could be used to interconnect the vehicle body, suspension components, and rear axle assembly to determine a static and/or dynamic load at the rear wheels in the manner previously described. A spring 6204 and a strut 6206 are shown with load sensor pins at the top and bottom ends (possibly two each), thereby providing a measure of the static and dynamic forces applied to the left- and right-side springs and struts, respectively, caused by the vehicle body above and the wheel axle assembly below. A separate load sensor pin or torque sensor may be used in connection with a stability arm 6208 (partially shown) to provide a dynamic measure of torque or rotation of the stability arm 6208.

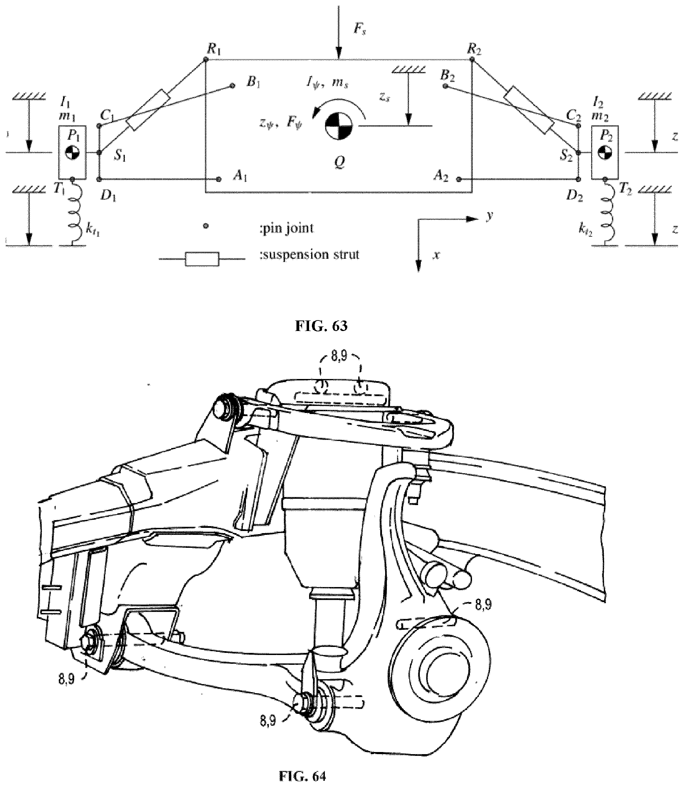

FIG. 63 is schematic diagram of a basic vehicle suspension setup, indicating where load sensor pins could be employed at various "pin joints." Generally, for an object Q, such as a vehicle body, with a mass ms exhibiting a weight represented by force Fs acting in the vertical z-axis direction through the body's center of mass, a spring- and strut-type suspension as shown may be used to interconnect the object to wheels via multiple connections represented by member A1-D1, member B1-C1, and member R1-S1 on the left, and member A2-D2, member B2-C2, and member R2-S2 on the right.

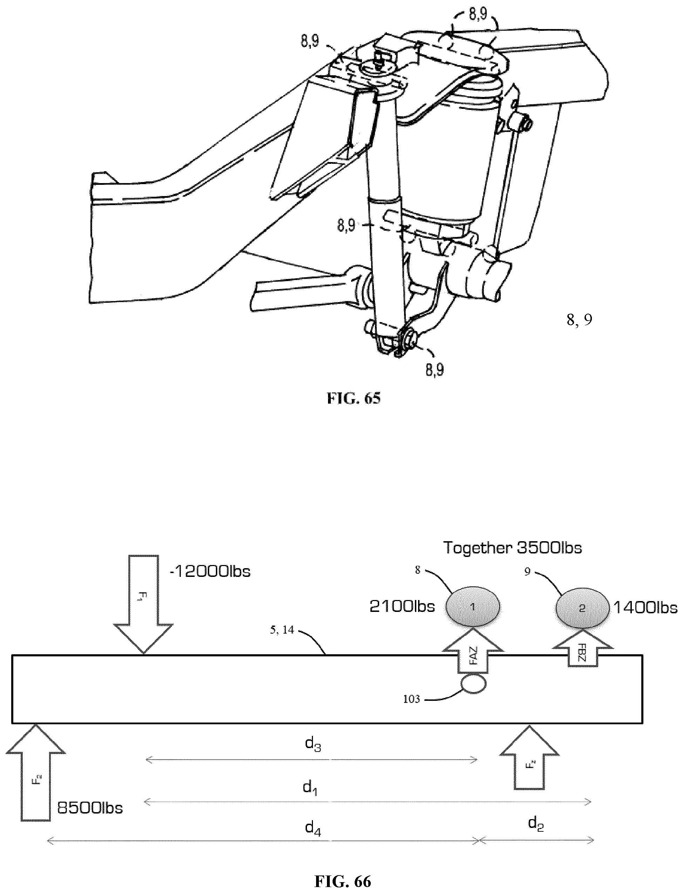

FIGS. 64 and 65 are simplified, partial, perspective, and schematic drawings of a front and rear vehicle suspension, including various load sensor pins 8, 9, indicating where one or more of the load sensor pins 8, 9 (possibly two at each location) could be used to interconnect the vehicle body, suspension components, and axle assembly to determine a static and/or dynamic load at the front and rear wheels in the manner previously described.

FIGS. 52, 53 and 54 are schematic perspective view drawings of various towed vehicles and related components, including suspension components, equipped with the weight sensor assembly 410 (with one or multiple load sensor pins 8, 9) at various measurement points between a vehicle body or vehicle load (e.g., trailer box, boat) and the vehicle's wheels to measure a sprung weight force.

FIG. 52 for example, illustrates use of the weight sensor assembly 410 positioned near a trailer wheel such that the weight sensor assembly 410 is between the trailer box on one end and the wheel axel (or wheel suspension component attached to the wheel), such that the weight of the trailer box may be measured from a force arising from the weight of the trailer box being transferred to the load sensor pin(s) 8, 9. FIG. 53 illustrates a similar use of the weight sensor assembly 410 on a smaller trailer.

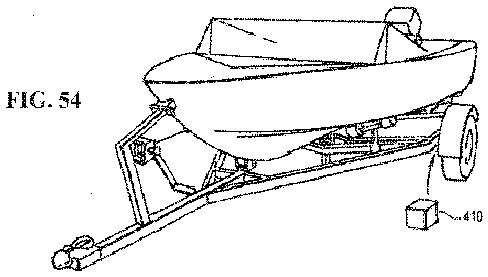

FIG. 54 illustrates use of the weight sensor assembly 410 positioned near a trailer wheel of a boat trailer such that the weight sensor assembly 410 is between the trailer on one end and the wheel axel (or wheel suspension component attached to the wheel), such that the weight of the boat and boat trailer may be measured from a force arising from the weight of the boat and boat trailer being transferred to the load sensor pin(s) 8, 9.

A method of using the sensor assembly 410 and the components shown in the various embodiments described above include connecting the electronics of the load sensor pins 8, 9 to an electrical connection point of the towed and/or the towing vehicle such that electrical signals having information useful for calculating the (components) of a force F or having information about a calculated force F may be transferred to the vehicles. The signals may be transferred by wired or wirelessly using a transceiver associated with the towing or towed vehicle. The method further includes continuously comparing the calculated force F (and its components) to one or more ratings or limits and outputting an alert if a calculated values exceeds the ratings or limits. Ratings and limits may be expressed in terms of maximum values, maximum values with a safety margin, or a distribution of values, such as a histogram, that account for inputs from other vehicle sensors and operating conditions that affect the ratings and limits (e.g., external air temperature, vehicle traction setting, engine performance, tire pressure, payload amount (including number of vehicle passengers), and others.

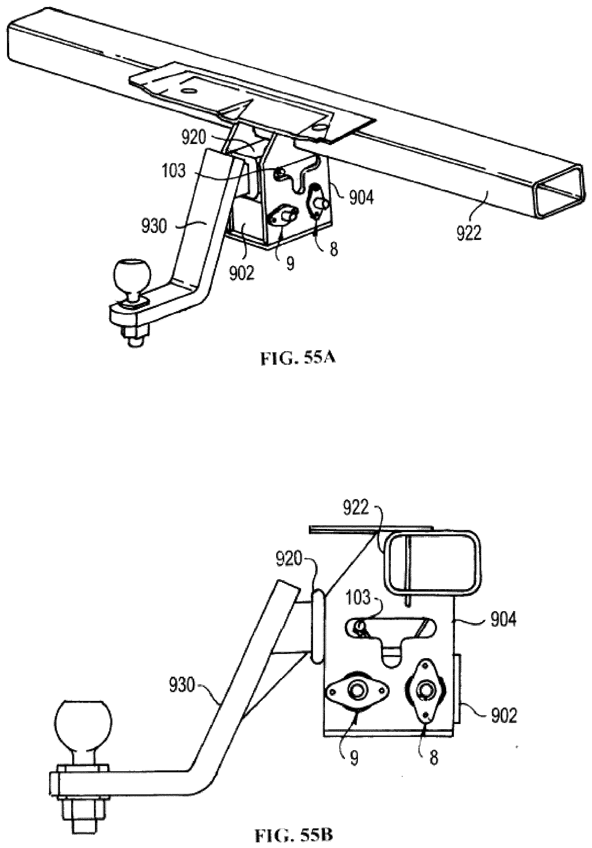

Turning now to FIGS. 55A through 55E, shown therein are simplified, partial, cross- sectional, and perspective view diagrams of a tow coupling apparatus, including load sensor pins 8, 9, for a towing vehicle, which could be a private or commercial passenger pickup truck or an off-road agricultural vehicle, among others. Compared to the embodiment of FIG. 28A, the two load sensor pins 8, 9 of the tow coupling apparatus of FIGS 55A through 55E are positioned below the receiver tube 920.

In particular, FIG. 55A shows a perspective view and FIG. 55B shows a side-view of the tow coupling apparatus in which a bracket 902 generally surrounds the middle portions of the load sensor pins 8, 9, and is attached to a receiver tube 920. A separate, generally U-shaped adapter 904 pins the left and right ends of each of the load sensor pins 8, 9, and is attached to a hitch tube 922 (which, as shown, is part of a towing vehicle bumper assembly). A drawbar 930 is shown inserted into the receiver tube 920 and fastened in the receiver tube 920 using a connecting pin 103. As in previous embodiments discussed above, the two load sensor pins 8, 9, are used to interconnect the hitch tube 922 of the vehicle and the drawbar 930 (via the bracket 902 and adapter 904, respectively), such that any force acting on the drawbar 930 will cause sheer forces to be observable by the load sensor pins 8, 9 as previously generally described.

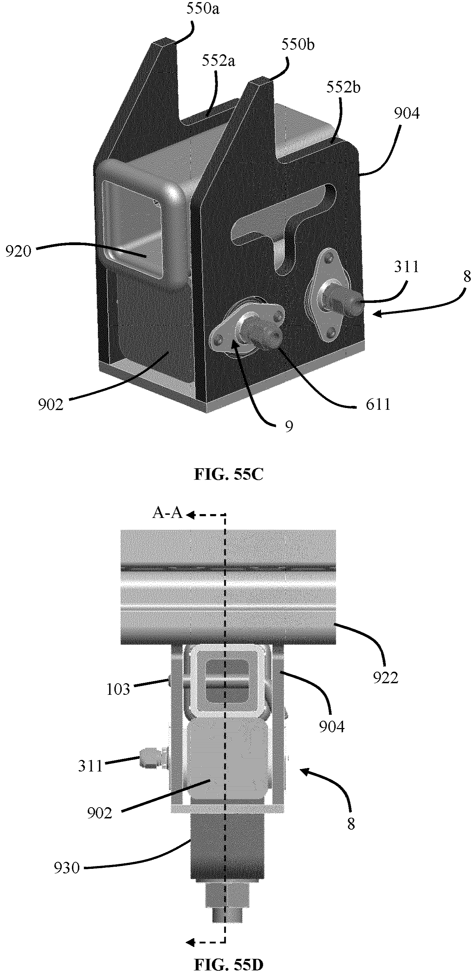

FIG. 55C shows another perspective view of the arrangement of the bracket 902, the adapter 904, the receiver tube 920, and the load sensor pins 8, 9 of FIG. 55A. Also shown are a pin connector housing 311, which is protruding from the proximate end of the load sensor pin 8, and a pin connector housing 611, which is protruding from the proximate end of the load sensor pin 9. Also shown are separate flanges 550a, 550b extending from the upper portions of the left and right sides of the adapter 904, thereby forming left and right surfaces 552a, 552b that may be used to attach the adapter 904 securely to corresponding surfaces of the hitch tube 922 (e.g., by a mechanical weld where the surfaces 552a, 552b contact the outer surface of the hitch tube 922 approximately near the center of the hitch tube 922), thereby achieving stability in the longitudinal x-axis, lateral y-axis, and vertical z-axis.

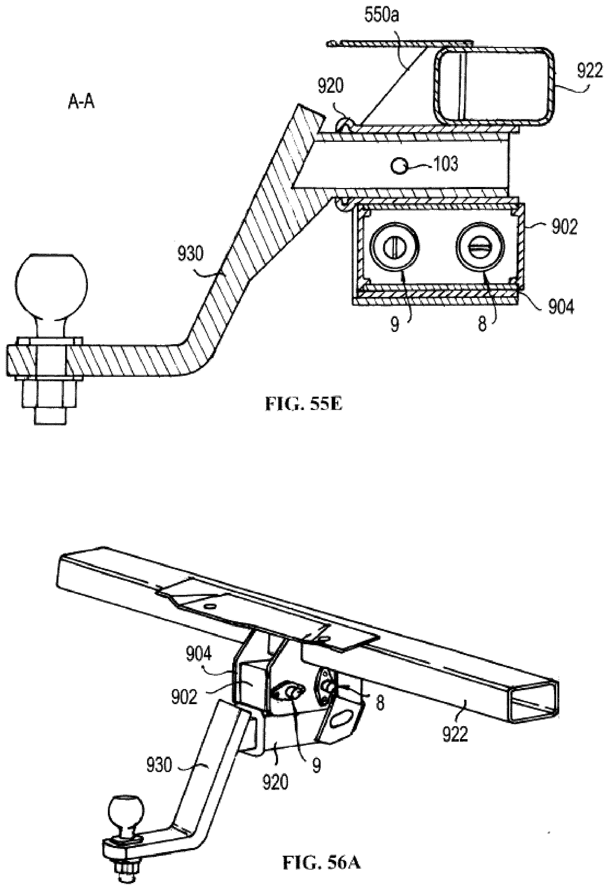

FIG. 55D shows the tow coupling apparatus of FIG. 55A as viewed from the front of the vehicle looking toward the rear or back end of the vehicle. From this perspective, only the load sensor pin 8 is partially visible, as it is the load sensor pin closest to the bumper and the front of the vehicle in this configuation. FIG. 55E is a cross-sectional side view of the tow coupling apparatus taken along the plane A-A as indicated in FIG. 55D.

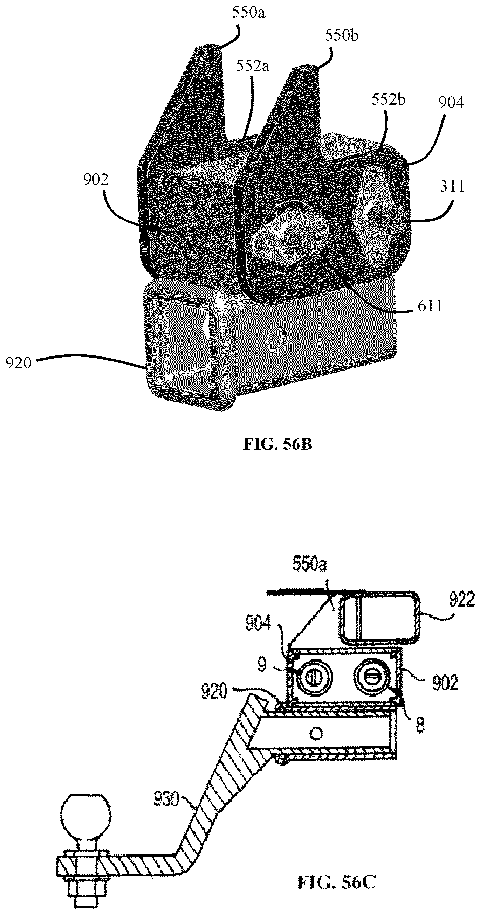

Turning now to FIGS. 56A-56C, shown therein are simplified, partial, cross- sectional, and perspective view diagrams of another tow coupling apparatus, including load sensor pins 8, 9, for a towing vehicle. Compared to the embodiments of FIG. 28A and FIGS 55A through 55E, the two load sensor pins 8, 9 are positioned above the receiver tube 920 and below the hitch tube 922. As in the previous embodiments discussed above, the two load sensor pins 8, 9, are used to interconnect the hitch tube 922 of the vehicle and the drawbar 930 (via the bracket 902 and adapter 904, respectively), such that any force acting on the drawbar 930 will cause sheer forces to be observable by the load sensor pins 8, 9 as previously generally described.

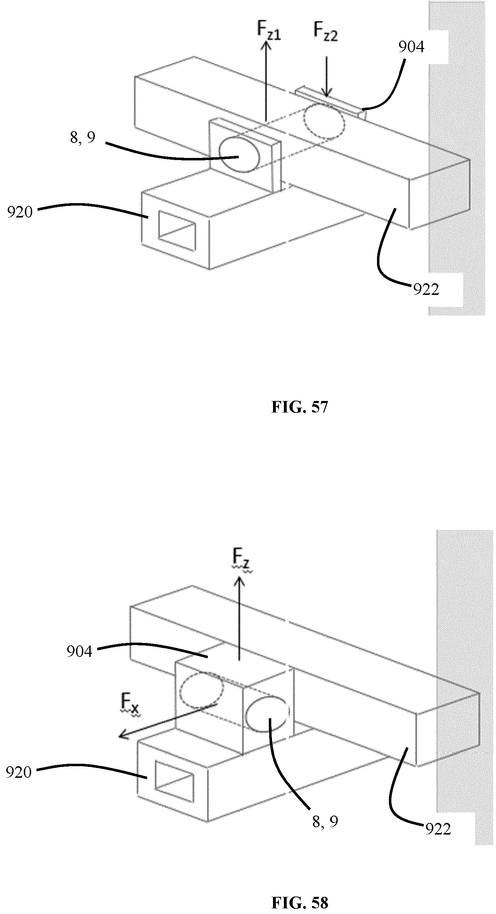

Turning now to FIGS. 57 and 58, shown therein are simplified, schematic, perspective view diagrams of tow coupling apparata, each including a single load sensor pin 8 (or 9) for a towing vehicle. In FIG. 57, the hitch tube 922 is used in place of the bracket 902, and the adapter 904 is rotated 90-degrees in the x-y plane relative to the orientation of the brackets previously described. In this way, the single load sensor pin 8 (or 9) is also rotated about its longitudinal axis 90-degrees such that its longitudinal axis is parallel to and with the longitudinal axis of the vehicle. A force acting on the receiver tube 920 will be observed by the load sensor pin 8 or 9. In FIG. 58, the single load sensor pin 8 is positioned to the rear of the hitch tube 922 and within the adapter 904 for sensing longitudinal (Fx) and vertical (Fz) forces acting on the pin.

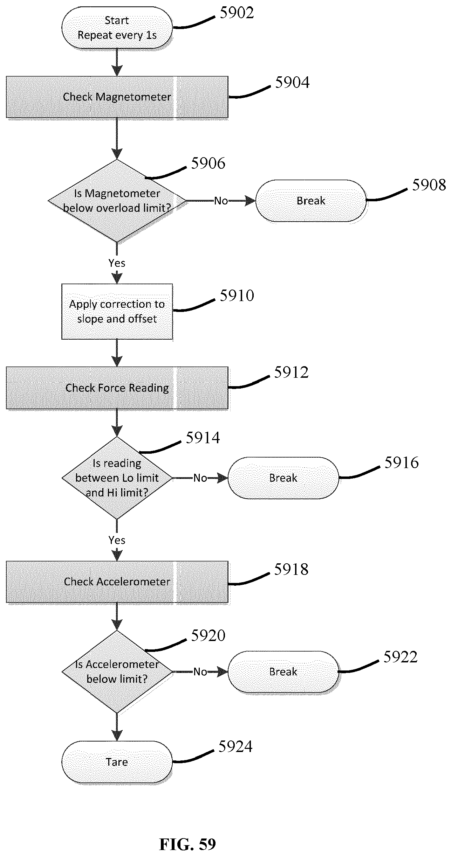

Turning now to FIG. 59, shown therein is a simplified, process flow diagram of a computational method involving zero tracking the output signal from one or more of the load sensor pins. The algorithm may be employed to help return the unloaded force reading outputted by a load sensor pin to a zero (baseline or nominal) value. In normal use, the output may not return to a zero reading for many reasons, including hysteresis effects, temperature coefficients on different parts and components of the load sensor pins and surrounding components, and the presence of external magnetic field influences, among others. Ideally, when the tow vehicle is at rest on a level plane with no load applied to the tow hitch apparatus (i.e., no force F applied to the ball on the end of the drawbar 930) under standard conditions, the resting output signal value should be zero without need for user interaction (such as manually adjusting a gain or offset). However, it is contemplated that a user would still be able to initialize a zeroing action on their own, assuming none of the sensors are outside of limits for such an action.

In step 5902, the zeroing process begins.

In step 5904, an output signal from the secondary magnetic field sensor 916 (as seen in FIG. 12B) or other magnetometer, which may be a 3-axis compass sensor (either standalone or as part of a 9-axis sensor and is used to assess the presence of external magnetic fields), is received.

In step 5906, the output signal is compared to a pre-determined limit to see if the magnetic field is outside the safety limits for the sensors assembly to function properly. If the value is within allowable limits, the process applies as correction to slope and offset in the appropriate axis to compensate for the external field. If the value is not within allowable limits, the process stops and logs a warning flag.

In step 5912, the output signal from the load sensor pin 8, 9 (or both) is obtained. In step 5914, the output signal from the load sensor pin 8, 9 is compared to a predetermined high value and a pre-determined low value to see if it is outside that range that would permit zeroing of the signal. If the value is outside the range, the process stops and logs a warning flag. If the value is within the acceptable range, then the output signal from an accelerometer is received in step 5918. The accelerometer is used to check if the vehicle is in motion or on an incline, which could affect the force signals.

In step 5920, the output signal from an accelerometer is compared to a predetermined threshold value. If the value is equal to or above the pre-determined threshold, then the process stops and logs a warning flag. If the value is acceptable, then in step 5924, the current output signal from the load sensor pins is set as the new zero value.

As noted in step 5902, the process may be repeated every second, but it could repeat at any other desired time interval as needed. The process waits for a predetermined amount clock time to elapse, which is repeated while the system is receiving power (e.g., the vehicle is in an accessory power or engine on power state).

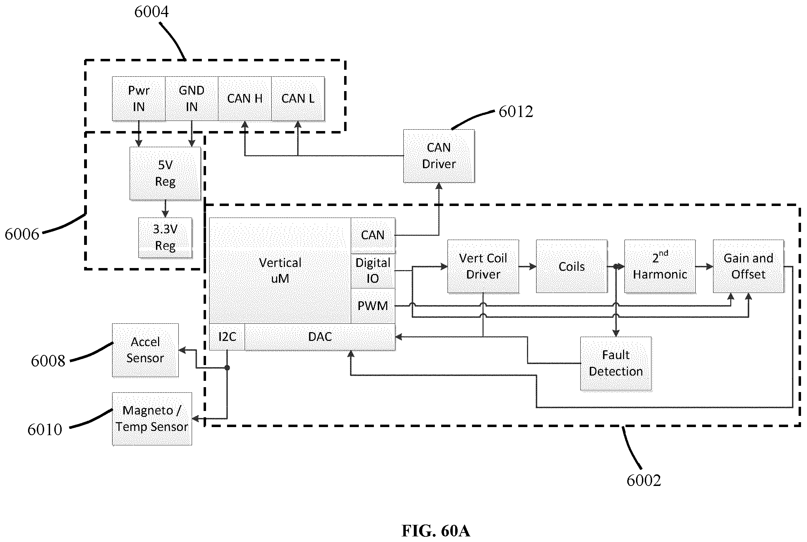

Turning now to FIG. 60A, shown therein is a schematic circuit drawing of some of the operational electronics components and circuits for use with a load sensor pin 8 or 9, which may be implemented in connection with the zero tracking algorithm of FIG. 59. In particular, the components include a force sensor circuit 6002, external connections 6004, power regulators 6006, an accelerometer 6008, a magnetometer 6010, and a CAN voltage level shifter 6012.

The force sensor circuit 6002 may be a magnetic vector based detection circuit as shown, replicated for sensing in multiple axes (i.e. vertical and horizontal) as needed. The force sensor circuit 6002 may be employed on one or both ends of the load sensor pins 8, 9 for sensing the difference between tow and sway forces on a hitch assembly as previously described. In some embodiments, up to four force sensor circuits 6002 per load sensor pin may be used; in other embodiments, as few as one force sensor circuit 6002 per load sensor pin may be used, depending on the requirements for force sensing.

The external connections 6004 may include a power in ("Pwr IN") connector to supply a voltage from an external power source (not shown), a ground return ("GND IN") connector, a CAN communications high ("CAN H") connector, and a CAN communications low ("CAN L") connector.

The power regulators 6006 may include multiple voltage regulators, such as a high 5-volt and a low 3.3-volt regulator.

The accelerometer 6008 is provided for detecting a motion of the tow hitch, including pitch and roll (i.e., x-axis and y-axis inclination).

The magnetometer 6010 is provided for detecting the presence of external magnetic influences on the sensor system.

The CAN voltage level shifter 6012 is provided for regulating the proper voltage needed by the force sensing circuit 6002 components relative to external circuits via the CAN H and CAN L connections.

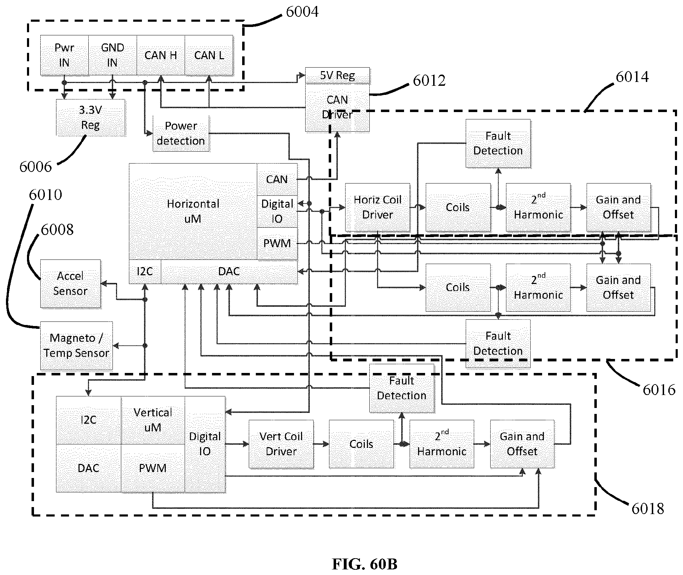

Turning now to FIG. 60B, shown therein is another schematic circuit drawing of some of the operational electronics components and circuits for use with a load sensor pin 8 or 9, which may be implemented in connection with the zero tracking algorithm of FIG. 59. In particular, the components include the force sensor circuit 6002, external connections 6004, power regulators 6006, accelerometer 6008, magnetometer 6010, and CAN voltage level shifter 6012 as discussed above, as well as horizontal left-side and right-side detection electronics components 6014, 6016, and vertical detection electronics components 6018.

Turning now to FIG. 66, shown therein is a simplified, side, plan view diagram of a portion of a vehicle weight distribution tow coupling apparatus of the type shown in FIG. 13 showing a simplified load case. In particular, shown therein are the forces associated with the load case. A first force F1 represents the point of load of the trailer tongue on the ball coupling 104 (as seen in FIG. 28A), and a second force F2, spaced apart from the first force F1, represents the point of load of a spring or other member connecting a drawbar to a trailer component and is shown in the vertical z-axis direction. The forces F1 and F2 are applied to the sensor assembly via the second portion 5, and more precisely via the ball coupling 104 of the drawbar 102. Distances d1, d2, and d3 are previously described. Distance d4 is the distance between the point of load of F2 and (the axis of) the first load sensor pin 8. For determining the force component Fz = F1 + F2, the following set of equations are solved (example values for illustrative purposes):

$$(22) \quad d1 = \quad 38.1 \text{ cm (15 in.)}$$

$$(23) \quad d2 = \quad 12.7 \text{ cm (5 in.)}$$

$$(24) \quad d3 = \quad 25.4 \text{ cm (10 in.)}$$

$$(25) \quad FAz = (F1 + F2)/(d1+d3)*d1 = \quad 952.5 \text{ kg (2100 lbs.)}$$

$$(26) \quad FBz = (F1 + F2)/(d1+d3)*d3 \quad 635 \text{ kg (1400 lbs.)}$$

$$(27) \quad Fz = (-1) * (F1 + F2) = \quad -1588 \text{ kg (-3500 lbs.)}$$

FAz is a reaction force on the first load sensor pin 8, FBz is a reaction force on the second load sensor pin 9. Force Fz, using the values shown in FIG. 66, is 1588 kg (3500 lbsd.), which is acting on the vehicle (i.e., acts on the vehicle in downward z-axis direction). Where both forces FAz and FBz are positive values, indicating the forces are pointing in the same direction, Fz is converted by, for example, multiplying the Fz value by -1 as shown above. However, if the forces FAz and FBz are pointing in different directions (i.e., one positive, one negative), Fz is not converted. The above computational process may be embodied in an algorithm embedded, for example, in/on the memory of one or more printed circuit boards.

Turning now to FIG. 69, shown therein is a simplified side view of the load sensor pins of FIGS. 1, 67A, and 67B, having bushings 690a, 690b, and 690c (of the kind shown in FIG. 70) press fitted onto the pin 8,9. Two smaller bushings 690a, 690c may be positioned on opposite ends of the load sensor pins 8, 9 as shown. One larger bushing 690b, which may include an alignment groove 23, may be positioned at the center of the load sensor pins 8, 9 as shown. The bushings are preferably made of a non-ferromagnetic material such as tin brass, and may be press fitted by first supercooling the load sensor pins 8, 9 and/or heating the bushings 690a, 690b, 690c and then sliding them into place and allowing the pins/bushings to warm/cool to an ambient temperature. The press-fitted bushings may improve the response, by the load sensor pins 8, 9, to applied forces across different drawbar variations. The assembly shown may improve the tolerance of the fully assembled load sensor pin stack up (following end machining after press fitting the two smaller bushings 690a, 690c). Moreover, the arrangement may allow for maximizing the sleeve diameter for better magnetic isolation with respect to the casting of the body of the load sensor pins 8, 9 (i.e., the bushings may provide for a larger signal and thus a better signal to noise ratio). Finally, by moving the alignment groove 23 the pin itself (as shown in FIGS. 68A and 68B) to the bushing 690b, a potential weak point can be eliminated (i.e., less bending fatigue at the joint/groove 23 on the pin, and thus less possible error).

EXAMPLE

A computation for a tow vehicle is shown below:

Gwc (weight-carrying hitch rating) = 5670 lg (12500 lbs)

Gvm (Gross Vehicle Mass (GVWR) - Max Payload w/ Weight Truck) = 3561 kg (7850 lbs)

$D = Gwc*(Gvm+5004.5)/(Gvm+Gwc) =$ 850 kg (1875 lbs)

Twc = 850 kg (1875 lbs)

Longitudinal (Aft/Fore) Loads

Aft (toward rear):

2686 kg (5922 lbs ) (0-100 cycles)
2149 kg (4738 lbs) (101-500 cycles)
1791 kg (3948 lbs) (501-5000 cycles)

Fore (toward front):

1218 kg (2685 lbs) (0-100 cycles)
1218 kg (2685 lbs) (101-500 cycles)
1579 lbs (501-5000 cycles)

Vertical (Up/Down) Loads Up (toward sky)

134 kg (296 lbs) (0-100 cycles)
206 kg (454 lbs) lbs (101-500 cycles)
278 kg (612 lbs) lbs (501-5000 cycles)

Down (toward Earth)

1459 kg (3217 lbs) lbs (0-100 cycles)
1388 kg (3059 lbs) lbs (101-500 cycles)
1316 kg (2901 lbs) lbs (501-5000 cycles)

Starting at -850 kg (-1875 lbs) lbs (cycling between the loads mentioned above)
Lateral (Side to Side) Loads
Side (+/-) = 358 kg (790 lbs) lbs (Cycle at 1 Hz for 60,000 cycles in conjunction w/ known histogram distribution)

**Claims**

1. A system for sensing forces acting on a towing vehicle comprising:

a towing vehicle weight sensing subsystem (410) comprising a first member (904) connected to a portion or part of the towing vehicle body (412); a second member (902) movable relative to the first member (904) connected to a portion or part of a suspension (472a, 472b, 474$_{RR}$, 474$_{RL}$, 480, 482, 484, 490, 500, 510, 6102, 6104, 6106, 6108, 6202, 6204, 6206, 6208) of the towing vehicle; and at least one vehicle load sensor pin (8, 9) for outputting a signal representing a weight of the towing vehicle, the at least one vehicle load sensor pin (8, 9) being connected between the first and second members (902, 904) thereby forming a mechanical force transmitting connection between the first and the second members (902, 904) and the at least one vehicle load sensor pin (8, 9); and a hitch load sensing subsystem (1) comprising a third member (2, 904) connected to a portion or part of the towing vehicle body (101, 922); a fourth member (5, 902) movable relative to the third member (2, 904) and connected to a receiver tube (920) of a tow hitch (102, 103, 104, 930); and at least one hitch load sensor pin (8, 9) for outputting a signal representing an amount and direction of force on the receiver tube (920) when a force is applied, the at least one hitch load sensor pin (8, 9) being connected between the third and fourth members (2, 5, 902, 904) thereby forming a mechanical force transmitting connection between the third and the fourth members and the at least one hitch load sensor pin (8, 9);

wherein each of the at least one vehicle load sensor pin (8, 9) and the at least one hitch load sensor pin (8, 9) comprise:

an elongated generally cylindrically hollow and elastically deformable shaft having at least one magneto-elastically active region (21, 22, 140a, 140b, 261, 262) directly or indirectly attached to or forming a part of the shaft at an axial location spaced from one end of the shaft (130a, 130b), wherein the at least one active region (21, 22, 140a, 140b, 261, 262) possesses a remanent magnetic polarization; and

a processor receiving signals from at least one magnetic field sensor device (914a, 914b) arranged proximate to the at least one magneto-elastically active region (21, 22, 140a, 140b, 261, 262), wherein the at least one magnetic field sensor device (914a, 914b) includes at least one direction-sensitive magnetic field sensor configured for determination of a shear force in at least one direction, wherein the processor and the at least magnetic field sensor device (914a, 914b) are arranged to have a predetermined and fixed spatial position inside the hollow shaft;

wherein the system is configured to compute a load value, in particular distributed forces acting on a towing vehicle, using a first signal from the at least one vehicle load sensor pin (8, 9) associated with the towing vehicle sensing subsystem (410) containing information about a weight of at least a portion of the towing vehicle (5904, 5912), and a second signal from the at least one hitch load sensor pin (8, 9) associated with the hitch load sensing subsystem (1) containing information about a load applied to at least a portion of the tow hitch (5904, 5912).

2. The system of claim 1, further comprising two magneto-elastically active regions (21, 22, 140a, 140b, 261, 262) directly or indirectly attached to or forming a part of the shaft at longitudinally spaced apart locations from respective ends of the shaft (130a, 130b), wherein each of the two active regions (21, 22, 140a, 140b, 261, 262) possess a remanent magnetic polarization.

3. The system of claim 1, further comprising a storage or memory device containing software for computing an amount and direction of force acting on the hitch (102, 103, 104, 930), wherein the storage or memory device is arranged inside the hollow shaft or in an external module (980), and is connected to the processor.

4. The system of claim 1, wherein the suspension (472a, 472b, 480, 490, 500, 510, 6102, 6202) of the towing vehicle is one of a leaf spring suspension (472a, 472b, a MacPherson strut suspension (480), a double wishbone suspension (490), a multi-link suspension (500), and a trailing-arm suspension (510).

5. The system of claim 4, wherein the first member (904) is connected to the portion or part of the towing vehicle body (412) and the second member (902) is connected to a portion or part of the one of the leaf spring suspension (472a, 472b, $474_{RR}$, $474_{RL}$), the MacPherson strut suspension (480), the double wishbone suspension (490), the multi-link suspension (500), and the trailing-arm suspension (510).

6. The system of claim 1, further comprising a shielding device (190, 910) positioned around all or a portion of the at least one vehicle load sensing pin (8, 9) or the at least one hitch load sensing pin (8, 9) for reducing the strength of an external magnetic field from one or more external magnetic field sources at a detecting region of the at least one direction-sensitive magnetic field sensor (914a, 914b).

7. The system of 1, further comprising at least one secondary magnetic field sensor (916) arranged to have a predetermined and fixed spatial position inside the hollow shaft for outputting a signal, wherein the signal contains information about external magnetic fields that are measured at a detecting region of the at least one direction-sensitive magnetic field sensor (914a, 914b).

8. A computer-implemented method for monitoring the loads on a towing vehicle when a trailer is attached to the towing vehicle, comprising:

providing a towing vehicle weight sensing subsystem (410) comprising a first member (904) connected to a portion or part of the towing vehicle body; a second member (902) movable relative to the first member (904) and connected to a portion or part of a suspension (472a, 472b, $474_{RR}$, $474_{RL}$, 480, 482, 484, 490, 500, 510, 6102, 6104, 6106, 6108, 6202, 6204, 6206, 6208) of the towing vehicle; and at least one vehicle load sensor pin (8, 9) for outputting a signal representing a weight of the towing vehicle, the at least one vehicle load sensor pin (8, 9) being connected between the first and second members (902, 904) thereby forming a mechanical force transmitting connection between the first and the second members 902, 904) and the at least one vehicle load sensor pin (8, 9); providing a hitch load sensing subsystem (1) comprising a third member (2, 904) connected to a portion or part of the towing vehicle body (101, 922); a fourth member (5, 902) movable relative to the third member (101, 922) and connected to a receiver tube (920) of a tow hitch (102, 103, 104, 930); and at least one hitch load sensor pin (8, 9) for outputting a signal representing an amount and direction of force on the receiver tube (920) when a force is applied, the at least one hitch load sensor pin (8, 9) being connected between the third and fourth members (2, 5, 902, 904) thereby forming a mechanical force transmitting connection between the third and the fourth members (2, 5, 902, 904) and the at least one hitch load sensor pin (8, 9); receiving a first signal from the at least one vehicle load sensor pin (8, 9) containing information about a weight of at least a portion of the towing vehicle (5904, 5912); receiving a second signal from the at least one hitch load sensor pin (8, 9) containing information about a load applied to at least a portion of the tow hitch (5904, 5912); computing a load value using the first and second signals (5914); and outputting the value to the vehicle via an electronic connection (5916, 5918).

9. The method of claim 8, wherein each of the at least one vehicle load sensor pin (8, 9) and the at least one hitch load sensor pin (8, 9) comprises:

an elongated generally cylindrically hollow and elastically deformable shaft having at least one magneto-elastically active region (6, 10, 21, 22, 140a, 140b, 261, 262) directly or indirectly attached to or forming a part of the shaft at an axial location spaced from one end of the shaft (130a, 130b), wherein the at least one active region (6, 10, 21, 22, 140a, 140b, 261, 262) possesses a remanent magnetic polarization; and a processor adapted to receiving signals from at least one magnetic field sensor device (914a, 914b) arranged proximate to the at least one magneto-elastically active region, (6, 10, 21, 22, 140a, 140b, 261, 262) wherein the at least one magnetic field sensor device (914a, 914b) includes at least one direction-sensitive magnetic field sensor configured for determination of a shear force in at least one direction, wherein the processor and the at least magnetic field sensor device (914a, 914b) are arranged to have a predetermined and fixed spatial position inside the hollow shaft.

10. The method of claim 8, wherein the step of computing a load value includes computing a total weight value.

11. The method of claim 8, wherein the step of computing a load value includes computing one or more of a longitudinal force, a vertical force, and a transverse force applied to a portion of the tow hitch (102, 103, 104, 930).

12. The method of claim 8, further comprising providing a maximum weight rating for use in comparing to the computed load value.

13. The method of claim 8, further comprising computing an allowable towing capacity of the towing vehicle using the computed load value.

14. The method of claim 13, further comprising coupling the trailer to the towing vehicle and outputting an alert if the allowable towing capacity exceeds a maximum towing capacity.

15. The method of claim 9, wherein each of the at least one vehicle load sensor pin (8, 9) and the at least one hitch load sensor pin (8, 9) comprises two magneto-elastically active regions (21, 22, 140a, 140b, 261, 262) directly or indirectly attached to or forming a part of the shaft at longitudinally spaced apart locations from respective ends of the shaft (130a, 130b), wherein each of the two active regions (21, 22, 140a, 140b, 261, 262) possess a remanent magnetic polarization.


**Patentansprüche**

1. System zum Erfassen von auf ein Zugfahrzeug einwirkenden Kräften, umfassend:

ein Gewichtserfassungssubsystem (410) für das Zugfahrzeug, das ein erstes Element (904) aufweist, das mit einem Abschnitt oder Teil der Karosserie (412) des Zugfahrzeugs verbunden ist; ein zweites Element (902), das relativ zu dem ersten Element (904) beweglich ist und mit einem Abschnitt oder Teil einer Aufhängung (472a, 472b, 474$_{RR}$, 474$_{RL}$, 480, 482, 484, 490, 500, 510, 6102, 6104, 6106, 6108, 6202, 6204, 6206, 6208) des Zugfahrzeugs verbunden ist; und mindestens einen Fahrzeuglastsensorstift (8, 9) zum Ausgeben eines Signals, das ein Gewicht des Zugfahrzeugs wiedergibt und der mindestens eine Fahrzeuglastsensorstift (8, 9) zwischen dem ersten und dem zweiten Element (902, 904) angeschlossen ist und dadurch eine mechanische Kraftübertragungsverbindung zwischen dem ersten und dem zweiten Elementen (902, 904) und dem mindestens einen Fahrzeuglastsensorstift (8, 9) bildet; und

ein Anhängerkupplungs-Lastmess-Subsystem (1) mit einem dritten Element (2, 904), das mit einem Abschnitt oder Teil der Karosserie (101, 922) des Zugfahrzeugs verbunden ist; ein viertes Element (5, 902), das relativ zu dem dritten Element (2, 904) beweglich ist und mit einem Aufnahmerohr (920) einer Anhängerkupplung (102, 103, 104, 930) verbunden ist; und mindestens einem Lastsensorstift (8, 9) zum Ausgeben eines Signals, das eine Größe und Richtung auf das Aufnahmerohr (920) repräsentiert, wenn eine Kraft ausgeübt wird und der mindestens eine Lastsensorbolzen (8, 9) zwischen dem dritten und vierten Element (2, 5, 902, 904) verbunden ist und dadurch eine mechanische Kraftübertragungsverbindung zwischen dem dritten und dem vierten Element und dem mindestens einen Anhängerkupplungs-Lastsensorstift (8, 9) bildet;

wobei jeder der mindestens einen Fahrzeuglastsensorstifte (8, 9) und der mindestens einen Anhängerkupplungs-Lastsensorstift (8, 9) umfasst:

einen länglichen, im Allgemeinen zylindrisch hohlen und elastisch verformbaren Schaft mit mindestens einem magnetoelastisch aktiven Bereich (21, 22, 140a, 140b, 261, 262), der direkt oder indirekt an der Welle an einer axialen Stelle befestigt ist oder einen Teil der Welle bildet, die von einem Ende der Welle (130a, 130b) beabstandet ist, wobei der mindestens eine aktive Bereich (21, 22, 140a, 140b, 261, 262) eine remanente magnetische Polarisation aufweist; und

einen Prozessor, der Signale von mindestens einer Magnetfeldsensorvorrichtung (914a, 914b) empfängt, die in der Nähe des mindestens einen magnetoelastisch aktiven (21, 22, 140a, 140b, 261, 262) angeordnet ist, wobei die mindestens eine Magnetfeldsensorvorrichtung (914a, 914b) mindestens einen richtungsempfindlichen Magnetfeldsensor zur Bestimmung einer Scherkraft in mindestens einer Richtung aufweist, wobei der Prozessor und die mindestens eine Magnetfeldsensorvorrichtung (914a, 914b) so angeordnet sind, dass sie eine vorbestimmte und feste räumliche Position innerhalb der Hohlwelle aufweisen;

wobei das System so konfiguriert ist, dass es einen Lastwert berechnet, insbesondere auf ein Zugfahrzeug einwirkende verteilte Kräfte zu berechnen, unter Verwendung eines ersten Signals von dem mindestens einen Fahrzeuglastsensorstift (8, 9), der dem Zugfahrzeug-Erfassungssubsystem (410) zugeordnet ist und Informationen über ein Gewicht von mindestens einem Teil des Zugfahrzeugs (5904, 5912) und einem zweiten Signal von dem mindestens einen Anhängerkupplungslastsensorstift (8, 9), der dem Anhängerkupplungslast-Erfassungssubsystem (1) zugeordnet ist und Informationen über eine Last enthält, die auf mindestens einen Teil der Anhängerkupplung (5904, 5912) wirkt.

2.  Das System nach Anspruch 1, das ferner zwei magnetoelastisch aktive Regionen (21, 22, 140a, 140b, 261, 262) aufweist, die direkt oder indirekt an einem Teil der Welle befestigt sind oder diesen bilden und an in Längsrichtung voneinander beabstandeten Stellen von den jeweiligen Enden der Welle (130a, 130b) befestigt sind, wobei jede der beiden aktiven Regionen (21, 22, 140a, 140b, 261, 262) eine remanente magnetische Polarisation aufweist.

3.  Das System nach Anspruch 1, ferner umfassend eine Langfristspeicher- oder Arbeitsspeichervorrichtung mit einer Software zum Berechnen der Größe und Richtung der auf die Kupplung (102, 103, 104, 930) wirkenden Kraft, wobei die Langfristspeicher- oder Arbeitsspeichervorrichtung innerhalb der Hohlwelle oder in einem externen Modul (980) angeordnet und mit dem Prozessor verbunden ist.

4.  Das System nach Anspruch 1, wobei die Aufhängung (472a, 472b, 480, 490, 500 510, 6102, 6202) des Zugfahrzeugs eine Blattfederaufhängung (472a, 472b), eine MacPherson-Federbeinaufhängung (480), eine Doppelquerlenkeraufhängung (490) eine Mehrlenkeraufhängung (500) und eine Längslenkeraufhängung (510) ist.

5.  Das System nach Anspruch 4, wobei das erste Element (904) mit dem Teil oder Abschnitt der Karosserie (412) des Zugfahrzeugs verbunden ist und das zweite Element (902) mit einem Abschnitt oder Teil der Blattfederaufhängung (472a, 472b, 474RR, 474RL), der MacPherson-Federbeinaufhängung (480), der Doppelquerlenkeraufhängung (490), der Mehrlenkeraufhängung (500) und der Längslenkeraufhängung (510) verbunden ist.

6.  Das System nach Anspruch 1, das ferner eine Abschirmvorrichtung (190, 910) umfasst, die um den gesamten oder einen Teil des mindestens einen Fahrzeuglast-Sensorstifts (8, 9) oder den mindestens einen Anhängerkupplungs-Lastmessstift (8, 9) angeordnet ist, um die Stärke eines externen Magnetfelds von einer oder mehreren externen Magnetfeldquellen in einem Erfassungsbereich des mindestens einen richtungsempfindlichen Magnetfeldsensors (914a, 914b) zu verringern.

7. Das System nach Anspruch 1, das ferner mindestens einen sekundären Magnetfeldsensor (916) umfasst, der so angeordnet ist, dass er eine vorbestimmte und feste räumliche Position innerhalb der Hohlwelle aufweist, um ein Signal auszugeben, wobei das Signal Informationen über externe Magnetfelder enthält, die an einem Erfassungsbereich des mindestens einen richtungsempfindlichen Magnetfeldsensor (914a, 914b) gemessen werden.

8. Ein computerimplementiertes Verfahren zur Überwachung der Lasten an einem Zugfahrzeug, wenn ein Anhänger an das Zugfahrzeug angehängt ist, umfassend:

    Bereitstellen eines Gewichtssensorsubsystems (410) für das Zugfahrzeug, das ein ein erstes Element (904), das mit einem Abschnitt oder Teil der Karosserie des Zugfahrzeugs verbunden ist; ein zweites Element (902), das relativ zum ersten Element (904) beweglich ist und mit einem Abschnitt oder Teil einer Aufhängung (472a, 472b, $474_{RR}$, $474_{RL}$, 480, 482, 484, 490, 500, 510, 6102, 6104, 6106, 6108, 6202, 6204, 6206, 6208) des Zugfahrzeugs verbunden ist; und mindestens einen Fahrzeuglastsensorstift (8, 9) zum Ausgeben eines Signals, das ein Gewicht des Zugfahrzeugs darstellt, wobei der mindestens eine Fahrzeuglastsensorstift (8, 9) zwischen dem ersten und dem zweiten Element (902, 904) angeschlossen ist und dadurch eine mechanische Kraftübertragungsverbindung zwischen dem ersten und den zweiten Elementen 902, 904 und dem mindestens einen Fahrzeuglastsensorstift (8, 9);
    Bereitstellen eines Anhängerkupplungs-Lastmess-Subsystems (1), das ein drittes Element (2, 904) umfasst, das mit einem Abschnitt oder Teil der Karosserie (101, 922) des Zugfahrzeugs verbunden ist; ein viertes Element (5, 902), das relativ zum dritten Element (101, 922) beweglich und mit einem Aufnahmerohr (920) einer Anhängerkupplung (102, 103, 104, 930) verbunden ist; und mindestens einen zur Ausgabe eines Signals, das die Größe und Richtung auf das Aufnahmerohr (920) repräsentiert, wenn eine Kraft ausgeübt wird, wobei der mindestens eine Lastsensorstift (8, 9) zwischen dem dritten und vierten Element (2,5, 902, 904) verbunden ist und dadurch eine mechanische Kraftübertragungsverbindung zwischen dritten und vierten Elementen (2, 5, 902, 904) und dem mindestens einen Anhängerkupplungs-Lastsensorstifts (8, 9) bildet;
    Empfangen eines ersten Signals von dem mindestens einen Fahrzeuglastsensorstift (8, 9), das Informationen über das Gewicht mindestens eines Teils des Zugfahrzeugs (5904, 5912) enthält;
    Empfangen eines zweiten Signals von dem mindestens einen Anhängerkupplungs-Lastsensorstift (8, 9), das Informationen über eine Last enthält, die auf mindestens einen Teil der Anhängerkupplung (5904, 5912) wirkt;
    Berechnen eines Lastwerts unter Verwendung des ersten und des zweiten Signals (5914);
    und
    Ausgeben des Wertes an das Fahrzeug über eine elektronische Verbindung (5916, 5918).

9. Verfahren nach Anspruch 8, wobei jeder der mindestens einen Fahrzeuglastsensorstifte (8, 9) und der mindestens eine Anhängerkupplungs-Lastsensorstift (8, 9) umfasst:

    einen länglichen, im Allgemeinen zylindrisch hohlen und elastisch verformbaren Schaft mit mindestens einem magnetoelastisch aktiven Bereich (6, 10, 21, 22, 140a, 140b, 261, 262), der direkt oder indirekt an der Welle befestigt ist oder einen Teil der Welle bildet an einer axialen Stelle, die von einem Ende der Welle (130a, 130b) beabstandet ist, wobei der mindestens eine aktive Bereich (6, 10, 21, 22, 140a, 140b, 261, 262) eine remanente magnetische Polarisation aufweist; und
    einen Prozessor, der dazu ausgelegt ist, Signale von mindestens einer Magnetfeldsensorvorrichtung (914a, 914b) zu empfangen, die in der Nähe des mindestens einen magnetisch elastisch aktiven Bereich (6, 10, 21, 22, 140a, 140b, 261, 262) angeordnet ist, wobei die mindestens eine Magnetfeldsensorvorrichtung (914a, 914b) mindestens einen richtungsempfindlichen empfindlichen Magnetfeldsensor umfasst, der zur Bestimmung einer Scherkraft in mindestens einer Richtung, wobei der Prozessor und die mindestens eine Magnetfeldsensorvorrichtung (914a, 914b) so angeordnet sind, dass sie eine vorbestimmte und feste räumliche Position innerhalb der Hohlwelle haben.

10. Verfahren nach Anspruch 8, wobei der Schritt des Berechnens eines Lastwerts das das Berechnen eines Gesamtgewichtswerts umfasst.

11. Verfahren nach Anspruch 8, wobei der Schritt des Berechnens eines Lastwerts das Berechnen einer oder mehrerer der folgenden Kräfte beinhaltet: einer Längskraft, einer Vertikalkraft und einer Querkraft auf einen Teil der Anhängerkupplung (102, 103, 104, 930) ausgeübten Querkraft.

12. Das Verfahren nach Anspruch 8, das ferner das Bereitstellen einer maximalen Gewichtsbewertung zur Verwendung beim Vergleich mit dem berechneten Lastwert umfasst.

13. Das Verfahren nach Anspruch 8, das ferner das Berechnen einer zulässigen Anhängelast des Zugfahrzeugs unter Verwendung des berechneten Lastwerts umfasst.

14. Das Verfahren nach Anspruch 13, das ferner das Ankuppeln des Anhängers an das Zugfahrzeug und die Ausgabe einer Warnung, wenn die zulässige Anhängelast eine maximale Anhängelast überschreitet, umfasst.

15. Das Verfahren nach Anspruch 9, wobei jeder der mindestens einen Fahrzeuglast-Sensorstifte (8, 9) und der mindestens einen Anhängelast-Sensorstifte (8, 9) zwei magneto-elastisch aktive Bereiche (21, 22, 140a, 140b, 261, 262) umfasst, die direkt oder indirekt an der Welle angebracht sind oder einen Teil der Welle bilden an längsseitig voneinander beabstandeten Positionen von den jeweiligen Enden der Welle (130a, 130b), wobei jeder der beiden aktiven Bereiche (21, 22, 140a, 140b, 261, 262) eine remanente magnetische Polarisation aufweist.


**Revendications**

1. Système de détection des forces agissant sur un véhicule tracteur comprenant :

un sous-système de détection du poids du véhicule tracteur (410) comprenant un premier élément (904) relié à une section ou à une partie de la carrosserie du véhicule tracteur (412) ; un deuxième élément (902) mobile par rapport au premier élément (904) relié à une partie ou à une partie d'une suspension (472a, 472b, 474$_{RR}$, 474$_{RL}$, 480, 482, 484, 490, 500, 510, 6102, 6104, 6106, 6108, 6202, 6204, 6206, 6208) du véhicule tracteur ; et au moins une broche de capteur de charge de véhicule (8, 9) pour émettre un signal représentant le poids du véhicule tracteur, l'au moins une broche de capteur de charge de véhicule (8, 9) étant connectée entre le premier et le deuxième élément (902, 904), en formant ainsi une connexion de transmission de force mécanique entre le premier et le deuxième élément (902, 904) et l'au moins une broche de capteur de charge de véhicule (8, 9) ; et un sous-système de détection de charge d'attelage (1) comprenant un troisième élément (2, 904) relié à une section ou une partie de la carrosserie du véhicule tracteur (101, 922) ; un quatrième élément (5, 902) mobile par rapport au troisième élément (2, 904) et relié à un tube récepteur (920) d'un attelage de remorquage (102, 103, 104, 930) ; et au moins une broche de capteur de charge d'attelage (8, 9) pour émettre un signal représentant une quantité et une direction de force sur le tube récepteur (920) lorsqu'une force est appliquée, l'au moins une broche de capteur de charge d'attelage (8, 9) étant connectée entre le troisième et le quatrième élément (2, 5, 902, 904), en formant ainsi une connexion de transmission de force mécanique entre le troisième et le quatrième élément et l'au moins une broche de capteur de charge d'attelage (8, 9) ; chacune de l'au moins une broche de capteur de charge
de véhicule (8, 9) et de l'au moins une broche de capteur de charge d'attelage (8, 9) comprenant :

un arbre allongé, globalement cylindrique, creux et élastiquement déformable, comportant au moins une zone active magnéto-élastiquement (21, 22, 140a, 140b, 261, 262) directement ou indirectement attachée à l'arbre ou faisant partie de l'arbre à un emplacement axial espacé d'une extrémité de l'arbre (130a, 130b), l'au moins une zone active (21, 22, 140a, 140b, 261, 262) possédant une polarisation magnétique rémanente ; et un processeur recevant des signaux d'au moins un dispositif de détection de champ magnétique (914a, 914b) disposé à proximité de l'au moins une zone active magnéto-élastiquement (21, 22, 140a, 140b, 261, 262), l'au moins un dispositif de détection de champ magnétique (914a, 914b) comprenant au moins un capteur de champ magnétique sensible à la direction configuré pour la détermination d'une force de cisaillement dans au moins une direction, le processeur et l'au moins un dispositif de détection de champ magnétique (914a, 914b) étant disposés de manière à avoir une position spatiale prédéterminée et fixe à l'intérieur de l'arbre creux ;
le système étant configuré pour calculer une valeur de charge, en particulier les forces réparties agissant sur un véhicule tracteur, en utilisant un premier signal provenant de l'au moins une broche de capteur de charge de véhicule (8, 9) associée au sous-système de détection de véhicule tracteur (410) contenant des informations sur le poids d'au moins une partie du véhicule tracteur (5904, 5912), et un second signal provenant de l'au moins une broche de capteur de charge d'attelage (8, 9) associée au sous-système de détection de charge d'attelage (1) contenant des informations sur une charge appliquée à au moins une partie de l'attelage de remorquage (5904, 5912).

2. Système selon la revendication 1, comprenant en outre deux zones actives magnéto-élastiquement (21, 22, 140a, 140b, 261, 262) directement ou indirectement attachées ou faisant partie de l'arbre à des emplacements longitudinalement espacés des extrémités respectives de l'arbre (130a, 130b), chacune des deux zones actives (21, 22, 140a, 140b, 261, 262) possédant une polarisation magnétique rémanente.

3. Système selon la revendication 1, comprenant en outre un dispositif de stockage ou de mémoire contenant un logiciel pour calculer une quantité et une direction de force agissant sur l'attelage (102, 103, 104, 930), le dispositif de stockage ou de mémoire étant disposé à l'intérieur de l'arbre creux ou dans un module externe (980), et étant connecté au processeur.

4. Système selon la revendication 1, dans lequel la suspension (472a, 472b, 480, 490, 500, 510, 6102, 6202) du véhicule tracteur est l'une des suspensions suivantes : une suspension à ressorts à lames (472a 472b), une suspension à jambes de force MacPherson (480),
une suspension à double triangulation (490), une suspension multibras (500), et une suspension à bras oscillant (510).

5. Système selon la revendication 4, dans lequel le premier élément (904) est relié à la section ou partie de la carrosserie du véhicule tracteur (412) et le deuxième élément (902) est relié à une section ou partie de la suspension à lames (472a, 472b,
474RR, 474RL), de la suspension à jambes de force MacPherson (480), de la suspension à double triangulation (490), de la suspension multibras (500) et de la suspension à bras oscillant (510).

6. Système selon la revendication 1, comprenant en outre un dispositif de blindage (190, 910) positionné autour de tout ou partie de l'au moins une broche de détection de charge de véhicule (8, 9) ou de l'au moins une broche de détection de charge d'attelage (8, 9) pour réduire l'intensité d'un champ magnétique externe provenant d'une ou plusieurs sources de champ magnétique externe au niveau d'une zone de détection de l'au moins un capteur de champ magnétique sensible à la direction (914a, 914b).

7. Système selon la revendication 1, comprenant en outre au moins un capteur de champ magnétique secondaire (916) disposé de manière à avoir une position spatiale prédéterminée et fixe à l'intérieur de l'arbre creux pour émettre un signal, le signal contenant des informations sur les champs magnétiques externes qui sont mesurés dans une zone de détection de l'au moins un capteur de champ magnétique sensible à la direction (914a, 914b).

8. Procédé mis en oeuvre par ordinateur pour surveiller les charges sur un véhicule tracteur lorsqu'une remorque est attachée au véhicule tracteur, comprenant :

un sous-système de détection du poids du véhicule tracteur (410) comprenant un premier élément (904) relié à une section ou à une partie de la carrosserie du véhicule tracteur ; un deuxième élément (902) mobile par rapport au premier élément (904) et relié à une section ou à une partie d'une suspension (472a, 472b, 474$_{RR}$, 474$_{RL}$, 480, 482, 484, 490, 500, 510, 6102, 6104, 6106, 6108, 6202, 6204, 6206, 6208) du véhicule tracteur ;
et au moins une broche de capteur de charge de véhicule (8, 9) pour émettre un signal représentant le poids du véhicule tracteur, l'au moins une broche de capteur de charge de véhicule (8, 9) étant reliée entre le premier et le deuxième élément (902, 904), en formant ainsi une connexion de transmission de force mécanique entre le premier et le deuxième élément (902, 904) et l'au moins une broche de capteur de charge de véhicule (8, 9) ;
la prévision d'un sous-système de détection de charge d'attelage (1) comprenant un troisième élément (2, 904) relié à une partie ou à une partie de la carrosserie du véhicule tracteur (101, 922) ; un quatrième élément (5, 902) mobile par rapport au troisième élément (101, 922) et relié à un tube récepteur (920) d'un dispositif d'attelage (102, 103, 104, 930) ; et au moins une broche de capteur de charge d'attelage (8, 9) pour émettre un signal représentant une quantité et une direction de force sur le tube récepteur (920) lorsqu'une force est appliquée, l'au moins une broche de capteur de charge d'attelage (8, 9) étant connectée entre le troisième et le quatrième élément (2, 5, 902, 904) en formant ainsi une connexion de transmission de force mécanique entre le troisième et le quatrième élément (2, 5, 902, 904) et l'au moins une broche de capteur de charge d'attelage (8, 9) ;
la réception d'un premier signal de l'au moins une broche de capteur de charge de véhicule (8, 9) contenant des informations sur le poids d'au moins une partie du véhicule tracteur (5904, 5912) ;
la réception d'un second signal de l'au moins une broche de capteur de charge d'attelage (8, 9) contenant des informations sur une charge appliquée à au moins une partie de l'attelage (5904, 5912) ;

le calcul d'une valeur de charge à l'aide des premier et second signaux (5914) ; et

la transmission de la valeur au véhicule par l'intermédiaire d'une connexion électronique (5916, 5918).

9.  Procédé selon la revendication 8, dans lequel chacune de l'au moins une broche de capteur de charge de véhicule (8, 9) et de l'au moins une broche de capteur de charge d'attelage (8, 9) comprend :

un arbre allongé, globalement cylindrique, creux et élastiquement déformable, comportant au moins une zone active magnéto-élastiquement (6, 10, 21, 22, 140a, 140b, 261, 262) directement ou indirectement attachée à l'arbre ou faisant partie de l'arbre à un emplacement axial espacé d'une extrémité de l'arbre (130a, 130b), l'au moins une zone active (6, 10, 21, 22, 140a, 140b, 261, 262) possédant une polarisation magnétique rémanente ; et

un processeur adapté à la réception de signaux provenant d'au moins un dispositif de détection de champ magnétique (914a, 914b) placé à proximité de l'au moins une zone active magnéto-élastiquement (6, 10, 21, 22, 140a, 140b, 261, 262), l'au moins un dispositif de détection de champ magnétique (914a, 914b) comprenant au moins un capteur de champ magnétique sensible à la direction configuré pour déterminer une force de cisaillement dans au moins une direction, le processeur et l'au moins dispositif de capteur de champ magnétique (914a, 914b) étant agencés pour avoir une position spatiale prédéterminée et fixe à l'intérieur de l'arbre creux.

10. Procédé selon la revendication 8, dans laquelle l'étape de calcul d'une valeur de charge comprend le calcul d'une valeur de poids total.

11. Procédé selon la revendication 8, dans laquelle l'étape de calcul d'une valeur de charge comprend le calcul d'une ou plusieurs forces parmi une force longitudinale, une force verticale et une force transversale appliquées à une partie de l'attelage (102, 103, 104, 930).

12. Procédé selon la revendication 8, comprenant en outre la prévision d'un poids maximal à utiliser pour comparer la valeur de charge calculée.

13. Procédé selon la revendication 8, comprenant en outre le calcul d'une capacité de remorquage admissible du véhicule tracteur à l'aide de la valeur de charge calculée.

14. Procédé selon la revendication 13, comprenant en outre le couplage de la remorque au véhicule tracteur et l'émission d'une alerte si la capacité de remorquage autorisée dépasse la capacité de remorquage maximale.

15. Procédé selon la revendication 9, dans lequel chacune de l'au moins une broche de capteur de charge de véhicule (8, 9) et de l'au moins une broche de capteur de charge d'attelage (8, 9) comprend deux zones actives magnéto-élastiquement (21, 22, 140a, 140b, 261, 262) directement ou indirectement attachées à l'arbre ou en faisant partie, à des emplacements longitudinalement espacés des extrémités respectives de l'arbre (130a, 130b), chacune des deux zones actives (21, 22, 140a, 140b, 261, 262) possédant une polarisation magnétique rémanente.

FIG. 1

FIG. 2

FIG. 3

FIG. 4

FIG. 5

FIG. 6

FIG. 7

FIG. 8

FIG. 9

FIG. 10A

FIG. 10C

FIG. 10B

FIG. 10D

HIGH PERMEABILITY SHIELDING

FIG. 11A

FIG. 11B

FIG. 12A

8,9

916

To vehicle
electronics

980

982

304,604

916

914a

914b

FIG. 12B

FIG. 13

FIG. 14

FIG. 15

FIG. 16

904-4

904-2

920

930

FIG. 17A

924-2

902

904-4

904-2

FIG. 17B

FIG. 18A

FIG. 18B

FIG. 19A

FIG. 19B

FIG. 19C

EP 3 812 181 B1

FIG. 20

FIG. 21

FIG. 22

FIG. 23

FIG. 25

FIG. 24

230

220a

220b

FIG. 26

270

START

272
MAGNETIZE FIRST PIN 8 AND SECOND PINS 9 TO DESIRED CHARACTERISTICS

274
CRYOGENICALLY TREAT PINS FOLLOWING PROCEDURE FOR SPECIFIC PIN SIZE AND MATERIAL

276
OPTIONALLY ATTACH COLLARS; AND INSERT AND MOUNT MAGNETIC FIELD SENSORS

278
MOUNT SUPER-COOLED FIRST PIN IN FIRST/THIRD THROUGH HOLES; MOUNT SUPER-COOLED SECOND PIN IN SECOND/FORTH THROUGH HOLES

END

FIG. 27

FIG. 28A

100

101

1

2

102

104

103

14    5    11    12    12

z
y        x

FIG. 28B

FIG. 29

FIG. 30

FIG. 31A

FIG. 31B

FIG. 32A

FIG. 32B

FIG. 33

$$F_z \cdot d_1 = F_{z1} \cdot d_2$$
$$F_z \cdot d_3 = F_{z2} \cdot d_2$$
$$F_z = F_{z1} + F_{z2}$$
$$d_1 = F_{z1} \cdot d_2 \div (F_{z1} + F_{z2})$$
$$d_3 = F_{z2} \cdot d_2 \div (F_{z1} + F_{z2})$$

FIG. 34

$$F_y \cdot d_3 = F_{x1} \cdot d_2$$
$$F_y \cdot d_3 = F_{x2} \cdot d_2$$
$$F_{x1} = -F_{x2}$$

FIG. 35

## FIG. 36

$$F_X = F_1 + F_2$$

## FIG. 37

DRAWBAR BARRIER

$L_{z12}$   $L_{z11}$

$F_z$

$L_{z22}$   $L_{z21}$

SENSING PIN    NACKED PIN

PIN1
Fz [Fz CHANNEL LEFT + Fz CHANNEL RIGHT INTERNAL]
PIN2
NONE

## FIG. 38

DRAWBAR BARRIER

$F_z$

$L_{x21}$

$L_{x11}$   $L_{z21}$   $L_{z12}$   $L_{z11}$

$L_{z12}$

$F_x$

$L_{z22}$   $L_{z11}$

$L_{x12}$   $L_{x22}$   $L_{z22}$   $L_{z21}$

9

8

PIN1
Fx [Fx CHANNEL LEFT + Fx CHANNEL RIGHT INTERNAL]
Fz [Fz CHANNEL LEFT + Fz CHANNEL RIGHT INTERNAL]
PIN2
Fz [Fz CHANNEL LEFT + Fz CHANNEL RIGHT INTERNAL]

$F_z$

$F_x$

PIN1
Fx [Fx CHANNEL LEFT + Fx CHANNEL RIGHT INTERNAL]
Fz [Fz CHANNEL LEFT + Fz CHANNEL RIGHT INTERNAL]
PIN2
Fx [Fx CHANNEL LEFT + Fx CHANNEL RIGHT INTERNAL]
Fz [Fz CHANNEL LEFT + Fz CHANNEL RIGHT INTERNAL]

CONNECTION [i.e. WELD]

NEW COMPONENT

HITCH TO VEHICLE

NEW COMPONENT

RECEIVER

GAP    GAP

Lx11    Lx21

Lz11,Lz12    Lz21

Lx12    Lz22

RIGIDLY FIXED

21    22

HARNESS

IDEALLY A GAP WITH LOW μ MATERIAL

Fx10
SURFACE CONTACT BETWEEN
LOAD SENSOR PIN AND INNER
SURFACE OF THROUGH-HOLE

DRAWBAR BARRIER

Fz

Lx11    Lx21
Lz12    Lz11
Fz    8    Fz
Lz22    Lz21
Lx12    Lx22

Fz
9    Fx

FIG. 39

Fx20
SURFACE CONTACT BETWEEN
LOAD SENSOR PIN AND INNER
SURFACE OF THROUGH-HOLE

NEW COMPONENT

CONNECTION [i.e. WELD]

NEW COMPONENT

HITCH TO VEHICLE

HARNESS

RECEIVER

GAP   GAP

RIGIDLY
FIXED

DRAWBAR
BARRIER

$F_z$ — 8 — — 9 —

IDEALLY A GAP WITH LOW U MATERIAL

## FIG. 40

NEW COMPONENT

CONNECTION [i.e. WELD]

NEW COMPONENT

HITCH TO VEHICLE

HARNESS

RECEIVER

GAP   GAP

RIGIDLY
FIXED

$F_z$

DRAWBAR
BARRIER

— 8 — — 9 —

$F_x$

IDEALLY A GAP WITH LOW U MATERIAL

## FIG. 41

FIG. 42A

FIG. 42B

FIG. 42C

FIG. 42D

FIG. 42E

FIG. 42F

FIG. 42G

FIG. 42H

FIG. 42I

FIG. 42J

FIG. 42K

FIG. 42L

FIG. 42M

FIG. 42N

FIG. 42O

FIG. 42P

FIG. 42Q

FIG. 42R

FIG. 42S

FIG. 42T

100

10

L

L

8,9

FIG. 42U

100

10

L

L

8,9

F

**FIG. 43**

**FIG. 44**

FIG. 45

FIG. 46A

FIG. 46B

FIG. 47

FIG. 48A

FIG. 48B

FIG. 49A

FIG. 49B

FIG. 49C

FIG. 49D

FIG. 49E

FIG. 50

FIG. 51

FIG. 52

FIG. 53

FIG. 54

410

920

103

930

904

922

902

9

8

**FIG. 55A**

922

920

103

904

930

902

9

8

**FIG. 55B**

**FIG. 55C**

**FIG. 55D**

550a

922

920

A-A

103

930

902

904

9    8

FIG. 55E

FIG. 56A

904

902

8

930

920

922

9

**FIG. 56B**

**FIG. 56C**

**FIG. 57**

**FIG. 58**

**FIG. 59**

**FIG. 60A**

EP 3 812 181 B1

FIG. 60B

86

FIG. 61

FIG. 62

**FIG. 63**

**FIG. 64**

FIG. 65

FIG. 66

FIG. 68A

FIG. 68B

FIG. 67A

FIG. 67B

FIG. 69

FIG. 70

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62888819
- US 58209319
- US 20140360282 A1
- EP 3379222 A1
- US 20060220285 A1
- US 9347845 B
- EP 17162429

- US 6490934 B
- US 6553847 B
- US 6904814 B
- US 7140258 B
- US 8087304 B
- US 8578794 B
- US 8893562 B